# FASCICULE DE BREVET EUROPEEN

(11) **EP 1 945 686 B1**
(45) Date de publication et mention de la délivrance du brevet: **29.08.2012**
(21) Numéro de dépôt: 06809148.7
(22) Date de dépôt: 23.10.2006
(51) Int. Cl.: C08F 290/14, C08L 51/00, C08F 265/04, C08F 291/00, C08K 5/00

(54) **PROCEDE DE FABRICATION D UNE RESINE THERMOPLASTIQUE AVEC UNE RESISTANCE A L IMPACT**
VERFAHREN ZUR HERSTELLUNG EINES SCHLAGZÄHEN THERMOPLASTISCHEN HARZES
METHOD OF PRODUCING AN IMPACT-RESISTANT THERMOPLASTIC RESIN

(30) Priorité: 04.11.2005 FR 0511274
(43) Date de publication de la demande: 23.07.2008
(73) Titulaire: COATEX S.A.S., 69730 Genay (FR); OMYA DEVELOPMENT AG, 4665 Oftringen (CH)
(72) Inventeur: MONGOIN, Jacques, F-69650 Quincieux (FR); BURI, Matthias, CH-4852 Rothrist (CH); GANE, Patrick, CH-4852 Rothrist (CH); GUERRET, Olivier, F-69890 La Tour De Salvagny (FR); ROUSSET, Jacky, F-01990 Baneins (FR); SAUNDERS, Georges, Brandon, VT 05733 (US)
(74) Mandataire: Richebourg, Michel François
(86) Numéro de dépôt international: PCT/IB2006/003054
(87) Numéro de publication internationale: WO 2007/052122

(56) Documents cités:
- EP-A- 0 691 336
- WO-A-01/07494
- WO-A-03/072834
- WO-A-2004/044022
- FR-A- 2 868 072
- GB-A- 2 051 096
- US-A- 5 225 491
- US-A- 5 491 209
- US-A- 6 093 764

## Description

La présente invention se rapporte au secteur des matériaux thermoplastiques renforcés au choc tout en conservant une rigidité satisfaisante.

L'invention concerne tout d'abord un procédé de fabrication d'une résine thermoplastique chargée par une matière minérale ou carbonée, et contenant éventuellement un modificateur d'impact de nature organique, par introduction dans ladite résine d'un polymère peigne disposant d'au moins un monomère à insaturation éthylénique sur lequel est greffée au moins une fonction oxyde de polyalkylène.

L'invention concerne aussi les matériaux thermoplastiques ainsi obtenus; qui présentent une résistance à l'impact améliorée et une rigidité conservée, par rapport aux mêmes compositions ne contenant pas lesdits polymères peigne.

Dans l'ensemble de la présente Demande, l'expression "polymère peigne" désigne un polymère constitué d'un squelette essentiellement linéaire, sur lequel sont greffés au moins 2 segments latéraux constitués d'au moins un "macromonomère". Le terme "macromonomère" désigne un polymère ou un copolymère non soluble dans l'eau, et possédant au moins un groupe terminal disposant d'une fonction éthylénique insaturée.

Les matériaux thermoplastiques interviennent dans de nombreux objets manufacturés car leurs modes de transformation par injection, pressage, moulage ou calandrage permettent facilement de les mettre en oeuvre. Ces matériaux sont caractérisés par leur rigidité -critère pour leur usage- et aussi par leur température de fusion ou de transition vitreuse -critère pour leur transformation- telles que bien connues par l'homme du métier, formulateur de matériaux plastiques, notamment de matériaux thermoplastiques chargés.

Les matériaux plastiques sont souvent fragiles et doivent être renforcés pour résister à des contraintes telles que des impacts ou des élongations. Une méthode bien connue de l'homme du métier en vue d'améliorer ces propriétés consiste à ajouter dans lesdits matériaux plastiques des additifs de renforcement, dénommés dans la présente Demande à travers les expressions "modificateurs d'impact" ou "modificateurs au choc" ou "additifs choc" ou encore "modificateurs choc". Ces additifs sont de deux natures : organique ou inorganique.

Les modificateurs choc de nature organique présentent généralement des comportements du type élastomères. Parmi ces additifs, on peut citer notamment les copolymères du type styrène-butadiène (tels que décrits dans les documents WO 2005 / 063 877 ou WO 2004 / 035 678) et les particules du type coeur-écorce, contenant notamment des composés (méth)acrylates aussi bien dans le coeur que dans l'écorce (telles que décrits notamment dans les documents US 5 773 520 ou WO 2003 / 062 292).
L'ajout de tels additifs conduit généralement à un abaissement du module du matériau, ce qui nuit par la suite à son utilisation. L'homme du métier a alors pour réflexe d'ajouter au matériau thermoplastique des charges minérales ou carbonées telles que du noir de carbone, de la silice, du carbonate de calcium, du kaolin ou encore du talc, lesdites charges étant destinées à compenser la perte de rigidité induite par l'additif renforçateur au choc. Toutefois, de telles charges limitent la tenue mécanique du matériau thermoplastique, et l'homme du métier doit alors rechercher un compromis entre la rigidité de la formulation; et la tenue mécanique de celle-ci.

Il est également connu d'utiliser des additifs modificateurs de choc de nature inorganique, qui se présentent sous forme de charges minérales ou carbonées. A ce titre, lesdites charges, outre leur aptitude à renforcer la résine thermoplastique en terme de rigidité tel que décrit plus haut, possèdent aussi une capacité à améliorer la résistance au choc de ladite résine : c'est notamment ce qu'enseigne le document FR 1 205 258, qui décrit des compositions thermoplastiques à base de polychlorure de vinyle, dont la résistance aux chocs est améliorée par l'ajout de carbonate de calcium, de dioxyde de titane, ou de noir de carbone. De même, il est connu, tel qu'indiqué dans le document "Mineral additives for the plastic industry" (Applied Technology Service, Plastics, OMYA™ International AG, Oftringen, Suisse), que le carbonate de calcium, le talc, le kaolin, le mica et la wollastonite ont une influence sur les propriétés de résistance à l'impact de résines PVC chargées ; il est même précisé que cette résistance est avant tout gouvernée par la forme des particules minérales et par leur compatibilité vis-à-vis de la matrice polymérique, sans pour autant préciser dans quel sens ces facteurs affectent la résistance à l'impact. A titre d'exemple, la Demanderesse peut citer les carbonates de calcium précipités commercialisés par la société SOLVAY™ sous le nom de Socal™ 312, et qui permettent d'améliorer la résistance à l'impact de résines PVC tout en conservant leur rigidité et ce, en s'affranchissant complètement de modificateurs d'impact de nature organique. Toutefois, la limite à accroître la part de carbonate de calcium dans le PVC réside dans les problèmes de soudure rencontrés alors et bien connus de l'homme du métier.

Dans le cas d'un matériau thermoplastique constitué d'une résine, d'une charge minérale, et en l'absence d'un modificateur d'impact de nature organique tel qu'indiqué ci-dessus, la Demanderesse a mis au point un procédé qui met en oeuvre des polymères peigne particuliers décrits dans la suite de la Demande et qui permettent, de manière tout à fait surprenante, d'améliorer la résistance à l'impact des résines thermoplastiques ainsi fabriquées, sans pour autant altérer leur rigidité. En ce sens, les polymères peigne mis en oeuvre dans ce procédé permettent à l'homme du métier d'exacerber le pouvoir de résistance à l'impact de la résine chargée et ce, sans diminuer la rigidité de celle-ci : de la sorte, c'est la combinaison entre la charge minérale ou carbonée et desdits polymères peigne qui joue le rôle de modificateur d'impact, un tel modificateur d'impact étant bien plus performant que la charge minérale ou carbonée utilisée seule. Cette nouvelle possibilité constitue un très net avantage technique dans le domaine de la fabrication de matériaux thermoplastiques.
Dans le cas d'un matériau thermoplastique constitué d'une résine, d'une charge minérale, et en présence d'un modificateur d'impact de nature organique, ce qui constitue l'autre pan actuel de l'état de la technique, le procédé mis au point par la Demanderesse permet, grâce aux polymères peigne particuliers qu'il met en oeuvre, d'augmenter la résistance à l'impact des résines thermoplastiques sans diminuer pour autant leur rigidité. En ce sens, le procédé selon l'invention développe une synergie positive entre les charges minérales ou carbonées et les additifs modificateurs d'impact organiques : les limites du compromis rigidité / tenue à l'impact s'en trouvent repoussées. De la sorte, et s'il cherche à diminuer la quantité de modificateurs d'impact organique, l'homme du métier pourra, à partir de la présente invention, maintenir les mêmes performances de résistance à l'impact et conserver la rigidité de la résine. Selon une autre variante, et s'il désire travailler à taux constant de modificateurs choc de nature organique, l'homme du métier pourra, à partir de la présente invention, améliorer sensiblement la résistance à l'impact de la résine tout en maintenant sa rigidité.

En conclusion, le procédé selon l'invention constitue une solution "universelle" au compromis résistance à l'impact / rigidité des résines thermoplastiques, puisqu'il confère à l'homme du métier des avantages :
- tant dans le cas de l'emploi d'un modificateur choc organique, où il permet de réaliser une synergie positive entre ledit modificateur et la charge minérale ou carbonée : possibilité de diminuer la quantité de modificateur choc et d'obtenir les mêmes performances de résistance à l'impact et de rigidité, ou maintien de cette quantité mais augmentation de la résistance à l'impact et conservation de la rigidité ;
- que sans modificateur de choc organique : les performances de résistance à l'impact initialement apportées par la charge minérale ou carbonée sont "dopées" par la présente invention, sans pour autant dégrader la rigidité de la résine.

Cette invention repose sur un procédé de fabrication d'un matériau thermoplastique, contenant :
(a) au moins une résine thermoplastique,
(b) au moins une charge minérale ou carbonée,
(c) éventuellement au moins un autre additif choisi parmi un stabilisant thermique et / ou un stabilisant UV et / ou un lubrifiant et / ou un modificateur de rhéologie et / ou un modificateur d'impact de nature organique,
et caractérisé en ce qu'est introduit dans la composition précitée au moins un polymère peigne, contenant au moins une fonction oxyde de polyalkylène greffée sur au moins un monomère insaturé éthylénique.

D'autre part, une autre originalité de l'invention est que le polymère peigne qu'elle met en oeuvre peut être introduit dans la composition thermoplastique par des modes très variés qui sont autant de souplesse apportée à l'homme du métier.
A ce titre, ledit polymère peut être introduit via la charge minérale ou carbonée, une fois celle-ci broyée en présence dudit polymère, tant en milieu sec qu'en milieu aqueux, puis séchée, traitée et éventuellement classifiée.
Ledit polymère peut aussi être introduit via la charge minérale ou carbonée; celui-ci-ayant été introduit dans une suspension et / ou une dispersion aqueuse contenant la charge minérale ou carbonée, et le produit obtenu ayant ensuite été séché, traité et éventuellement classifié.
Ledit polymère peut aussi être introduit sous forme de poudre sèche avec les autres constituants a), b) et c) du produit final. A ce titre, il peut avoir été préalablement mélangé avec un ou plusieurs de ces constituants, le produit obtenu étant ensuite mélangé aux autres constituants.
Ledit polymère peut enfin être introduit dans une émulsion et / ou une suspension aqueuse contenant au moins un des additifs désignés dans la partie c), c'est-à-dire un additif choisi parmi un stabilisant thermique et / ou un stabilisant UV et / ou un lubrifiant et / ou un modificateur de rhéologie et / ou un modificateur d'impact de nature organique.
La Demanderesse indique qu'en matière de traitement tel qu'indiqué plus haut, on utilise en général des composés du type acides gras.

Dans le domaine technique de l'invention, c'est-à-dire dans les compositions thermoplastiques éventuellement chargées, et présentant une tenue à l'impact améliorée, l'homme du métier connaît un certain nombre de documents : il s'agit d'une première partie de l'état de la technique dont l'enseignement est discuté plus en détails dans la suite de la présente Demande.
D'autre part, il s'avère que la Demanderesse a aussi connaissance d'autres documents qui mettent en oeuvre des polymères peigne contenant une fonction oxyde de polyalkylène, mais dans des domaines techniques souvent très éloignés, et en vue de résoudre des problèmes bien différents. Cette deuxième partie de l'état de la technique est également discutée dans la suite de la Demande.

Il existe tout d'abord un certain nombre de documents, qui ont trait au problème de l'amélioration de la résistance à l'impact dans des résines thermoplastiques, et qui proposent des solutions basées sur l'emploi de polymères particuliers. De tels documents sont discutés dans la suite de la présente demande. En prélude à cette partie, la Demanderesse tient toutefois à indiquer qu'aucun d'entre eux ne révèle ni même ne suggère la possibilité d'employer une charge minérale ou carbonée dans les systèmes thermoplastiques qui sont envisagés, en vue d'exacerber cette résistance à l'impact. Or, comme déjà mentionné, c'est la présence conjointe des polymères décrits dans la présente invention et de charges minérales et carbonées qui donne de manière surprenante une résistance à l'impact améliorée, tout en conservant la rigidité de la résine : c'est bien une de caractéristiques essentielles de la présente invention.

Le document US 5 506 320 concerne l'amélioration des propriétés de rigidité et de flexibilité de résines thermodurcissables, telles que notamment les résines acryliques, polyesters, polyuréthanes, époxydes, ou encore vinyles esters. La solution apportée consiste en l'utilisation de polymères de type peigne qui sont cuits en présence de ladite résine, de manière à obtenir un mélange homogène dont les propriétés précitées s'en trouvent alors améliorées. Lesdits polymères disposent d'un squelette formé d'un polymère à insaturation éthylénique sur lequel sont greffées des chaînes pendantes du type polyéther, polyester, polystyrène ou polyméthacrylate. Les exemples attestent notamment d'une rigidité accrue de la résine thermodurcissable contenant de tels polymères, par rapport aux mêmes compositions contenant des polymères commercialisés par la société GOODRICH™ sous le terme Hycar™, et dont la fonction de modificateur d'impact est bien connue de l'homme du métier. Ce document ne dévoile ni ne suggère aucune possibilité de combinaison entre les polymères qu'il décrit, et les modificateurs d'impact organiques de l'art antérieur, ce qui est un des objets de la présente invention. D'autre part, le document US 5 506 320 ne révèle pas que les polymères qu'il met en oeuvre peuvent être utilisés en combinaison avec des charges minérales dans un matériau thermoplastique, en vue d'améliorer encore cette résistance à l'impact, ce qui est aussi un des objets principaux de la présente invention. Enfin, ce document ne dévoile ni ne suggère le greffage particulier de la fonction oxyde de polyalkylène sur un monomère possédant une insaturation éthylénique, ce qui est une des caractéristiques essentielles du procédé objet de la présente invention.
Le document US 5 116 910 vise quant à lui à améliorer les propriétés de transparence, de résistance mécanique, de résistance aux conditions environnementales (notamment au soleil), et de résistance à l'impact de résines acryliques. La solution proposée réside dans l'utilisation de copolymères acryliques de type peigne obtenus en copolymérisant un polymère d'ester méthacrylique ayant une liaison vinyle avec un monomère ester acrylique. En mélange avec un copolymère du type polyméthacrylate de méthyle, on obtient une résine aux propriétés de résistance à l'impact améliorées. Il apparaît clairement que la fonction des copolymères décrits dans le document US 5 116 910 consiste à être substitués aux modificateurs d'impact de l'art antérieur : par conséquent, un tel document ne révèle ni ne suggère aucune combinaison entre lesdits polymères et les modificateurs d'impact de l'art antérieur. D'autre part, le document US 5 116 910 ne révèle pas que les polymères qu'il met en oeuvre peuvent être utilisés en combinaison avec des charges minérales dans un matériau thermoplastique, en vue d'améliorer encore cette résistance à l'impact, ce qui est aussi un des objets principaux de la présente invention. Enfin, ce document ne révèle pas le greffage particulier de la fonction oxyde de polyalkylène sur un monomère possédant une insaturation éthylénique en vue d'obtenir des copolymères de type peigne. D'autre part, le document US 5 116 910 ne révèle pas que les polymères qu'il décrit peuvent être mis en oeuvre avec des matières minérales dans les résines acryliques où ils peuvent être incorporés.
Le document JP 06 073 263 vise à obtenir des résines styréniques présentant de bonnes propriétés antistatiques et de résistance à l'impact. La solution proposée consiste à introduire dans ladite résine styrénique la combinaison d'un sel de métal alcalin et d'un polymère vinylique ayant au moins une fonction choisie parmi les fonctions carbonyle, époxyde ou oxyde de polyalkylène de poids moléculaire compris entre 300 et 2 000 ; la fonction vinylique pouvant être notamment apportée par un monomère acrylique et / ou méthacrylique. Toutefois, ce document ne révèle en rien ni ne suggère l'utilisation d'une charge minérale ou carbonée en présence de ce polymère. Or -et c'est là une des caractéristiques essentielles de la présente invention- les polymères peigne qui sont mis en oeuvre vont exacerber la résistance à l'impact de la résine thermoplastique en présence d'une charge minérale ou carbonée : dans la présente invention, c'est la présence conjointe desdits polymères et de ces charges minérales et carbonées qui donne de manière surprenante une résistance à l'impact améliorée, tout en conservant la rigidité de la résine. Enfin, le document JP 04 063 818 a pour objectif d'améliorer la résistance à l'impact de résines particulières à base de poly(phénylène sulfide) et de polycarbonate: La solution consiste en l'introduction d'un polymère méthacrylique disposant d'une fonction oxyde de polyalkylène. Comme précédemment, rien dans ce document n'incite l'homme du métier à utiliser une charge minérale ou carbonée en combinaison avec de tels polymères. Or, c'est bien la présence conjointe d'une telle charge et d'un polymère peigne particulier qui donne, dans la présente invention, des résultats surprenants en terme d'amélioration de la résistance à l'impact et de conservation de la rigidité.

Enfin, la Demanderesse tient à souligner le document US 2002 / 058 752, ayant trait à l'amélioration de la résistance à l'impact dans une résine thermoplastique tel que le PVC, et éventuellement en présence d'une charge minérale tel que le carbonate de calcium.
Ainsi ce document concerne-t-il le problème du renforcement de matériaux thermoplastiques, notamment le renforcement de leur résistance à l'impact. A ce titre, il propose une solution différente des modificateurs d'impact du type coeur-écorce, qui réside dans l'utilisation de polymères peigne mélangés au matériau thermoplastique, ledit mélange étant ensuite chauffé, extrudé et refroidi. Les polymères peigne utilisés à cet effet ne contiennent pas de monomère lactone mais sont réalisés à partir d'un macromonomère du type ester d'alkyle méthacrylique. Ces polymères peuvent être utilisés dans des compositions thermoplastiques contenant notamment du PVC et du carbonate de calcium (voir tableau 7), où ils améliorent la résistance à l'impact, tant par rapport à la même composition sans ledit polymère (tel qu'indiqué revendication 1), que par rapport à la même composition contenant à la place dudit polymère un additif modificateur de choc du type coeur-écorce (voir tableau 8). Il est donc très clair que la fonction desdits polymères est celle d'un modificateur de choc, que l'homme du métier va substituer aux autres modificateurs d'impact organiques de l'art antérieur : la possibilité de les utiliser en combinaison avec ces derniers n'est en rien dévoilée ni même suggérée. D'autre part, le document US 2002 / 058 752 n'enseigne en rien le greffage particulier de la fonction oxyde de polyalkylène glycol sur un monomère possédant une insaturation éthylénique, ce qui est un des objets essentiels de la présente invention.

La deuxième partie de l'état de la technique concerne les documents révélant l'utilisation de polymères de type peigne disposant d'une insaturation éthylénique sur laquelle est greffée une fonction oxyde de polyalkylène, mais dans des domaines techniques très éloignés, et en vue de résoudre des problèmes complètement différents.

Ainsi, la Demanderesse peut citer le document EP 0 610 534 qui enseigne la préparation de polymères obtenus par copolymérisation d'un monomère isocyanate et de monomères aprotiques, puis par fonctionnalisation au moyen d'amines ou d'éthers monoalkylés de polyalkylènes glycol. De tels agents sont particulièrement efficaces pour le broyage de pigments organiques.
De même, elle indique que le document WO 00 / 077 058 décrit des polymères à base d'un dérivé insaturé d'un acide mono ou dicarboxylique, d'un dérivé insaturé de polyalkylène glycol, d'un composé polysiloxane insaturé ou d'un ester insaturé. Ces copolymères sont utilisés comme agents dispersants dans les suspensions aqueuses de charges minérales, notamment dans le secteur des ciments.
Elle connaît également le document WO 01 / 096 007 qui décrit un copolymère ionique, hydrosoluble, et disposant d'une fonction greffée alkoxy ou hydroxy polyalkylène glycol, dont le rôle est de disperser et / ou d'aider au broyage des pigments et / ou des charges minérales. Ledit copolymère permet d'obtenir des suspensions aqueuses de cesdites matières affinées, de concentration en matière sèche pouvant être élevée, de viscosité Brookfield™ faible et stable dans le temps ayant la propriété de présenter une surface pigmentaire dont la charge ionique déterminée par titration est faible: il s'agit donc d'un problème technique très différent de celui que vise à résoudre la présente invention. Lesdites suspensions aqueuses de pigments et / ou de charges minérales entrent ensuite dans la fabrication de papiers, ou de matières plastiques telles que du PVC. A ce titre, et tel que le montre notamment le seul exemple se rapportant au plastique (exemple 7), ledit copolymère n'est pas utilisé comme additif direct dans la formulation plastique. L'enseignement général de ce document est d'ailleurs que de tels copolymères servent à disperser et / ou broyer des matières minérales : il s'agit d'une fonction complètement différente de celle décrite dans la présente Demande. Enfin, ce document ne concerne en rien la problématique d'augmenter la résistance à l'impact de résines thermoplastiques qui plus est, en maintenant leur rigidité.
Elle connaît également le document WO 2004 / 041 883 qui enseigne l'utilisation d'un copolymère hydrosoluble et de préférence faiblement ionique et hydrosoluble, disposant d'au moins une fonction alkoxy ou hydroxy polyalkylène glycol greffée sur au moins un monomère insaturé éthylénique, comme agent améliorant la brillance du produit final tel qu'une feuille de papier ou une matière plastique.. Il apparaît à travers la lecture de ce document que ledit copolymère peut être utilisé dans un procédé de dispersion (exemple 3) ou de broyage (exemples 1, 2, 6) ou de fabrication (exemple 4) de charges minérales dans l'eau, et que c'est la dispersion ou la suspension résultante qui apporte une brillance améliorée au produit final (peinture ou feuille de papier couchée dans les exemples 1, 2, 3, 4, 6 et 7). Ledit copolymère peut aussi être utilisé comme additif direct, mais en milieu aqueux, dans le cas de la formulation d'une sauce de couchage papetière, ladite sauce apportant par la suite une brillance améliorée à la feuille de papier couchée (exemple 5). Le problème technique résolu par ce document est donc très différent de celui qui fait l'objet de la présente Demande.
Enfin, la Demanderesse connaît aussi le document WO 2004 / 044 022 qui décrit l'utilisation d'un copolymère hydrosoluble disposant d'au moins une fonction alkoxy ou hydroxy polyalkylène glycol greffée sur au moins un monomère insaturé éthylénique, comme agent améliorant l'activation de l'azurage optique dans les domaines du papier, du textile, de la détergence et de la peinture. Il est à noter que ce document ne mentionne jamais l'utilisation desdits copolymères dans des matériaux plastiques. D'autre part, l'activation de l'azurage optique est une propriété très éloignée de celles qui font l'objet de la présente Demande.

Par conséquent, sans que rien ne l'enseigne ou ne le suggère dans l'état de la technique, la Demanderesse a mis au point un procédé de fabrication de matières thermoplastiques qui offre de manière surprenante un excellent compromis entre résistance à l'impact et rigidité des résines thermoplastiques, puisqu'il confère à l'homme du métier des avantages :
- tant dans le cas de l'emploi d'un modificateur choc organique, où il permet de réaliser une synergie positive entre ledit modificateur et la charge minérale ou carbonée : possibilité de diminuer la quantité de modificateur choc et d'obtenir les mêmes performance de résistance à l'impact et de rigidité, ou maintien de cette quantité mais augmentation de la résistance à l'impact et conservation de la rigidité ;
- que sans modificateur de choc organique : les performances de résistance à l'impact initialement apportées par la charge minérale ou carbonée sont "dopées" par la présente invention, sans pour autant dégrader la rigidité de la résine.

Il s'agit donc d'un procédé de fabrication d'un matériau thermoplastique, contenant :
(a) au moins une résine thermoplastique,
(b) au moins une charge minérale ou carbonée,
(c) éventuellement au moins un autre additif choisi parmi un stabilisant thermique et / ou un stabilisant UV et / ou un lubrifiant et / ou un modificateur de rhéologie et / ou un modificateur d'impact de nature organique,
et caractérisé en ce qu'est introduit dans la composition précitée au moins un polymère peigne, contenant au moins une fonction oxyde de polyalkylène greffée sur au moins un monomère insaturé éthylénique.

Le procédé selon l'invention se caractérise aussi en ce que ledit polymère est introduit :
1. sous forme de poudre sèche, résultant des étapes de :
   - broyage et / ou dispersion en milieu aqueux de la charge minérale ou carbonée en présence dudit polymère, et éventuellement en présence d'au moins un autre agent de broyage en voie humide et / ou d'au moins un autre agent dispersant,
   - séchage de la dispersion et / ou de la suspension aqueuse de matière minérale ou carbonée obtenue, avec introduction éventuelle dudit polymère, traitement puis éventuellement classification de la poudre obtenue
2. et / ou sous forme de poudre sèche, résultant des étapes de :
   - broyage à sec de la charge minérale ou carbonée en présence dudit polymère, et éventuellement en présence d'au moins un autre agent de broyage à sec,
   - traitement et classification éventuelle de la poudre obtenue,
3. et / ou sous forme de poudre sèche, résultant des étapes de :
   - introduction dudit polymère dans une dispersion et / ou dans une suspension aqueuse contenant la charge minérale ou carbonée,
   - séchage de la dispersion et / ou de la suspension aqueuse de matière minérale ou carbonée obtenue, avec introduction éventuelle dudit polymère, traitement puis éventuellement classification de la poudre obtenue,
4. et / ou sous forme de poudre sèche mélangée avec les autres constituants a), b) et c),
5. et / ou sous forme de poudre sèche résultant des étapes de :
   - introduction dudit polymère dans une suspension et / ou une émulsion d'au moins un additif choisi parmi un stabilisant thermique et / ou un stabilisant UV et / ou un lubrifiant et / ou un modificateur de rhéologie et / ou un modificateur d'impact de nature organique,
   - séchage de la suspension et / ou de l'émulsion obtenue en présences éventuelle dudit polymère, puis éventuellement classification de la poudre obtenue,

La Demanderesse tient à indiquer que ledit polymère peigne, lorsqu'il est mis en oeuvre selon un des 5 modes décrits plus haut -à l'exception du mode référencé 4-peut être à l'état de poudre sèche et / ou à l'état liquide c'est-à-dire sous forme d'une émulsion ou d'une suspension aqueuse. Concrêtement, c'est sous forme de poudre sèche et / ou sous forme liquide que ledit polymère est ajouté pendant le broyage à sec ou en milieu humide (modes 1 et 2), et / ou dans une suspension aqueuse contenant la charge minérale ou carbonée (mode 3), et / ou dans une émulsion ou une suspension contenant au moins un additif choisi parmi un stabilisant thermique et / ou un stabilisant UV et / ou un lubrifiant et / ou un modificateur de rhéologie et / ou un modificateur d'impact de nature organique (mode 5).

Le procédé selon l'invention est aussi caractérisé en ce que la résine thermoplastique est choisie parmi les résines halogénées, telles que notamment le PVC, le polychlorure de vinyle surchloré (PVCC), le polyfluorure de vinylidène (PVDF), ou choisie parmi les résines styréniques, telles que notamment les copolymères styrène-butadiène à haut taux de styrène (HIPS), les copolymères blocs de type Kraton™, les résines du type styrène-acrylonitrile, les résines acrylate-butadiène-styrène, les copolymères styrène méthylméthacrylate, ou choisie parmi les résines acryliques, telles que notamment le polyméthacrylate de méthyle, ou choisie parmi les polyoléfines, telles que notamment les polyéthylènes ou les polypropylènes, ou choisie parmi les résines polycarbonates, ou choisie parmi les résines polyesters insaturées, telles que notamment les polyéthylène téréphthalate et les polybutylène téréphthalate, ou choisie parmi les résines polyuréthanes, ou choisie parmi les résines polyamides, ou le mélange de ces résines, et préférentiellement en ce que la résine thermoplastique est choisie parmi les résines halogénées, telles que notamment le PVC, le polychlorure de vinyle surchloré (PVCC), le polyfluorure de vinylidène (PVDF), ou les résines acryliques, telles que notamment le polyméthacrylate de méthyle, ou choisie parmi les résines polycarbonates, ou choisie parmi les résines polyesters insaturées, telles que notamment les polyéthylène téréphthalate et les polybutylène téréphthalate, et très préférentiellement en ce que cette résine thermoplastique est du PVC.

Le procédé selon l'invention est aussi caractérisé en ce que la charge minérale ou carbonée est choisie parmi le carbonate de calcium naturel ou synthétique, les dolomies, le kaolin, le talc, le gypse, l'oxyde de titane, le blanc satin ou encore le trihydroxyde d'aluminium, le mica, le noir de carbone et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane.
La charge minérale ou carbonée est préférentiellement une charge minérale choisie parmi le carbonate de calcium naturel ou synthétique, le talc et les mélanges de ces charges.
La charge minérale ou carbonée est très préférentiellement une charge minérale qui est un carbonate de calcium naturel ou synthétique ou leurs mélanges. La charge minérale ou carbonée est extrêmement préférentiellement une charge minérale qui est un carbonate de calcium naturel choisi parmi le marbre, la calcite, la craie ou leurs mélanges.

Le procédé selon l'invention est aussi caractérisé en ce que le modificateur de choc de nature organique est choisi parmi les additifs chocs du type coeur-écorce, ou les polyoléfines chlorées, ou les caoutchoucs styrène-butadiène (SBR), styrène-butadiène-styrène (SBS), les polyacétates de vinyle, et leurs mélanges, et préférentiellement en ce que le modificateur de choc organique est choisi parmi les additifs choc du type coeur-écorce ou les polyoléfines chlorées et leurs mélanges, et très préférentiellement en ce que le modificateur de choc organique est choisi parmi les additifs choc du type coeur-écorce de nature acrylique, styrénique, butadiénique, et de manière extrêmement préférentielle en ce que ledit additif choc de type coeur-écorce possède un coeur élastomérique à base d'acrylate de butyle ou possède un coeur élastomérique à base de polybutadiène et une écorce à base de polyméthacrylate ou de polystyrène.

Le procédé selon l'invention est aussi caractérisé en ce qu'il met en oeuvre :
(a) de 0,1 à 99 % en poids sec d'au moins une résine thermoplastique, par rapport au poids total de la formulation thermoplastique,
(b) de 0,1 à 90 % en poids sec d'au moins une charge minérale ou carbonée, par rapport au poids total de la formulation thermoplastique,
(c) de 0 à 20 %, préférentiellement de 5 à 20 % en poids sec d'un stabilisant thermique et / ou d'un stabilisant UV et / ou d'un lubrifiant et / ou d'un modificateur de rhéologie et / ou d'un modificateur d'impact de nature organique, par rapport au poids total de la formulation thermoplastique,
(d) de 0,01 à 5 %, préférentiellement de 0,1 à 3 % en poids sec d'un polymère peigne constitué d'au moins un monomère à insaturation éthylénique sur lequel est greffé au moins une fonction oxyde de polyalkylène, par apport au poids sec de charge minérale ou carbonée.

La Demanderesse indique que l'homme du métier pourra ajouter, dans le procédé selon l'invention, d'autres additifs tels que notamment des agents de processabilité, des lubrifiants, des additifs modificateurs de rhéologie, sans pour autant que cette liste soit exhaustive.

Le procédé selon l'invention est aussi caractérisé en ce que les polymères peigne contiennent au moins un monomère de formule (I) : 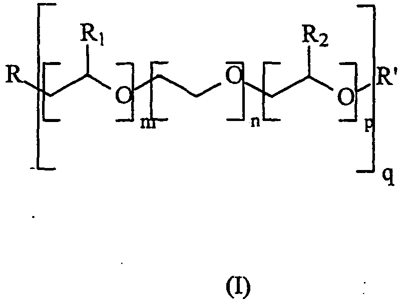 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges.

Le procédé selon l'invention est aussi caractérisé en ce les polymères peigne se composent :
a) d'au moins un monomère anionique et à fonction carboxylique ou dicarboxylique ou phosphorique ou phosphonique ou sulfonique ou leur mélange,
b) d'au moins un monomère non ionique, le monomère non ionique étant constitué d'au moins un monomère de formule (I) : 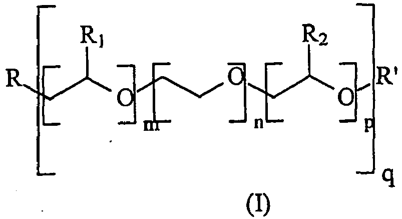 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au . moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou du mélange de plusieurs de ces monomères,
d) éventuellement d'au moins un monomère possédant au moins deux insaturations éthyléniques appelé dans la suite de la Demande monomère réticulant,

Le procédé selon l'invention est aussi caractérisé en ce que ledit polymère peigne est constitué :
a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,
b) d'au moins un monomère à insaturation éthylénique non ionique de formule (I) : 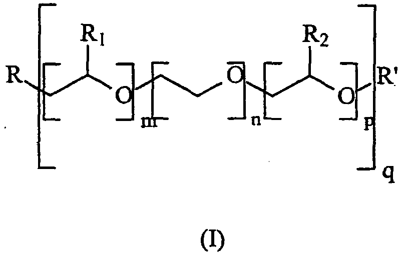 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q≤120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré, ou encore d'au moins un monomère organosililé choisi de manière préférentielle parmi les molécules de formules (IIa) ou (IIb) :
   avec formule (IIa) 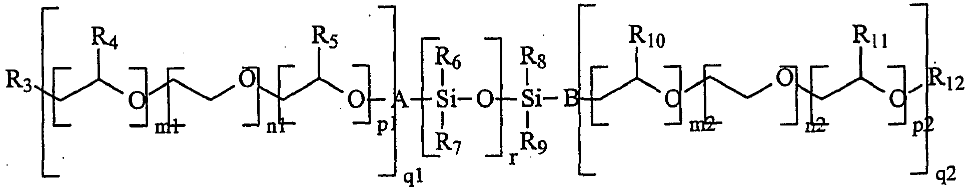 dans laquelle :
      - m₁, p₁, m₂ et p₂ représentent un nombre de motifs d'oxyde d'alkylène inférieur ou égal à 150,
      - n₁ et n₂ représentent un nombre de motifs d'oxyde d'éthylène inférieur ou égal à 150,
      - q₁ et q₂ représentent un nombre entier au moins égal à 1 et tel que 0 ≤ (m₁+n₁+p₁)q₁ ≤ 150 et 0 ≤ (m₂+n₂+p₂)q₂ ≤ 150,
      - r représente un nombre tel que 1 ≤ r ≤ 200,
      - R₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
      - R₄, R₅, R₁₀ et R₁₁, représentent l'hydrogène ou le radical méthyle ou éthyle,
      - R₆, R₇, R₈ et R₉, représentent des groupements linéaires ou ramifiés alkyle, ou aryle, ou alkylaryle, ou arylalkyle ayant 1 à 20 atomes de carbone, ou leur mélange,
      - R₁₂ représente un radical hydrocarboné ayant 1 à 40 atomes de carbone,
      - A et B sont des groupements éventuellement présents, qui représentent
         alors un radical hydrocarboné ayant 1 à 4 atomes de carbone,
   avec formule (IIb)

      R-A-Si(OB)₃

      dans laquelle :
      - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
      - A est un groupement éventuellement présent, qui représente alors un radical hydrocarboné ayant 1 à 4 atomes de carbone,
      - B représente un radical hydrocarboné ayant 1 à 4 atomes de carbone,
      ou du mélange de plusieurs de ces monomères,
d) éventuellement d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) : 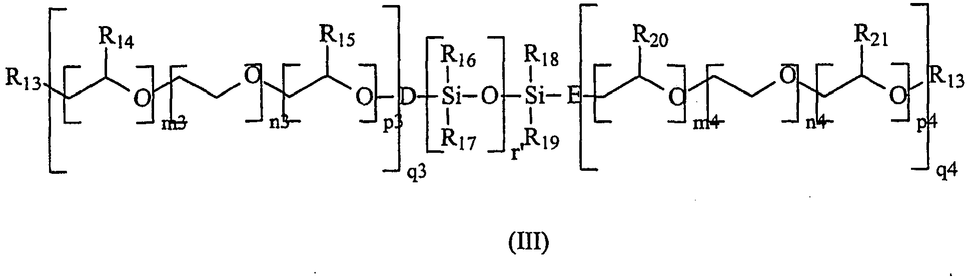 dans laquelle :
   - m₃, p₃, m₄ et p₄ représentent un nombre de motifs d'oxyde d'alkylène inférieur ou égal à 150,
   - n₃ et n₄ représentent un nombre de motifs d'oxyde d'éthylène inférieur ou égal à 150,
   - q₃ et q₄ représentent un nombre entier au moins égal à 1 et tel que 0 ≤ (m₃+n₃+p₃)q₃ ≤150 et 0 ≤ (m₄+n₄+p₄)q₄ ≤ 150,
   - r' représente un nombre tel que 1 ≤ r' ≤ 200,
   - R₁₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R₁₄, R₁₅, R₂₀ et R₂₁, représentent l'hydrogène ou le radical méthyle ou éthyle,
   - R₁₆, R₁₇, R₁₈ et R₁₉, représentent des groupements linéaires ou ramifiés alkyle, ou aryle, ou alkylaryle, ou arylalkyle ayant 1 à 20 atomes de carbone, ou leur mélange,
   - D et E sont des groupements éventuellement présents, qui représentent alors un radical hydrocarboné ayant 1 à 4 atomes de carbone,
   ou du mélange de plusieurs de ces monomères,

Le procédé selon l'invention est aussi caractérisé en ce que ledit polymère peigne est constitué, exprimé en poids :
a) de 2 % à 95 % et encore plus particulièrement de 5 % à 90 % d'au moins un monomère anionique à insaturation éthylénique et à fonction monocarboxylique choisi parmi les monomères à insaturation éthylénique et à fonction monocarboxylique tels que l'acide acrylique ou méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,
b) de 2 % à 95 % et encore plus particulièrement de 5 % à 90 % d'au moins un monomère à insaturation éthylénique non ionique de formule (I) : 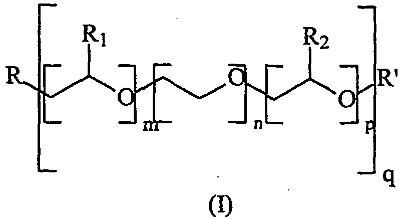 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'un monomère organofluoré, ou encore d'un monomère organosililé choisi de manière préférentielle parmi les molécules de formules (IIa) ou (IIb) :
   avec formule (IIa) 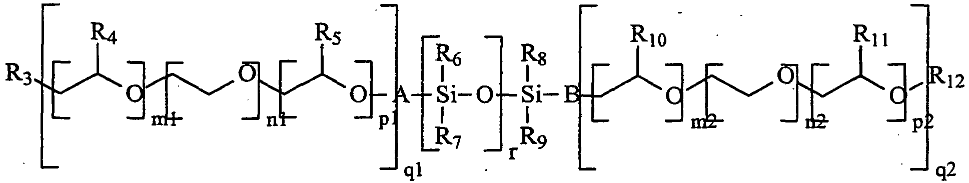 dans laquelle :
      - m₁, p₁, m₂ et P₂ représentent un nombre de motifs d'oxyde d'alkylène inférieur ou égal à 150,
      - n₁ et n₂ représentent un nombre de motifs d'oxyde d'éthylène inférieur ou égal à 150,
      - q₁ et q₂ représentent un nombre entier au moins égal à 1 et tel que 0 ≤
      - (m₁+n₁+p₁)q₁ ≤ 150 et 0 ≤ (m₂+n₂+p₂)q₂ ≤ 150,
      - r représente un nombre tel que 1 ≤ r ≤ 200,
      - R₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
      - R₄, R₅, R₁₀ et R₁₁, représentent l'hydrogène ou le radical méthyle ou éthyle,
      - R₆, R₇, R₈ et R₉, représentent des groupements linéaires ou ramifiés alkyle, ou aryle, ou alkylaryle, ou arylalkyle ayant 1 à 20 atomes de carbone, ou leur mélange,
      - R₁₂ représente un radical hydrocarboné ayant 1 à 40 atomes de carbone,
      - A et B sont des groupements éventuellement présents, qui représentent alors un radical hydrocarboné ayant 1 à 4 atomes de carbone,
   avec formule (IIb)

      R - A - Si (OB)₃

      dans laquelle :
      - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
      - A est un groupement éventuellement présent, qui représente alors un radical hydrocarboné ayant 1 à 4 atomes de carbone,
      - B représente un radical hydrocarboné ayant 1 à 4 atomes de carbone,
      ou du mélange de plusieurs de ces monomères,
d) de 0 % à 3 % d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) : 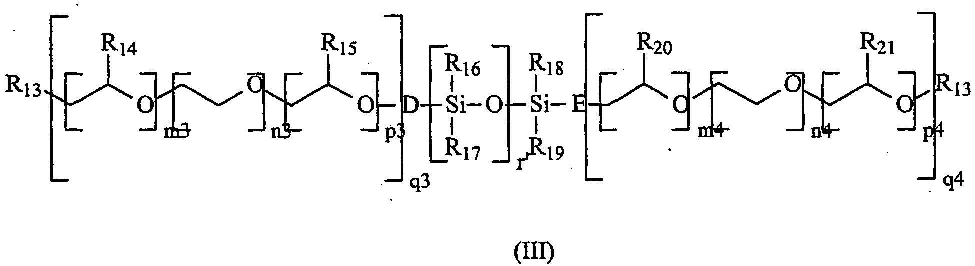 dans laquelle :
   - m₃, p₃, m₄ et p₄ représentent un nombre de motifs d'oxyde d'alkylène inférieur ou égal à 150,
   - n₃ et n₄ représentent un nombre de motifs d'oxyde d'éthylène inférieur ou égal à 150,
   - q₃ et q₄ représentent un nombre entier au moins égal à 1 et tel que 0 ≤ (m₃+n₃+_{P3})q₃ ≤ 150 et 0 ≤ (m₄+n₄-p₄)q₄ ≤150,
   - r' représente un nombre tel que 1 ≤ r' ≤ 200,
   - R₁₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R₁₄, R₁₅, R₂₀ et R₂₁, représentent l'hydrogène ou le radical méthyle ou éthyle,
   - R₁₆, R₁₇, R₁₈ et R₁₉, représentent des groupements linéaires ou ramifiés alkyle, ou aryle, ou alkylaryle, ou arylalkyle ayant 1 à 20 atomes de carbone, ou leur mélange,
   - D et E sont des groupements éventuellement présents, qui représentent alors un radical hydrocarboné ayant 1 à 4 atomes de carbone,
   ou du mélange de plusieurs de ces monomères,
le total des proportions des constituants a), b), c), et d) étant égal à 100 %.

Le polymère utilisé selon l'invention est obtenu par des procédés connus de copolymérisation radicalaire en solution, en émulsion directe ou inverse, en suspension ou précipitation dans des solvants appropriés, en présence de systèmes catalytiques et d'agents de transfert connus, ou encore par des procédés de polymérisation radicalaire contrôlée tels que la méthode dénommée Reversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

Ce polymère obtenu sous forme acide et éventuellement distillé, peut être également partiellement ou totalement neutralisé par un ou plusieurs agents de neutralisation disposant d'une fonction neutralisante monovalente ou d'une fonction neutralisante polyvalente tels que par exemple pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que par exemple la stéarylamine, les éthanolamines (mono-, di, triéthanolamine), la mono et diéthylamine, la cyclohexylamine, la méthylcyclohexylamine, l'amino méthyl propanol, la morpholine, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

Chaque agent de neutralisation intervient alors selon des taux de neutralisation propres à chaque fonction de valence.

Selon une autre variante, le polymère issu de la réaction de polymérisation peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

L'une des phases correspond alors au copolymère utilisé selon l'invention comme agent permettant l'amélioration de la résistance à l'impact dans les matériaux thermoplastiques.

Selon une autre variante, ledit polymère peut être séché.

Un autre objet de l'invention réside dans les compositions thermoplastiques obtenues par le procédé selon l'invention.

Un autre objet de l'invention réside dans les compositions thermoplastiques contenant :
(a) au moins une résine thermoplastique,
(b) au moins une charge minérale ou carbonée,
(c) éventuellement au moins un stabilisant thermique et / ou un stabilisant UV et / ou un lubrifiant et / ou un modificateur de rhéologie et / ou un modificateur d'impact de nature organique,
(d) au moins un polymère peigne, contenant au moins une fonction oxyde de polyalkylène greffée sur au moins un monomère insaturé éthylénique.

Les compositions thermoplastiques selon l'invention sont aussi caractérisées en ce que la résine thermoplastique est choisie parmi les résines halogénées, telles que notamment le PVC, le polychlorure de vinyle surchloré (PVCC), le polyfluorure de vinylidène (PVDF), ou choisie parmi les résines styréniques, telles que notamment les copolymères styrène-butadiène à haut taux de styrène (HIPS), les copolymères blocs de type Kraton™, les résines du type styrène-acrylonitrile, les résines acrylate-butadiène-styrène, les copolymères styrène méthylméthacrylate, ou choisie parmi les résines acryliques, telles que notamment le polyméthacrylate de méthyle, ou choisie parmi les polyoléfines, telles que notamment les polyéthylènes ou les polypropylènes, ou choisie parmi les résines polycarbonates, ou choisie parmi les résines polyesters insaturées, telles que notamment les polyéthylène téréphthalate et les polybutylène téréphthalate, ou choisie parmi les résines polyuréthanes, ou choisie parmi les résines polyamides, ou le mélange de ces résines, et préférentiellement en ce que la résine thermoplastique est choisie parmi les résines halogénées, telles que notamment le PVC, le polychlorure de vinyle surchloré (PVCC), le polyfluorure de vinylidène (PVDF), ou les résines acryliques, telles que notamment le polyméthacrylate de méthyle, ou choisie parmi les résines polycarbonates, ou choisie parmi les résines polyesters insaturées, telles que notamment les polyéthylène téréphthalate et les polybutylène téréphthalate, et très préférentiellement en ce que cette résine thermoplastique est du PVC.

Les compositions thermoplastiques selon l'invention sont aussi caractérisées en ce que la charge minérale ou carbonée est choisie parmi le carbonate de calcium naturel ou synthétique, les dolomies, le kaolin, le talc, le gypse, l'oxyde de titane, le blanc satin ou encore le trihydroxyde d'aluminium, le mica, le noir de carbone et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane.
La charge minérale ou carbonée est préférentiellement une charge minérale choisie parmi le carbonate de calcium naturel ou synthétique, le talc et les mélanges de ces charges.
La charge minérale ou carbonée est très préférentiellement une charge minérale qui est un carbonate de calcium naturel ou synthétique ou leurs mélanges.

La charge minérale ou carbonée est extrêmement préférentiellement une charge minérale qui est un carbonate de calcium naturel choisi parmi le marbre, la calcite, la craie ou leurs mélanges.

Les compositions thermoplastiques selon l'invention sont aussi caractérisées en ce que le modificateur de choc de nature organique est choisi parmi les additifs chocs du type coeur-écorce, ou les polyoléfines chlorées, ou les caoutchoucs styrène-butadiène (SBR), styrène-butadiène-styrène (SBS), les polyacétates de vinyle, et leurs mélanges, et préférentiellement en ce que le modificateur de choc organique est choisi parmi les additifs choc du type coeur-écorce ou les polyoléfines chlorées et leurs mélanges, et très préférentiellement en ce que le modificateur de choc organique est choisi parmi les additifs choc du type coeur-écorce de nature acrylique, styrénique, butadiénique, et de manière extrêmement préférentielle en ce que ledit additif choc de type coeur-écorce possède un coeur élastomérique à base d'acrylate de butyle ou possède un coeur élastomérique à base de polybutadiène et une écorce à base de polyméthacrylate ou de polystyrène.

La Demanderesse indique que l'homme du métier pourra ajouter, dans les compositions thermoplastiques selon l'invention, d'autres additifs.

Les compositions thermoplastiques selon l'invention sont aussi caractérisées en ce qu'elles contiennent :
(a) de 0,1 à 99 % en poids sec d'au moins une résine thermoplastique, par rapport au poids total de la formulation thermoplastique,
(b) de 0,1 à 90 % en poids sec d'au moins une charge minérale ou carbonée, par rapport au poids total de la formulation thermoplastique,
(c) de 0 à 20 %, préférentiellement de 5 à 20 % en poids sec d'un stabilisant thermique et / ou d'un stabilisant UV et / ou d'un lubrifiant et / ou d'un modificateur de rhéologie et / ou d'un modificateur d'impact de nature organique, par rapport au poids total de la formulation thermoplastique,
(d) de 0,01 à 5 %, préférentiellement 0,1 à 3 % en poids sec d'un polymère peigne constitué d'au moins un monomère à insaturation éthylénique sur lequel est greffé au moins une fonction oxyde de polyalkylène, par rapport au poids sec de charge minérale ou carbonée.

Les compositions thermoplastiques selon l'invention sont aussi caractérisées en ce que les polymères peigne contiennent au moins un monomère de formule (I) : 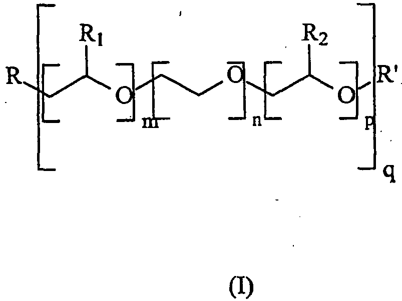 dans laquelle:
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges.

Les compositions thermoplastiques selon l'invention sont aussi caractérisées en ce que les polymères peigne se composent :
(a) d'au moins un monomère anionique et à fonction carboxylique ou dicarboxylique ou phosphorique ou phosphonique ou sulfonique ou leur mélange,
(b) d'au moins un monomère non ionique, le monomère non ionique étant constitué d'au moins un monomère de formule (I) : 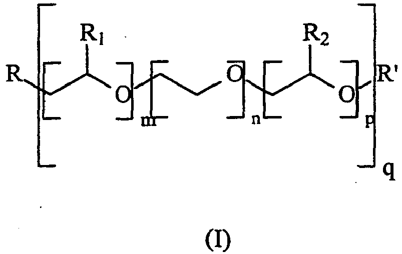 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
(c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou du mélange de plusieurs de ces monomères,
(d) éventuellement d'au moins un monomère possédant au moins deux insaturations éthyléniques appelé dans la suite de la Demande monomère réticulant,

Les compositions thermoplastiques selon l'invention sont aussi caractérisées en ce que ledit polymère peigne est constitué :
a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,
b) d'au moins un monomère à insaturation éthylénique non ionique de formule (I) : 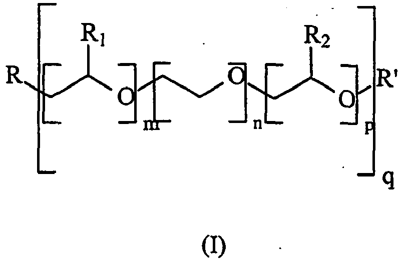 dans laquelle:
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré, ou encore d'au moins un monomère organosililé choisi de manière préférentielle parmi les molécules de formules (IIa) ou (IIb) :
   avec formule (IIa) 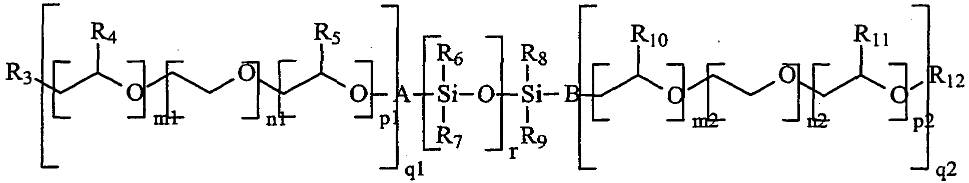 dans laquelle :
      - m₁, p₁, m₂ et p₂ représentent un nombre de motifs d'oxyde d'alkylène inférieur ou égal à 150,
      - n₁ et n₂ représentent un nombre de motifs d'oxyde d'éthylène inférieur ou égal à 150,
      - q₁ et q₂ représentent un nombre entier au moins égal à 1 et tel que 0 ≤ (m₁+n₁+p₁)q₁ ≤ 150 et 0 ≤ (m₂+n₂+p₂)q₂ ≤ 150,
      - r représente un nombre tel que 1 ≤ r ≤ 200,
      - R₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
      - R₄, R₅, R₁₀ et R₁₁, représentent l'hydrogène ou le radical méthyle ou éthyle,
      - R₆, R₇, R₈ et R₉, représentent des groupements linéaires ou ramifiés alkyle, ou aryle, ou alkylaryle, ou arylalkyle ayant 1 à 20 atomes de carbone, ou leur mélange,
      - R₁₂ représente un radical hydrocarboné ayant 1 à 40 atomes de carbone,
      - A et B sont des groupements éventuellement présents, qui représentent alors un radical hydrocarboné ayant 1 à 4 atomes de carbone,
   avec formule (IIb)

      R - A - Si (OB)₃

      dans laquelle :
      - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
      - A est un groupement éventuellement présent, qui représente alors un radical hydrocarboné ayant 1 à 4 atomes de carbone,
      - B représente un radical hydrocarboné ayant 1 à 4 atomes de carbone,
   ou du mélange de plusieurs de ces monomères,
d) éventuellement d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) : 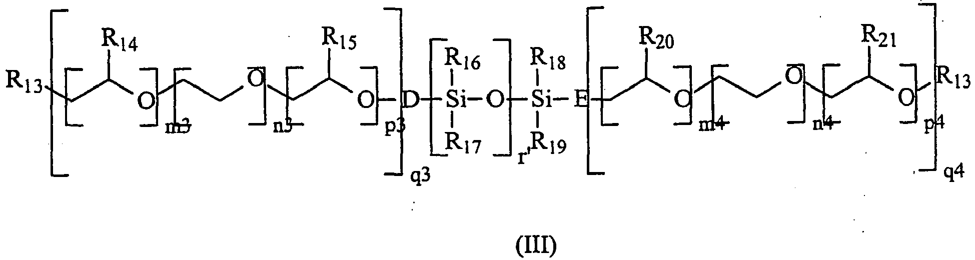 dans laquelle :
   - m₃, p₃, m₄ et p₄ représentent un nombre de motifs d'oxyde d'alkylène inférieur ou égal à 150,
   - n₃ et n₄ représentent un nombre de motifs d'oxyde d'éthylène inférieur ou égal à 150,
   - q₃ et q₄ représentent un nombre entier au moins égal à 1 et tel que 0 ≤ (m₃+n₃+_{P3})q₃ ≤ 150 et 0 ≤ (m₄+n₄+p₄)q₄ ≤ 150,
   - r' représente un nombre tel que 1 ≤ r' ≤ 200,
   - R₁₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R₁₄, R₁₅, R₂₀ et R₂₁, représentent l'hydrogène ou le radical méthyle ou éthyle,
   - R₁₆, R₁₇, R₁₈ et R₁₉, représentent des groupements linéaires ou ramifiés alkyle, ou aryle, ou alkylaryle, ou arylalkyle ayant 1 à 20 atomes de carbone, ou leur mélange,
   - D et E sont des groupements éventuellement présents, qui représentent alors un radical hydrocarboné ayant 1 à 4 atomes de carbone,
   ou du mélange de plusieurs de ces monomères,

Les compositions thermoplastiques selon l'invention sont aussi caractérisées en ce que ledit polymère peigne est constitué, exprimé en poids :
a) de 2 % à 95 % et encore plus particulièrement de 5 % à 90 % d'au, moins un monomère anionique à insaturation éthylénique et à fonction monocarboxylique choisi parmi les monomères à insaturation éthylénique et à fonction monocarboxylique tels que l'acide acrylique ou méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,
b) de 2 % à 95 % et encore plus particulièrement de 5 % à 90 % d'au moins un monomère à insaturation éthylénique non ionique de formule (I) : 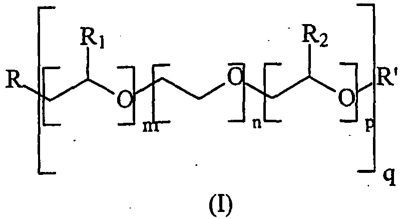 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique; maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'un monomère organofluoré, ou encore d'un monomère organosililé choisi de manière préférentielle parmi les molécules de formules (IIa) ou (IIb) :
   avec formule (IIa) 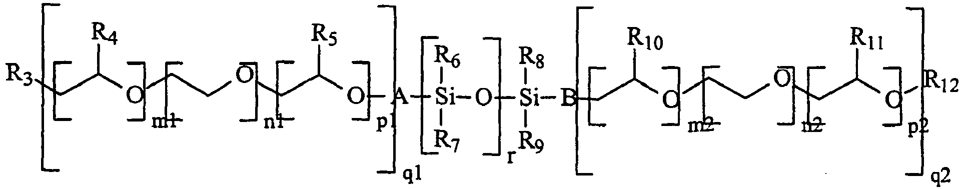 dans laquelle :
      - m₁, p₁, m₂ et p₂ représentent un nombre de motifs d'oxyde d'alkylène inférieur ou égal à 150,
      - n₁ et n₂ représentent un nombre de motifs d'oxyde d'éthylène inférieur ou égal à 150,
      - q₁ et q₂ représentent un nombre entier au moins égal à 1 et tel que 0 ≤ (m₁+n₁+p₁)q₁ ≤ 150 et 0 ≤ (m₂+n₂+p₂)q₂ ≤ 150,
      - r représente un nombre tel que 1 ≤ r ≤ 200,
      - R₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
      - R₄, R₅, R₁₀ et R₁₁, représentent l'hydrogène ou le radical méthyle ou éthyle,
      - R₆, R₇, R₈ et R₉, représentent des groupements linéaires ou ramifiés alkyle, ou aryle, ou alkylaryle, ou arylalkyle ayant 1 à 20 atomes de carbone, ou leur mélange,
      - R₁₂ représente un radical hydrocarboné ayant 1 à 40 atomes de carbone,
      - A et B sont des groupements éventuellement présents, qui représentent alors un radical hydrocarboné ayant 1 à 4 atomes de carbone,
   avec formule (IIb)

      R - A - Si (OB)₃

      dans laquelle :
      - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
      - A est un groupement éventuellement présent, qui représente alors un radical hydrocarboné ayant 1 à 4 atomes de carbone,
      - B représente un radical hydrocarboné ayant 1 à 4 atomes de carbone,
   ou du mélange de plusieurs de ces monomères,
d) de 0 % à 3 % d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) : , 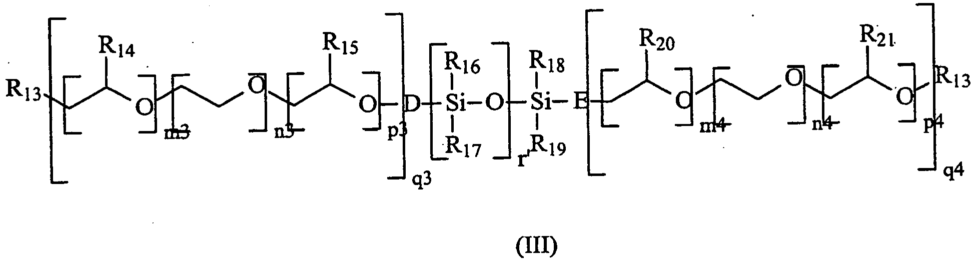 dans laquelle :
   - m₃, p₃, m₄ et p₄ représentent un nombre de motifs d'oxyde d'alkylène inférieur ou égal à 150,
   - n₃ et n₄ représentent un nombre de motifs d'oxyde d'éthylène inférieur ou égal à 150,
   - q₃ et q₄ représentent un nombre entier au moins égal à 1 et tel que 0 ≤ (m₃+n₃+p₃)q₃ ≤ 150 et 0 ≤ (m₄+n₄+p₄)q₄ ≤ 150,
   - r' représente un nombre tel que 1 ≤ r' ≤ 200,
   - R₁₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R₁₄, R₁₅, R₂₀ et R₂₁, représentent l'hydrogène ou le radical méthyle ou éthyle,
   - R₁₆, R₁₇, R₁₈ et R₁₉, représentent des groupements linéaires ou ramifiés alkyle, ou aryle, ou alkylaryle, ou arylalkyle ayant 1 à 20 atomes de carbone, ou leur mélange,
   - D et E sont des groupements éventuellement présents, qui représentent alors un radical hydrocarboné ayant 1 à 4 atomes de carbone,
   ou du mélange de plusieurs de ces monomères,
le total des proportions des constituants a), b), c), et d) étant égal à 100 %.

Le polymère utilisé selon l'invention est obtenu par des procédés connus de copolymérisation radicalaire en solution, en émulsion directe ou inverse, en suspension ou précipitation dans des solvants appropriés, en présence de systèmes catalytiques et d'agents de transfert connus, ou encore par des procédés de polymérisation radicalaire contrôlée tels que la méthode dénommée Réversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

Ce polymère obtenu sous forme acide et éventuellement distillé, peut être également partiellement ou totalement neutralisé par un ou plusieurs agents de neutralisation disposant d'une fonction neutralisante monovalente ou d'une fonction neutralisante polyvalente tels que par exemple pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que par exemple la stéarylamine, les éthanolamines (mono-, di, triéthanolamine), la mono et diéthylamine, la cyclohexylamine, la méthylcyclohexylamine, l'amino méthyl propanol, la morpholine, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

Chaque agent de neutralisation intervient alors selon des taux de neutralisation propres à chaque fonction de valence.

Selon une autre variante, le polymère issu de la réaction de polymérisation peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

L'une des phases correspond alors au polymère utilisé selon l'invention.

Selon une autre variante, ledit polymère peut aussi être séché.

La portée et l'intérêt de l'invention seront mieux perçus grâce aux exemples suivants.

### EXEMPLES

Remarque préliminaire : tous les carbonates de calcium décrits dans les exemples ont été traités à partir de composés du type acide gras.

Dans tous les exemples, le poids moléculaire des polymères mis en oeuvre est déterminé selon la méthode explicitée ci-dessous, par Chromatographie d'Exclusion Stérique (CES).

1 mL de la solution de polymère est mise sur une coupelle, qui est ensuite évaporée à température ambiante sous vide de pompe à palettes. Le soluté est repris par 1 mL de l'éluant de la CES, et l'ensemble est ensuite injecté dans l'appareil de CES. L'éluant de la CES est une solution de NaHCO₃ : 0.05 mol/L, NaNO₃ : 0.1 mol/L, triéthylamine 0.02 mol/L, NaN₃ 0.03 % massique. La chaîne de CES contient une pompe isocratique (Waters™ 515) dont le débit est réglé à 0.5 mL/min, un four contenant une précolonne de type "Guard Column Ultrahydrogel Waters™", une colonne linéaire de 7.8 mm de diamètre interne et 30cm de longueur de type "Ultrahydrogel Waters™" et un détecteur réfractométrique de type RI Waters™ 410. Le four est porté à la température de 60°C et le réfractomètre à 50°C. Le logiciel de détection et de traitement du chromatogramme est le logiciel SECential, fourni par "L.M.O.P.S. CNRS, Chemin du Canal, Vernaison, 69277". La CES est étalonnée par une série de 5 étalons de poly(acrylate) de sodium fourni par Polymer Standards Service™.

### EXEMPLE 1

Cet exemple illustre le procédé de fabrication de matériaux thermoplastiques, contenant au moins une résine PVC et du carbonate de calcium, matériau thermoplastique dans lequel on a introduit :
- soit le polymère peigne dont l'utilisation fait l'objet de la présente invention sous forme de poudre sèche résultant d'une étape de broyage en milieu aqueux de carbonate de calcium en présence dudit polymère, et séchage de la suspension obtenue,
- soit un polymère de l'art antérieur, sous forme de poudre sèche résultant d'une étape de broyage en milieu aqueux de carbonate de calcium en présence de cedit polymère, et séchage de la suspension obtenue

### Composition des matériaux thermoplastiques

Pour chacun des essais n° 1 à 10, les compositions thermoplastiques fabriquées mettent en oeuvre :
- une résine PVC commercialisée par la société ARKEMA™ sous le nom Lacovyl™ S 110P
- du dioxyde de titane commercialisé par la société KRONOS™ sous le nom Kronos™ 2200
- un stabilisant thermique commercialisé par la société BARLOCHER™ sous le nom One Pack Baeropan™
- un lubrifiant commercialisé par la société LAPASSE ADDITIVES CHEMICALS™ sous le nom Lacowax™ EP
- un additif modificateur de choc organique de type coeur-écorce commercialisé par la société ARKEMA™ sous le nom Durastrength™ 320
- du carbonate de calcium sous forme de poudre dont la fabrication est explicitée plus avant
- un polymère peigne selon l'invention ou un agent de broyage de l'art antérieur, dont la nature est explicitée plus avant
Les quantités mises en oeuvre ont été indiquées dans le tableau 1.

### Obtention des poudres sèches de carbonate de calcium

Les suspensions aqueuses de carbonate de calcium obtenues par broyage avec des agents d'aide au broyage de l'art antérieur ou un polymère peigne selon l'invention ont été séchées sous forme de poudre au moyen d'une fontaine sécheur de type Niro Minor Mobile 2000 commercialisée par la société NIRO™.
Les caractéristiques de ce séchage sont :
- température d'entrée du gaz : 350°C
- température de sortie du gaz : 102-105°C
- ventilation ouverte à 99%
- pression d'air: 4 bars

### Fabrication des mélanges secs de PVC

Pour chacun des essais n° 1 à 10, on commence par réaliser le mélange des différents constituants qui rentrent dans la composition des matériaux thermoplastiques. De tels mélanges sont réalisés sur un mixeur de type Guedu™ de 5 litres selon le cycle suivant:
- chauffage à 50°C du mélangeur pendant 30 minutes ;
- introduction de la résine PVC avec une augmentation de la température jusqu'à 90°C
- addition des composants à l'exception du carbonate de calcium
- augmentation de la température jusqu'à 115°C et addition du carbonate de calcium
- agitation pendant 15 minutes puis déchargement

### Extrusion des mélanges secs de PVC

Tous les mélanges secs ont été extrudés avec un système Thermoelectron Polylab™ équipée d'une bi-vis et d'une filière plate (25 mm x 3 mm).

Les profilés PVC sont ensuite calibrés à 15°C dans un bain d'eau et laminés sur un système Yvroud. Les paramètres d'extrusion sont :
- température des 4 zones : 170-180-190-195°C
- vitesse des vis : 30 tours par minute

### Mesure des résistances au choc

Les mesures de résistance au choc sont réalisées selon la norme British Standard BS 7413 : 2003. Les mesures ont été moyennées sur des lots de 10 éprouvettes fabriquées avec la machine Diadisc™ 4200 commercialisée par la société MUTRONIC™.

### Essais n° 1, 2 et 3

Ces essais illustrent l'art antérieur.
Ces essais mettent en oeuvre une suspension aqueuse de carbonate de calcium commercialisée par la société OMYA™ sous le nom de Hydrocarb™ 95 T, obtenue par broyage en milieu humide de carbonate de calcium avec un polymère acrylique de l'art antérieur et dont 55 % en poids des particules ont un diamètre inférieur à 1 µm tel que mesuré par un appareil de type Sedigraph™ 5100 commercialisé par la société MICROMERITICS™.

Ladite suspension a été séchée selon la méthode précédemment décrite.
Les essais n° 1, 2 et 3 mettent respectivement en oeuvre 8, 11 et 14 parts de la poudre sèche obtenue et 6 parts d'additif choc.

### Essais n° 4, 5 et 6

Ces essais illustrent l'invention.
Ces essais mettent en oeuvre une suspension aqueuse de carbonate de calcium dont 55 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,7 % en poids sec par rapport au poids sec de carbonate de calcium, d'un polymère peigne de poids moléculaire 35 000 g/mol, obtenu par un procédé de polymérisation radicalaire contrôlée dans l'eau de:
- 92 % en poids de méthacrylate de méthoxy polyéthylène glycol de poids moléculaire 2 000 g/mol,
- 8 % d'acide acrylique,
totalement neutralisé par la soude.

Ladite suspension a été séchée selon la méthode précédemment décrite.
Les essais n° 4, 5 et 6 mettent respectivement en oeuvre 8, 11 et 14 parts de la poudre sèche obtenue et 6 parts d'additif choc.

### Essais n° 7 et 8

Ces essais illustrent l'art antérieur.
Ces essais mettent en oeuvre une suspension aqueuse de carbonate de calcium commercialisée par la société OMYA™ sous le nom de Hydrocarb™ 120 T, obtenue par broyage en milieu humide de carbonate de calcium avec un polymère acrylique de l'art antérieur et dont 78 % en poids des particules ont un diamètre inférieur à 1 µm tel que mesuré par un appareil de type Sedigraph™ 5100 commercialisé par la société MICROMERITICS™.
Ladite suspension a été séchée selon la méthode précédemment décrite.

Les essais n° 7 et 8 mettent respectivement en oeuvre 8 et 11 parts de la poudre sèche obtenue et 6 parts d'additif choc.

### Essais n° 9 et 10

Ces essais illustrent l'invention.

Ces essais mettent en oeuvre une suspension aqueuse de carbonate de calcium dont 78 % en poids des particules ont un diamètre inférieur à 1 µm tel que mesuré par un appareil de type Sedigraph™ 5100 commercialisé par la société MICROMERITICS™, obtenue par broyage en milieu humide de carbonate de calcium avec 1,0 % en poids sec par rapport au poids sec de carbonate de calcium, d'un polymère peigne de poids moléculaire 35 000 g/mol, obtenu par un procédé de polymérisation radicalaire contrôlée dans l'eau de:
- 92 % en poids de méthacrylate de méthoxy polyéthylène glycol de poids moléculaire 2 000 g/mol,
- 8 % d'acide acrylique,
totalement neutralisé par la soude.

Ladite suspension a été séchée selon la méthode précédemment décrite.

Les essais n° 9 et 10 mettent respectivement en oeuvre 8 et 11 parts de la poudre sèche obtenue et 6 parts d'additif choc.

Pour chacun des essais n° 1 à 10, les compositions des formulations thermoplastiques réalisées, ainsi que les valeurs des résistances à l'impact correspondantes sont données dans le tableau 1.

**Tableau 1 : composition des différentes formulations thermoplastiques et valeurs des résistances à l'impact correspondantes**

| **Essai n°** | **1** | **2** | **3** | **4** | **5** | **6** | **7** | **8** | **9** | **10** |
|---|---|---|---|---|---|---|---|---|---|---|
| Art Antérieur / Invention (AA / IN) | AA | AA | AA | IN | IN | IN | AA | AA | IN | IN |
| Lacovyl | 100 | 100 | 100 | 100 | 100 | 100 | 100 | 100 | 100 | 100 |
| Kronos 2200 | 5 | 5 | 5 | 5 | 5 | 5 | 5 | 5 | 5 | 5 |
| One Pack Baeropan | 2,5 | 2,5 | 2,5 | 2,5 | 2,5 | 2,5 | 2,5 | 2,5 | 2,5 | 2,5 |
| Lacowax | 0,05 | 0,05 | 0,05 | 0,05 | 0,05 | 0,05 | 0,05 | 0,05 | 0,05 | 0,05 |
| Durastrength | 6 | 6 | 6 | 6 | 6 | 6 | 6 | 6 | 6 | 6 |
| Durastrength + 1 % polymère* | 0 | 0 | 0 | 0 | 0 | 0 | 0 | 0 | 0 | 0 |
| Hydrocarb 95 T | 8 | 11 | 14 | 0 | 0 | 0 | 0 | 0 | 0 | 0 |
| Hydrocarb 95 T + 0,7 % polymère* | 0 | 0 | 0 | 8 | 11 | 14 | 0 | 0 | 0 | 0 |
| Hydrocarb 120 T | 0 | 0 | 0 | 0 | 0 | 0 | 8 | 11 | 0 | 0 |
| Hydrocarb 120 T + 1,0 % polymère* | 0 | 0 | 0 | 0 | 0 | 0 | 0 | 0 | 8 | 11 |
| Impact (kJ/m²) | 9,92 | 10,88 | 12,19 | 10,96 | 12,74 | 14,41 | 9,3 | 14,1 | 11,9 | 13,1 |
| Ecart-type | 0,52 | 0,32 | 0,55 | 0,39 | 2,22 | 1,01 | 1,69 | 1,47 | 1,23 | 1,08 |

| | | | | | | | | | | |
|---|---|---|---|---|---|---|---|---|---|---|
| *polymère désigne le polymère peigne de poids moléculaire 35 000 g/mol, obtenu par un procédé de polymérisation radicalaire contrôlée dans l'eau de 92 % en poids de méthacrylate de méthoxy polyéthylène glycol de poids moléculaire 2 000 g/mol, et 8 % en poids d'acide acrylique. | | | | | | | | | | |

A quantité constante de modificateur d'impact organique (6 parts),
- la comparaison entre les essais 1 et 4, 2 et 5, 3 et 6 en ce qui concerne un carbonate de calcium dont 55 % en poids des particules ont une taille inférieure à 1 µm d'une part,
- et la comparaison entre les essais 7 et 9, 8 et 10, en ce qui concerne un carbonate de calcium dont 78 % en poids des particules ont une taille inférieure à 1 µm d'une part
démontrent que les résistances à l'impact sont toujours supérieures dans le cas du carbonate de calcium qui a été préalablement broyé selon l'invention en milieu aqueux et en présence du polymère peigne.
L'apport du polymère peigne, via le procédé de broyage en milieu humide du carbonate de calcium, permet donc d'exacerber la résistance à l'impact des résines thermoplastiques.

D'autre part, on a vérifié que le module de chacune des compositions thermoplastiques est constant et égal à 1900 ± 100 MPa.

### EXEMPLE 2

Cet exemple illustre le procédé de fabrication de matériaux thermoplastiques, contenant au moins une résine PVC et du carbonate de calcium, matériau thermoplastique dans lequel on a introduit :
- soit le polymère peigne dont l'utilisation fait l'objet de la présente invention :
   - sous forme de poudre sèche résultant d'une étape de broyage en milieu aqueux de carbonate de calcium en présence dudit polymère, et séchage de la suspension obtenue,
   - ou sous forme de poudre sèche résultant du mélange dudit polymère avec un modificateur de choc,
   - ou en encore sous forme de poudre sèche introduite en mélange dans l'extrudeur avec les autres constituants,
- soit un polymère de l'art antérieur, sous forme de poudre sèche résultant d'une étape de broyage en milieu aqueux de carbonate de calcium en présence de cedit polymère, et séchage de la suspension obtenue

### Essai n° 11

Cet essai illustre l'art antérieur.
Cet essai met en oeuvre une suspension aqueuse de carbonate de calcium commercialisée par la société OMYA™ sous le nom de Hydrocarb™ 95 T, obtenue par broyage du carbonate de calcium avec un polymère acrylique de l'art antérieur et dont 55 % en poids des particules ont un diamètre inférieur à 1 µm tel que mesuré par un appareil de type Sedigraph™ 5100 commercialisé par la société MICROMERITICS™.
Ladite suspension a été séchée selon la méthode précédemment décrite.
Cet essai met en oeuvre 8 parts de la poudre sèche obtenue et 5 parts d'additif choc.

### Essai n°12

Cet essai illustre l'invention.
Cet essai met en oeuvre une suspension aqueuse de carbonate de calcium dont 55 % en poids des particules ont un diamètre inférieur à 1 µm tel que mesuré par un appareil de type Sedigraph™ 5100 commercialisé par la société MICROMERITICS™, obtenue par broyage en milieu humide de carbonate de calcium avec 0,7 % en poids sec par rapport au poids sec de carbonate de calcium, d'un polymère peigne de poids moléculaire 35 000 g/mol, obtenu par un procédé de polymérisation radicalaire contrôlée dans l'eau de:
- 92 % en poids de méthacrylate de méthoxy polyéthylène glycol de poids moléculaire 2 000 g/mol,
- 8 % en poids d'acide acrylique,
totalement neutralisé par la soude.

Ladite suspension a été séchée selon la méthode précédemment décrite.
Cet essai met en oeuvre 8 parts de la poudre sèche obtenue et 5 parts d'additif choc.

### Essai n° 13

Cet essai illustre l'invention.
Cet essai met en oeuvre une suspension aqueuse de carbonate de calcium commercialisée par la société OMYA™ sous le nom de Hydrocarb™ 95 T, obtenue par broyage en milieu humide du carbonate de calcium avec un polymère acrylique de l'art antérieur et dont 55 % en poids des particules ont un diamètre inférieur à 1 µm tel que mesuré par un appareil de type Sedigraph™ 5100 commercialisé par la société MICROMERITICS™.

Ladite suspension a été séchée selon la méthode précédemment décrite.
Cet essai met en oeuvre 8 parts de la poudre sèche obtenue et 5 parts d'un mélange entre l'additif choc et 1 % en poids sec par rapport au poids sec de carbonate de calcium, d'un polymère peigne de poids moléculaire 35 000 g/mol, obtenu par un procédé de polymérisation radicalaire contrôlée dans l'eau de:
- 92 % en poids de méthacrylate de méthoxy polyéthylène glycol de poids moléculaire 2 000 g/mol,
- 8 % en poids d'acide acrylique,
totalement neutralisé par la soude.

### Essai n° 14

Cet essai illustre l'invention.
Cet essai met en oeuvre une suspension aqueuse de carbonate de calcium commercialisée par la société OMYA™ sous le nom de Hydrocarb™ 95 T, obtenue par broyage en milieu humide du carbonate de calcium avec un polymère acrylique de l'art antérieur et dont 55 % en poids des particules ont un diamètre inférieur à 1 µm tel que mesuré par un appareil de type Sedigraph™ 5100 commercialisé par la société MICROMERITICS™.

Ladite suspension a été séchée selon la méthode précédemment décrite.
Cet essai met en oeuvre 8 parts de la poudre sèche obtenue et 5 parts d'additif choc, ainsi que 0,05 % en poids d'un polymère peigne de poids moléculaire 35 000 g/mol, obtenu par un procédé de polymérisation radicalaire contrôlée dans l'eau de:
- 92 % en poids de méthacrylate de méthoxy polyéthylène glycol de poids moléculaire 2 000 g/mol,
- 8 % en poids d'acide acrylique,
totalement neutralisé par la soude.
ledit polymère peigne étant introduit directement dans l'extrudeuse sous forme de poudre sèche, avec les autres constituants.

Pour les essais n° 11 à 14, les mélanges secs ont été extrudés selon la méthode décrite précédemment, et les mesures de résistance à l'impact on été réalisées tel qu'indiqué auparavant.

Les résultats figurent dans le tableau 2, où on a également reporté les résultats obtenus pour l'essai n° 1.

**Tableau 2 : composition des différentes formulations thermoplastiques et valeurs des résistances à l'impact correspondantes**

| **Essai n°** | **1** | **11** | **12** | **13** | **14** |
|---|---|---|---|---|---|
| Art Antérieur / Invention (AA / IN) | AA | AA | IN | IN | IN |
| Lacovyl | 100 | 100 | 100 | 100 | 100 |
| Kronos 2200 | 5 | 5 | 5 | 5 | 5 |
| One Pack Baeropan | 2,5 | 2,5 | 2,5 | 2,5 | 2,5 |
| Lacowax | 0,05 | 0,05 | 0,05 | 0,05 | 0,05 |
| Durastrength | 6 | 5 | 5 | 0 | 5 |
| Durastrength + 1 % polymère* | 0 | 0 | 0 | 5 | 0 |
| Hydrocarb 95 T | 8 | 8 | 0 | 8 | 8 |
| Hydrocarb 95 T + 0,7 % polymère* | 0 | 0 | 8 | 0 | 0 |
| Polymère | 0 | 0 | 0 | 0 | 0,05** |
| Impact (kJ/m²) | 9,92 | 9,1 | 10,2 | 9,8 | 10,5 |
| Ecart-type | 0,52 | 0,5 | 0,4 | 0,45 | 0,5 |

| | | | | | |
|---|---|---|---|---|---|
| *polymère désigne le polymère peigne de poids moléculaire 35 000 g/mol, obtenu par un procédé de polymérisation radicalaire contrôlée dans l'eau de 92 % en poids de méthacrylate de méthoxy polyéthylène glycol de poids moléculaire 2 000 g/mol, et 8 % en poids d'acide acrylique. ** 0,05 indique ici le pourcentage en poids sec de polymère peigne par rapport au poids sec total de carbonate de calcium | | | | | |

L'essai n° 11, en comparaison avec l'essai n° 1, illustre la perte de résistance à l'impact induite par la diminution de la quantité de modificateur d'impact.
L'essai n° 12, démontre qu'on peut palier à cette diminution par ajout du polymère peigne, via le carbonate de calcium broyé en milieu humide en présence dudit polymère. Non seulement la résistance à l'impact obtenue est supérieure à celle de la même composition incorporant la même quantité d'additif choc (5 parts selon l'essai n° 11), mais elle est aussi supérieure à celle obtenue pour une composition incorporant une quantité supérieure de modificateur d'impact (6 parts selon l'essai n° 1).
On peut également palier à cette diminution de la résistance à l'impact par ajout du polymère peigne en combinaison sous forme de poudre avec l'additif choc : c'est l'objet de l'essai n° 13.
Enfin, l'essai n° 14 démontre qu'on peut palier à cette diminution par incorporation du polymère peigne sous forme de poudre avec les autres constituants de la composition.
D'autre part, on a vérifié que le module de chacune des compositions thermoplastiques est constant et égal à 1900 ± 100 MPa. Il n'y a donc pas dégradation de la rigidité si on a recours au procédé selon l'invention.

### EXEMPLE 3

Cet exemple illustre le procédé de fabrication de matériaux thermoplastiques, contenant au moins une résine PVC et du carbonate de calcium, matériau thermoplastique dans lequel on a introduit :
- soit le polymère peigne dont l'utilisation fait l'objet de la présente invention sous forme de poudre sèche résultant d'une étape de broyage en milieu sec de carbonate de calcium en présence dudit polymère,
- soit un polymère de l'art antérieur, sous forme de poudre sèche résultant d'une étape de broyage en milieu sec de carbonate de calcium en présence de cedit polymère.

### Essai n°15

Cet essai illustre l'art antérieur.
Cet essai met en oeuvre du carbonate de calcium commercialisée par la société OMYA™ sous le nom de Hydrocarb™ 75 T, obtenue par broyage en milieu sec de carbonate de calcium avec 1 500 ppm de monopropylène glycol, et dont 50 % en poids des particules ont un diamètre inférieur à 1 µm tel que mesuré par un appareil de type Sedigraph™ 5100 commercialisé par la société MICROMERITICS™.
Cet essai met en oeuvre 8 parts de la poudre sèche obtenue et 6 parts d'additif choc.

### Essai n° 16

Cet essai illustre l'invention.
Cet essai met en oeuvre du carbonate de calcium dont 50 % en poids des particules ont un diamètre inférieur à 1 µm tel que mesuré par un appareil de type Sedigraph™ 5100 commercialisé par la société MICROMERITICS™, obtenue par broyage en milieu sec de carbonate de calcium avec 1 500 ppm de monopropylène glycol, et 0,7 % en poids sec, par rapport au poids sec de carbonate de calcium, d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 2 000 g/mol,
- 8 % en poids d'acide acrylique,
totalement neutralisé par la soude.
Cet essai met en oeuvre 8 parts de la poudre sèche obtenue et 6 parts d'additif choc.

Pour les essais n° 15 et 16, les mélanges secs ont été extrudés selon la méthode décrite précédemment, et les mesures de résistance à l'impact on été réalisées tel qu'indiqué auparavant.
Les résultats figurent dans le tableau 3.

**Tableau 3 : composition des différentes formulations thermoplastiques et valeurs des résistances à l'impact correspondantes**

| **Essai n°** | **15** | **16** |
|---|---|---|
| Art Antérieur / Invention (AA/IN) | AA | IN |
| Lacovyl | 100 | 100 |
| Kronos 2200 | 5 | 5 |
| One Pack Baeropan | 2,5 | 2,5 |
| Lacowax | 0,05 | 0,05 |
| Durastrength | 6 | 6 |
| Hydrocarb 75 T | 8 | 0 |
| Hydrocarb 75 T + 0,7 % polymère* | 0 | 8 |
| Impact (kJ/m²) | 9,0 | 9,8 |
| Ecart-type | 0,3 | 0,5 |

| | | |
|---|---|---|
| *polymère désigne le polymère peigne de poids moléculaire 35 000 g/mol, obtenu par un procédé de polymérisation radicalaire contrôlée dans l'eau de 92 % en poids de méthacrylate de méthoxy polyéthylène glycol de poids moléculaire 2 000 g/mol, et 8 % en poids d'acide acrylique. | | |

Ces résultats démontrent que l'addition du polymère peigne précité dans la formulation thermoplastique, via le carbonate de calcium qu'il a permis de broyer en milieu sec avec l'aide de monopropylène glycol, permet d'améliorer la résistance à l'impact de la composition thermoplastique obtenue.
D'autre part, on a vérifié que le module de chacune des compositions thermoplastiques est constant et égal à 1900 ± 100 MPa. Il n'y a donc pas diminution de la rigidité des compositions thermoplastiques.

### EXEMPLE 4

Cet exemple illustre le procédé de fabrication de matériaux thermoplastiques, contenant au moins une résine PVC et du carbonate de calcium naturel ou précipité, matériau thermoplastique dans lequel on a introduit :
- soit le polymère peigne dont l'utilisation fait l'objet de la présente invention sous forme de poudre sèche résultant de l'introduction dudit polymère dans une suspension aqueuse de carbonate de calcium naturel ou précipité, et séchage de la suspension obtenue,
- soit un polymère de l'art antérieur, sous forme de poudre sèche résultant de l'introduction (cas du carbonate de calcium précipité) d'un polymère de l'art antérieur dans une suspension aqueuse de carbonate de calcium naturel ou précipité, et séchage de la suspension obtenue.

### Essai n° 17

Cet essai illustre l'art antérieur.
Cet essai met en oeuvre un carbonate de calcium précipité commercialisé par la société SOLVAY™ sous le nom de Socal™ 312 S, sous forme d'une dispersion aqueuse réalisée en présence de 0,7 % en poids sec par rapport au poids sec de carbonate de calcium d'un polymère acrylique de l'art antérieur.
Ladite suspension a été séchée selon la méthode précédemment décrite.
Cet essai met en oeuvre 8 parts de la poudre sèche obtenue et 6 parts d'additif choc.

### Essai n° 18

Cet essai illustre l'invention.
Cet essai met en oeuvre un carbonate de calcium précipité commercialisé par la société SOLVAY™ sous le nom de Socal™ 312 S, sous forme d'une dispersion aqueuse dans laquelle on a ajouté 0,7 % en poids sec, par rapport au poids sec de carbonate de calcium, d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 2 000 g/mol,
- 8 % en poids d'acide acrylique,
totalement neutralisé par la soude.

Ladite suspension a été séchée selon la méthode précédemment décrite.
Cet essai met en oeuvre 8 parts de la poudre sèche obtenue et 6 parts d'additif choc.

### Essai n° 19

Cet essai illustre l'invention.
Cet essai met en oeuvre un carbonate de calcium naturel commercialisé par la société OMYA™ sous le nom de Omyacarb™ 95 T, sous forme d'une dispersion aqueuse dans laquelle on a ajouté 0,7 % en poids sec, par rapport au poids sec de carbonate de calcium, d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 2 000 g/mol,
- 8 % en poids d'acide acrylique,
totalement neutralisé par la soude.
Ladite suspension a été séchée selon la méthode précédemment décrite.
Cet essai met en oeuvre 8 parts de la poudre sèche obtenue et 6 parts d'additif choc.

Les résultats figurent dans le tableau 4.

**Tableau 4 : composition des différentes formulations thermoplastiques et valeurs des résistances à l'impact correspondantes**

| **Essai n°** | **17** | **18** | **1** | **19** |
|---|---|---|---|---|
| Art Antérieur / Invention (AA / IN) | AA | IN | AA | IN |
| Lacovyl | 100 | ioo | 100 | 100 |
| Kronos 2200 | 5 | 5 | 5 | 5 |
| One Pack Baeropan | 2,5 | 2,5 | 2,5 | 2,5 |
| Lacowax | 0,05 | 0,05 | 0,05 | 0,05 |
| Durastrength | 6 | 6 | 6 | 6 |
| Socal 312 S | 8 | 0 | 0 | 0 |
| Socal 312 S + 0,7 % polymère* | 0 | 8 | 0 | 0 |
| Hydrocarb 95 T | 0 | 0 | 8 | 0 |
| Hydrocarb 95 T + 0,7 % polymère* | 0 | 0 | 0 | 8 |
| Impact (kJ/m²) | 11,0 | 12,0 | 9,92 | 10,9 |
| Ecart-type | 0,8 | 0,5 | 0,52 | 0,6 |

| | | | | |
|---|---|---|---|---|
| *polymère désigne le polymère peigne de poids moléculaire 35 000 g/mol, obtenu par un procédé de polymérisation radicalaire contrôlée dans l'eau de 92 % en poids de méthacrylate de méthoxy polyéthylène glycol de poids moléculaire 2 000 g/mol, et 8 % en poids d'acide acrylique. | | | | |

Ces résultats démontrent que l'addition du polymère peigne précité dans la formulation thermoplastique, via le carbonate de calcium naturel ou précipité, avec lequel il a été mélangé en milieu aqueux puis séché, permet d'améliorer la résistance à l'impact de la composition thermoplastique obtenue, par rapport à la même composition mais ne contenant pas le polymère peigne.

D'autre part, on a vérifié que le module de chacune des compositions thermoplastiques est constant et égal à 1900 ± 100 MPa. Il n'y a donc pas diminution de la rigidité des compositions thermoplastiques.

### EXEMPLE 5

Cet exemple illustre le procédé de fabrication de matériaux thermoplastiques, contenant au moins une résine PVC et du carbonate de calcium naturel, matériau thermoplastique dans lequel on a introduit :
- soit le polymère peigne dont l'utilisation fait l'objet de la présente invention sous forme de poudre sèche résultant de l'introduction dudit polymère dans une suspension aqueuse de carbonate de calcium naturel qui a été broyé au préalable avec un agent d'aide au broyage du type polyacrylique de l'art antérieur, et séchage de la suspension obtenue (essais 22 à 28),
- soit le polymère peigne dont l'utilisation fait l'objet de la présente invention sous forme de poudre sèche résultant de l'introduction dudit polymère pendant une étape de dispersion aqueuse de carbonate de calcium naturel (essai 21),
- soit un polymère de l'art antérieur, sous forme de poudre sèche résultant de l'introduction d'un polymère de l'art antérieur dans une suspension aqueuse de carbonate de calcium naturel ou précipité, et séchage de la suspension obtenue (essai 20).

### Essai n° 20

Cet essai illustre l'art antérieur.
Cet essai met en oeuvre une suspension aqueuse d'un carbonate de calcium qui est une calcite d'Orgon (France), qui a été broyée avec 0,7 % en poids sec d'un homopolymère de l'acide acrylique, par rapport au poids sec de carbonate de calcium.
Ladite suspension a été séchée selon la méthode précédemment décrite.
Cet essai met en oeuvre 8 parts de la poudre sèche obtenue et 6 parts d'additif choc.

### Essai n° 21

Cet essai illustre l'invention.
Cet essai met en oeuvre une suspension aqueuse d'un carbonate de calcium qui est une calcite d'Orgon (France), qui est dispersée avec 0,7 % en poids sec, par rapport au poids sec de carbonate de calcium, d'un polymère peigne de poids moléculaire 58 000 g/mol, obtenu par un procédé de polymérisation radicalaire contrôlée dans l'eau de :
- 80 % en poids de méthacrylate de méthoxy polyéthylène glycol de poids moléculaire 2 000 g/mol,
- 13,6 % en poids d'acide acrylique,
- 4,9 % en poids d'acide méthacrylique,
- 1,5 % en poids d'hémimaléate de butoxypolyoxypropylène comportant 19 motifs d'oxypropylène,
totalement neutralisé par le potassium.
Ladite suspension a été séchée selon la méthode précédemment décrite.
Cet essai met en oeuvre 8 parts de la poudre sèche obtenue et 6 parts d'additif choc.

### Essai n° 22

Cet essai illustre l'invention.
Cet essai met en oeuvre une suspension aqueuse d'un carbonate de calcium qui est une calcite d'Orgon (France), qui a été broyée avec 0,7 % en poids sec d'un homopolymère de l'acide acrylique, par rapport au poids sec de carbonate de calcium.
On a ensuite introduit dans ladite suspension 0,7 % en poids sec, par rapport au poids sec de carbonate de calcium, d'un polymère peigne de poids moléculaire 107 700 g/mol, obtenu par un procédé de polymérisation radicalaire contrôlée dans l'eau de :
- 91,5 % en poids de méthacrylate de méthoxy polyéthylène glycol de poids moléculaire 5 000 g/mol,
- 6 % en poids de phosphate de méthacrylate d'éthylène glycol,
- 1,8 % en poids d'acide méthacrylique,
- 0,7 % en poids d'hémimaléate de butoxypolyoxypropylène comportant 19 motifs d'oxypropylène,
dont 80 % en mole des sites carboxyliques ont été neutralisés par le sodium. Ladite suspension a été séchée selon la méthode précédemment décrite.
Cet essai met en oeuvre 8 parts de la poudre sèche obtenue et 6 parts d'additif choc.

### Essai n° 23

Cet essai illustre l'invention.
Cet essai met en oeuvre une suspension aqueuse d'un carbonate de calcium qui est une calcite d'Orgon (France), qui a été broyée avec 0,7 % en poids sec d'un homopolymère de l'acide acrylique, par rapport au poids sec de carbonate de calcium.
On a ensuite introduit dans ladite suspension 0,7 % en poids sec, par rapport au poids sec de carbonate de calcium, d'un polymère peigne de poids moléculaire 200 950 g/mol, obtenu par un procédé de polymérisation radicalaire contrôlée dans l'eau de :
- 82,5 % en poids de méthacrylate de méthoxy polyéthylène glycol de poids moléculaire 5 000 g/mol,
- 6 % en poids de phosphate de méthacrylate d'éthylène glycol,
- 1,6 % en poids d'acide méthacrylique,
- 9,2 % en poids de méthacrylate de méthyle,
- 0,7 % en poids d'hémimaléate de butoxypolyoxypropylène comportant 19 motifs d'oxypropylène,
totalement neutralisé par la soude.
Ladite suspension a été séchée selon la méthode précédemment décrite.
Cet essai met en oeuvre 8 parts de la poudre sèche obtenue et 6 parts d'additif choc.

### Essai n° 24

Cet essai illustre l'invention.
Cet essai met en oeuvre une suspension aqueuse d'un carbonate de calcium qui est une calcite d'Orgon (France), qui a été broyée avec 0,7 % en poids sec d'un homopolymère de l'acide acrylique, par rapport au poids sec de carbonate de calcium.
On a ensuite introduit dans ladite suspension 0,7 % en poids sec, par rapport au poids sec de carbonate de calcium, d'un polymère peigne de poids moléculaire 54 650 g/mol, obtenu par un procédé de polymérisation radicalaire contrôlée dans l'eau de :
- 78,2 % en poids de méthacrylate de méthoxy polyéthylène glycol de poids moléculaire 5 000 g/mol,
- 15 % en poids d'acide acrylique,
- 1,5 % en poids d'acide méthacrylique,
- 4,6 % en poids de méthacrylate de stéaryle,
- 0,7 % en poids d'hémimaléate de butoxypolyoxypropylène comportant 19 motifs d'oxypropylène,
totalement neutralisé par la soude.
Ladite suspension a été séchée selon la méthode précédemment décrite.
Cet essai met en oeuvre 8 parts de la poudre sèche obtenue et 6 parts d'additif choc.

### Essai n° 25

Cet essai illustre l'invention.
Cet essai met en oeuvre une suspension aqueuse d'un carbonate de calcium qui est une calcite d'Orgon (France), qui a été broyée avec 0,7 % en poids sec d'un homopolymère de l'acide acrylique, par rapport au poids sec de carbonate de calcium.
On a ensuite introduit dans ladite suspension 0,7 % en poids sec, par rapport au poids sec de carbonate de calcium, d'un polymère peigne de poids moléculaire 101 650 g/mol, obtenu par un procédé de polymérisation radicalaire contrôlée dans l'eau de :
- 80,7 % en poids de méthacrylate de méthoxy polyéthylène glycol de poids moléculaire 5 000 g/mol,
- 8,1 % en poids d'acide acrylique,
- 1,6 % en poids d'acide méthacrylique,
- 9 % en poids de méthacrylate de tristyrylphénol ayant 40 motifs d'oxyde d'éthylène,
- 0,6 % en poids d'hémimaléate de butoxypolyoxypropylène comportant 19 motifs d'oxypropylène,
totalement neutralisé par la soude.

Ladite suspension a été séchée selon la méthode précédemment décrite.
Cet essai met en oeuvre 8 parts de la poudre sèche obtenue et 6 parts d'additif choc.

### Essai n° 26

Cet essai illustre l'invention.
Cet essai met en oeuvre une suspension aqueuse d'un carbonate de calcium qui est une calcite d'Orgon (France), qui a été broyée avec 0,7 % en poids sec d'un homopolymère de l'acide acrylique, par rapport au poids sec de carbonate de calcium.
On a ensuite introduit dans ladite suspension 0,7 % en poids sec, par rapport au poids sec de carbonate de calcium, d'un polymère peigne de poids moléculaire 91 500 g/mol, obtenu par un procédé de polymérisation radicalaire contrôlée dans l'eau de :
- 86,6 % en poids de méthacrylate de méthoxy polyéthylène glycol de poids moléculaire 5 000 g/mol,
- 6,0 % en poids d'acide acrylique,
- 1,7 % en poids d'acide méthacrylique,
- 5 % en poids d'un monomère sililé commercialisé par la société DEGUSSA™ sous le nom de Dynasylan™ Memo,
- 0,6 % en poids d'hémimaléate de butoxypolyoxypropylène comportant 19 motifs d'oxypropylène,
totalement neutralisé par la soude.

Ladite suspension a été séchée selon la méthode précédemment décrite.
Cet essai met en oeuvre 8 parts de la poudre sèche obtenue et 6 parts d'additif choc.

### Essai n° 27

Cet essai illustre l'invention.
Cet essai met en oeuvre une suspension aqueuse d'un carbonate de calcium qui est une calcite d'Orgon (France), qui a été broyée avec 0,7 % en poids sec d'un homopolymère de l'acide acrylique, par rapport au poids sec de carbonate de calcium.

On a ensuite introduit dans ladite suspension 0,7 % en poids sec, par rapport au poids sec de carbonate de calcium, d'un polymère peigne de poids moléculaire 101 650 g/mol, obtenu par un procédé de polymérisation radicalaire contrôlée dans l'eau de :
- 81,7 % en poids de méthacrylate de méthoxy polyéthylène glycol de poids moléculaire 5 000 g/mol,
- 6,0 % en poids d'acide acrylique,
- 1,6 % en poids d'acide méthacrylique,
- 10 % en poids de chlorure de méthacryloyloxyéthyltriméthylammonium,
- 0,7 % en poids d'hémimaléate de butoxypolyoxypropylène comportant 19 motifs d'oxypropylène,
totalement neutralisé par la soude.

Ladite suspension a été séchée selon la méthode précédemment décrite.
Cet essai met en oeuvre 8 parts de la poudre sèche obtenue et 6 parts d'additif choc.

### Essai n° 28

Cet essai illustre l'invention.
Cet essai met en oeuvre une suspension aqueuse d'un carbonate de calcium qui est une calcite d'Orgon (France), qui a été broyée avec 0,7 % en poids sec d'un homopolymère de l'acide acrylique, par rapport au poids sec de carbonate de calcium.
On a ensuite introduit dans ladite suspension 0,7 % en poids sec, par rapport au poids sec de carbonate de calcium, d'un polymère peigne de poids moléculaire 21 100 g/mol, obtenu par un procédé de polymérisation radicalaire contrôlée dans l'eau de :
- 78,9 % en poids de méthacrylate de méthoxy polyéthylène glycol de poids moléculaire 2 000 g/mol,
- 18,2 % en poids d'acide méthacrylique,
- 2,9 % en poids d'hémimaléate de butoxypolyoxypropylène comportant 19 motifs d'oxypropylène,
totalement neutralisé par la soude.
Ladite suspension a été séchée selon la méthode précédemment décrite.

Cet essai met en oeuvre 8 parts de la poudre sèche obtenue et 6 parts d'additif choc.

Les résultats figurent dans le tableau 5.

**Tableau 5 : composition des différentes formulations thermoplastiques et valeurs des résistances à l'impact correspondantes**

| **Essai n°** | **20** | **21** | **22** | **23** | **24** | **25** | **26** | **27** | **28** |
|---|---|---|---|---|---|---|---|---|---|
| Art Antérieur / Invention (AA / IN) | AA | IN | IN | IN | IN | IN | IN | IN | IN |
| Lacovyl | 100 | 100 | 100 | 100 | 100 | 100 | 100 | 100 | 100 |
| Kronos 2200 | 5 | 5 | 5 | 5 | 5 | 5 | 5 | 5 | 5 |
| One Pack Baeropan | 2,5 | 2,5 | 2,5 | 2,5 | 2,5 | 2,5 | 2,5 | 2,5 | 2,5 |
| Lacowax | 0,05 | 0,05 | 0,05 | 0,05 | 0,05 | 0,05 | 0,05 | 0,05 | 0,05 |
| Durastrength | 6 | 6 | 6 | 6 | 6 | 6 | 6 | 6 | 6 |
| CaCO₃ broyé avec 0,7 % de polymère de l'art antérieur | 16 | 0 | 0 | 0 | 0 | 0 | 0 | 0 | 0 |
| CaCO₃ dispersé avec 0,7 % de polymère de l'invention | 0 | 16 | 0 | 0 | 0 | 0 | 0 | 0 | 0 |
| CaCO₃ broyé avec 0,7 % de polymère de l'art antérieur puis ajout de 0,7 % de polymère selon l'invention | 0 | 0 | 18 | 18 | 18 | 18 | 18 | 18 | 18 |
| Impact (kJ/m²) | 19,9 | 21,3 | 20,1 | 19,9 | 20,5 | 20,6 | 19,9 | 20,4 | 19,9 |

Ces résultats démontrent que l'addition du polymère peigne précité dans la formulation thermoplastique, via le carbonate de calcium naturel avec lequel il a été ajouté ou qu'il a permis de disperser en milieu aqueux, puis séché, permet :
- d'obtenir pour la formulation selon l'invention une résistance à l'impact au moins égale à celle obtenue pour la formulation de l'art antérieur,
- et d'augmenter la part de carbonate de calcium dans la composition selon l'invention.

### EXEMPLE 6

Cet exemple illustre le procédé de fabrication de matériaux thermoplastiques, contenant au moins une résine polyéthylène et du carbonate de calcium naturel, matériau thermoplastique dans lequel on a introduit :
- soit le polymère peigne dont l'utilisation fait l'objet de la présente invention sous forme de poudre sèche résultant de l'introduction dudit polymère dans une suspension aqueuse de carbonate de calcium naturel qui a été broyé au préalable avec ledit polymère, puis séchage de ladite suspension
- soit un polymère de l'art antérieur, sous forme de poudre sèche résultant de l'introduction d'un polymère dans une suspension aqueuse de carbonate de calcium naturel qui a été broyé au préalable avec ledit polymère, puis séchage de ladite suspension.

Pour les essais 29 et 30, on réalise des films polyéthylène chargés, par extrusion de la résine en présence du carbonate de calcium broyé avec le polymère selon l'invention ou selon l'art antérieur.
La résine est une résine de basse densité linéaire (LLDPE) d'indice de fluidité égal à 1 (ou MFI, selon l'appellation bien connue de l'homme du métier) et de densité égale à 0,92 g/cm³.
Les paramètres de l'extrusion sont :
- vitesse de 70 tours / minute,
- pression de 300 bars,
- température de 200 °C.
On obtient ainsi des films ayant une épaisseur de 45 µm.

### Essai n° 29

Cet essai illustre l'art antérieur.
Cet essai met en oeuvre une suspension aqueuse d'un carbonate de calcium qui est une calcite d'Orgon (France), qui a été broyée avec 0,7 % en poids sec d'un homopolymère de l'acide acrylique, par rapport au poids sec de carbonate de calcium.
Ladite suspension a été séchée selon la méthode précédemment décrite.
Cet essai met en oeuvre 14 % en poids sec de carbonate de calcium par rapport au poids sec de résine polyéthylène.

### Essai n° 30

Cet essai illustre l'invention.
Cet essai met en oeuvre une suspension aqueuse d'un carbonate de calcium qui est une calcite d'Orgon (France), qui est dispersée avec 0,7 % en poids sec, par rapport au poids sec de carbonate de calcium, d'un polymère peigne de poids moléculaire 58 000 g/mol, obtenu par un procédé de polymérisation radicalaire contrôlée dans l'eau de:
- 92 % en poids de méthacrylate de méthoxy polyéthylène glycol de poids moléculaire 5 000 g/mol,
- 8 % en poids d'acide acrylique,
totalement neutralisé par la soude.
Ladite suspension a été séchée selon la méthode précédemment décrite.
Cet essai met en oeuvre 14 % en poids sec de carbonate de calcium par rapport au poids sec de résine polyéthylène.

Pour les essais n° 29 et 30, on détermine la résistance à l'impact des films obtenus par le test dit "dart drop" bien connu de l'homme du métier, exécuté selon la norme ASTM D 1709/A.

On obtient une valeur de 206 grammes pour l'essai n° 29 et une valeur de 216 grammes pour l'essai n° 30. Ceci démontre donc bien que la mise en oeuvre du polymère selon l'invention améliore la résistance à l'impact du film polyéthylène chargé selon la présente invention.

## Revendications

1. Procédé de fabrication d'un matériau thermoplastique, contenant :
(a) au moins une résine thermoplastique,
(b) au moins une charge minérale ou carbonée,
(c) éventuellement au moins un autre additif choisi parmi un stabilisant thermique et / ou un stabilisant UV et / ou un lubrifiant et / ou un modificateur de rhéologie et / ou un modificateur d'impact de nature organique,
et **caractérisé en ce qu'**est introduit dans la composition précitée au moins un polymère peigne, contenant au moins une fonction oxyde de polyalkylène greffée sur au moins un monomère insaturé éthylénique.

2. Procédé selon la revendication 1, **caractérisé en ce que** ledit polymère peigne est introduit :
1. sous forme de poudre sèche, résultant des étapes de :
- broyage et / ou dispersion en milieu aqueux de la charge minérale ou carbonée en présence dudit polymère, et éventuellement en présence d'au moins un autre agent de broyage en voie humide et / ou d'au moins un autre agent dispersant,
- séchage de la dispersion et / ou de la suspension aqueuse de matière minérale ou carbonée obtenue, avec introduction éventuelle dudit polymère, traitement puis éventuellement classification de la poudre obtenue
2. et / ou sous forme de poudre sèche; résultant des étapes de :
- broyage à sec de la charge minérale ou carbonée en présence dudit polymère, et éventuellement en présence d'au moins un autre agent de broyage à sec,
- traitement puis classification éventuelle de la poudre obtenue,
3. et / ou sous forme de poudre sèche, résultant des étapes de :
- introduction dudit polymère dans une dispersion et / ou dans une suspension aqueuse contenant la charge minérale ou carbonée,
- séchage de la dispersion et / ou de la suspension aqueuse de matière minérale ou carbonée obtenue, avec introduction éventuelle dudit polymère, puis traitement et éventuellement classification de la poudre obtenue,
4. et / ou sous forme de poudre sèche mélangée avec les autres constituants a), b) et c),
5. et / ou sous forme de poudre sèche résultant des étapes de :
- introduction dudit polymère dans une suspension et / ou une émulsion d'au moins un additif choisi parmi un stabilisant thermique et / ou un stabilisant UV et / ou un lubrifiant et / ou un modificateur de rhéologie et / ou un modificateur d'impact de nature organique,
- séchage de la suspension et / ou de l'émulsion obtenue en présence éventuelle dudit polymère, puis éventuellement classification de la poudre obtenue,.

3. Procédé selon l'une des revendications 1 ou 2, **caractérisé en ce que** la résine thermoplastique est choisie parmi les résines halogénées, et préférentiellement le PVC, le polychlorure de vinyle surchloré (PVCC), le polyfluorure de vinylidène (PVDF), ou choisie parmi les résines styréniques, et préférentiellement les copolymères styrène-butadiène à haut taux de styrène (HIPS), les copolymères blocs de type Kraton™, les résines du type styrène-acrylonitrile, les résines acrylate-butadiène-styrène, les copolymères styrène méthylméthacrylate, ou choisie parmi les résines acryliques, et préférentiellement le polyméthacrylate de méthyle, ou choisie parmi les polyoléfines, et préférentiellement les polyéthylènes ou les polypropylènes, ou choisie parmi les résines polycarbonates, ou choisie parmi les résines polyesters insaturées, et préférentiellement les polyéthylène téréphthalate et les polybutylène téréphthalate, ou choisie parmi les résines polyuréthanes, ou choisie parmi les résines polyamides, ou les mélanges de ces résines, et préférentiellement **en ce que** la résine thermoplastique est choisie parmi les résines halogénées, et préférentiellement le PVC, le polychlorure de vinyle surchloré (PVCC), le polyfluorure de vinylidène (PVDF), ou les résines acryliques, et préférentiellement le polyméthacrylate de méthyle, ou choisie parmi les résines polycarbonates, ou choisie parmi les résines polyesters insaturées, et préférentiellement les polyéthylène téréphthalate et les polybutylène téréphthalate, et très préférentiellement **en ce que** cette résine thermoplastique est du PVC.

4. Procédé selon l'une des revendications 1 à 3, **caractérisé en ce que** la charge minérale ou carbonée est choisie parmi le carbonate de calcium naturel ou synthétique, les dolomies, le kaolin, le talc, le gypse, l'oxyde de titane, le blanc satin ou encore le trihydroxyde d'aluminium, le mica, le noir de carbone et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, préférentiellement **en ce que** la charge minérale ou carbonée est une charge minérale choisie parmi le carbonate de calcium naturel ou synthétique, le talc et les mélanges de ces charges, très préférentiellement **en ce que** la charge minérale ou carbonée est une charge minérale qui est un carbonate de calcium naturel ou synthétique ou leurs mélanges, extrêmement préférentiellement en ce que la charge minérale ou carbonée est une charge minérale qui est un carbonate de calcium naturel choisi parmi le marbre, la calcite, la craie ou leurs mélanges.

5. Procédé selon l'une des revendications 1 à 4, **caractérisé en ce que** le modificateur de choc de nature organique est choisi parmi les additifs chocs du type coeur-écorce, ou les polyoléfines chlorées, ou les caoutchoucs styrène-butadiène (SBR), styrène-butadiène-styrène (SBS), les polyacétates de vinyle, et leurs mélanges, et préférentiellement **en ce que** le modificateur de choc organique est choisi parmi les additifs choc du type coeur-écorce ou les polyoléfines chlorées et leurs mélanges, et très préférentiellement **en ce que** le modificateur de choc organique est choisi parmi les additifs choc du type coeur-écorce de nature acrylique, styrénique, butadiénique, et de manière extrêmement préférentielle **en ce que** ledit additif choc de type coeur-écorce possède un coeur élastomérique à base d'acrylate de butyle ou possède un coeur élastomérique à base de polybutadiène et une écorce à base de polyméthacrylate ou de polystyrène.

6. Procédé selon l'une des revendications 1 à 5, **caractérisé en ce qu'**il met en oeuvre :
(a) de 0,1 à 99 % en poids sec d'au moins une résine thermoplastique, par rapport au poids total de la formulation thermoplastique,
(b) de 0,1 à 90 % en poids sec d'au moins une charge minérale ou carbonée, par rapport au poids total de la formulation thermoplastique,
(c) de 0 à 20 %, préférentiellement de 5 à 20 % en poids sec d'un stabilisant thermique et / ou d'un stabilisant UV et / ou d'un lubrifiant et / ou d'un modificateur de rhéologie et / ou d'un modificateur d'impact de nature organique, par rapport au poids total de la formulation thermoplastique,
(d) de 0,01 à 5 %, préférentiellement 0,1 à 3 %, en poids sec d'un polymère peigne constitué d'au moins un monomère à insaturation éthylénique sur lequel est greffé au moins une fonction oxyde de polyalkylène, par rapport au poids sec de charge minérale ou carbonée.

7. Procédé selon l'une des revendications 1 à 6, **caractérisé en ce que** les polymères peigne contiennent au moins un monomère de formule (I) : 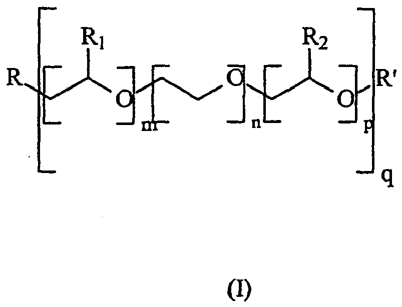 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges.

8. Procédé selon l'une des revendications 1 à 7, caractérisé en ce les polymères peigne se composent :
(a) d'au moins un monomère anionique et à fonction carboxylique ou dicarboxylique ou phosphorique ou phosphonique ou sulfonique ou leur mélange,
(b) d'au moins un monomère non ionique, le monomère non ionique étant constitué d'au moins un monomère de formule (I) : 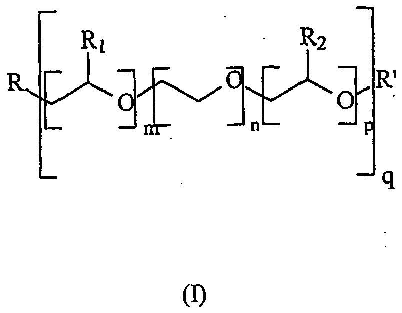 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,.
ou du mélange de plusieurs monomères de formule (I),
(c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] diméthyl ammonium, lé chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou du mélange de plusieurs de ces monomères,
(d) éventuellement d'au moins un monomère possédant au moins deux insaturations éthyléniques,

9. Procédé selon l'une des revendications 1 à 8, **caractérisé en ce que** ledit polymère peigne est constitué :
a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,
b) d'au moins un monomère à insaturation éthylénique non ionique de formule (I): 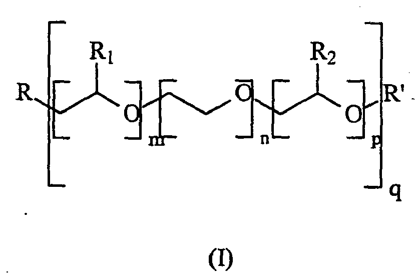 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,.
ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré, ou encore d'au moins un monomère organosililé choisi de manière préférentielle parmi les molécules de formules (IIa) ou (IIb) :
avec formule (IIa) 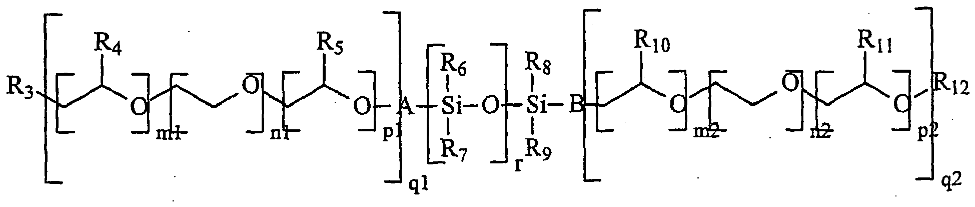 dans laquelle :
- m₁, p₁, m₂ et p₂ représentent un nombre de motifs d'oxyde d'alkylène inférieur ou égal à 150,
- n₁ et n₂ représentent un nombre de motifs d'oxyde d'éthylène inférieur ou égal à 150,
- q₁ et q₂ représentent un nombre entier au moins égal à 1 et tel que 0 ≤ (m₁+n₁+p₁)q₁ ≤ 150 et 0 ≤ (m₂+n₂+p₂)q₂ ≤ 150,
- r représente un nombre tel que 1 ≤ r ≤ 200,
- R₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R₄, R₅, R₁₀ et R₁₁, représentent l'hydrogène ou le radical méthyle ou éthyle,
- R₆, R₇, R₈ et R₉, représentent des groupements linéaires ou ramifiés alkyle, ou aryle, ou alkylaryle, ou arylalkyle ayant 1 à 20 atomes de carbone, ou leur mélange,
- R₁₂ représente un radical hydrocarboné ayant 1 à 40 atomes de carbone,
- A et B sont des groupements éventuellement présents, qui représentent alors un radical hydrocarboné ayant 1 à 4 atomes de carbone,
avec formule (IIb)
R - A - Si (OB)₃
dans laquelle :
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,
ou du mélange de plusieurs de ces monomères,
d) éventuellement d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) : 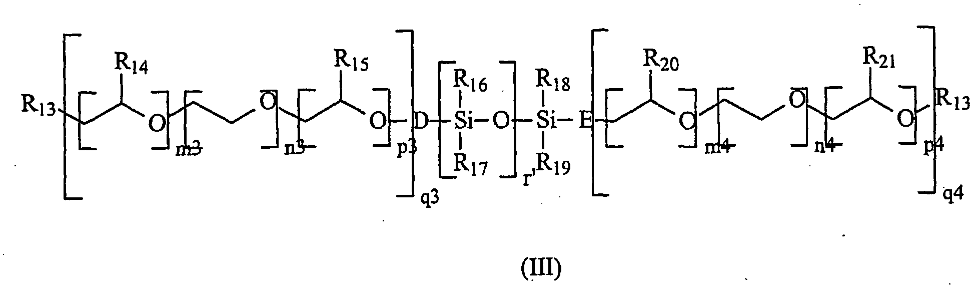 dans laquelle :
- m₃, p₃, m₄ et p₄ représentent un nombre de motifs d'oxyde d'alkylène inférieur ou égal à 150,
- n₃ et n₄ représentent un nombre de motifs d'oxyde d'éthylène inférieur ou égal à 150,
- q₃ et q₄ représentent un nombre entier au moins égal à 1 et tel que 0 ≤ (m₃+n₃+p₃)q₃ ≤ 150 et 0 ≤ (m₄+n₄+p₄)q₄ ≤ 150,
- r' représente un nombre tel que 1 ≤ r' ≤ 200,
- R₁₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R₁₄, R₁₅, R₂₀ et R₂₁, représentent l'hydrogène ou le radical méthyle ou éthyle,
- R₁₆, R₁₇, R₁₈ et R₁₉, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,
ou du mélange de plusieurs de ces monomères,

10. Procédé selon l'une des revendications 1 à 9, **caractérisé en ce que** ledit polymère peigne est constitué, exprimé en poids :
a) de 2 % à 95 % et encore plus particulièrement de 5 % à 90 % d'au moins un monomère anionique à insaturation éthylénique et à fonction monocarboxylique choisi parmi les monomères à insaturation éthylénique et à fonction monocarboxylique tels que l'acide acrylique ou méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,
b) de 2 % à 95 % et encore plus particulièrement de 5 % à 90 % d'au moins un monomère à insaturation éthylénique non ionique de formule (I) : 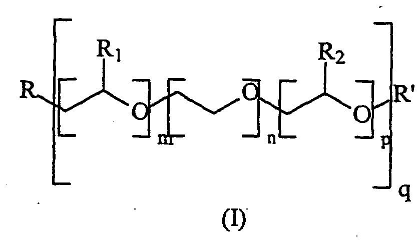 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
ou du mélange de plusieurs monomères de formule (I),
c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'un monomère organofluoré, ou encore d'un monomère organosililé choisi de manière préférentielle parmi les molécules de formules (IIa) ou (IIb) :
avec formule (IIa) 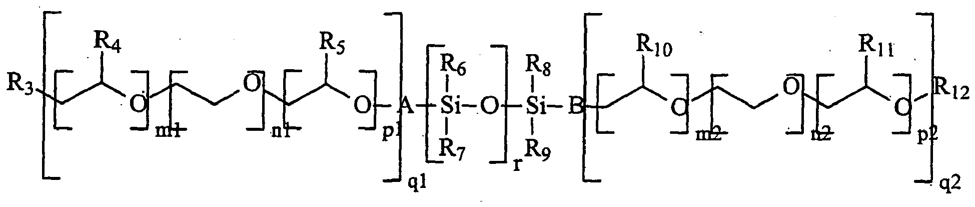 dans laquelle :
- m₁, p₁, m₂ et p₂ représentent un nombre de motifs d'oxyde d'alkylène inférieur ou égal à 150,
- n₁ et n₂ représentent un nombre de motifs d'oxyde d'éthylène inférieur ou égal à 150,
- q₁ et q₂ représentent un nombre entier au moins égal à 1 et tel que 0 ≤ (m₁+n₁+p₁)q₁ ≤ 150 et 0 ≤ (m₂+n₂+p₂)q₂ ≤ 150,
- r représente un nombre tel que 1 ≤ r ≤ 200,
- R₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R₄, R₅, R₁₀ et R_{11,} représentent l'hydrogène ou le radical méthyle ou éthyle,
- R₆, R₇, R₈ et R₉, représentent des groupements linéaires ou ramifiés alkyle, ou aryle, ou alkylaryle, ou arylalkyle ayant 1 à 20 atomes de carbone, ou leur mélange,
- R₁₂ représente un radical hydrocarboné ayant 1 à 40 atomes de carbone,
- A et B sont des groupements éventuellement présents, qui représentent alors un radical hydrocarboné ayant 1 à 4 atomes de carbone,
avec formule (IIb)
R-A-Si(OB)₃
dans laquelle :
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,
ou du mélange de plusieurs de ces monomères,
d) de 0 % à 3 % d'au moins un monomère réticulant choisi d'une manière non limitative dans le groupe constitué par le diméthacrylate d'éthylène glycol, le triméthylolpropanetriacrylate, l'acryate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) : 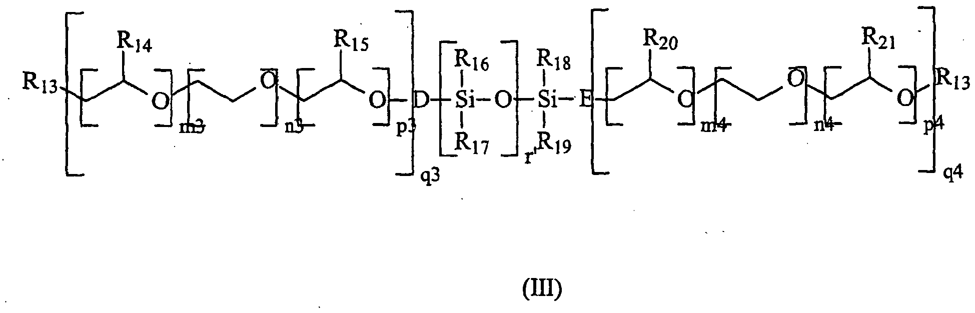 dans laquelle :
- m₃, p₃, m₄ et p₄ représentent un nombre de motifs d'oxyde d'alkylène inférieur ou égal à 150,
- n₃ et n₄ représentent un nombre de motifs d'oxyde d'éthylène inférieur ou égal à 150,
- q₃ et q₄ représentent un nombre entier au moins égal à 1 et tel que 0 ≤ (m₃+n₃+p₃)q₃ ≤ 150 et 0 ≤ (m₄+n₄+p₄)q₄ ≤ 150,
- r' représente un nombre tel que 1 ≤ r' ≤ 200,
- R₁₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels. que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R₁₄, R₁₅, R₂₀ et R₂₁, représentent l'hydrogène ou le radical méthyle ou éthyle,
- R₁₆, R₁₇, Ris et R₁₉, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,
ou du mélange de plusieurs de ces monomères,
le total des proportions des constituants a), b), c), et d) étant égal à 100 %.

11. Procédé selon l'une des revendications 1 à 10, **caractérisé en ce que** le polymère peigne est obtenu par des procédés de copolymérisation radicalaire en solution, en émulsion directe ou inverse, en suspension ou précipitation, ou encore par des procédés de polymérisation radicalaire contrôlée tels que la méthode dénommée Réversible Addition Fragmentation Transfer (RAFT), la méthode dénommée Atom . Transfer Radical Polymerization (ATRP), la méthode dénommée Nitroxide Mediated Polymerization (NMP) ou encore la méthode dénommée Cobaloxime Mediated Free Radical Polymerization.

12. Procédé selon l'une des revendications 1 à 11, **caractérisé en ce que** le polymère peigne obtenu sous forme acide et éventuellement distillé, peut être également partiellement ou totalement neutralisé par un ou plusieurs agents de neutralisation disposant d'une fonction neutralisante monovalente ou d'une fonction neutralisante polyvalente, choisis en ce qui concerne la fonction monovalente dans le groupe constitué par les cations alcalins, en particulier le sodium, le potassium, le lithium, l'ammonium ou les amines primaires, secondaires ou tertiaires aliphatiques et/ou cycliques telles que par exemple la stéarylamine, les éthanolamines (mono-, di-, triéthanolamine), la mono et diéthylamine, la cyclohexylamine, la méthylcyclohexylamine, l'amino méthyl propanol, la morpholine, et choisis en ce qui concerne la fonction polyvalente dans le groupe constitué par les cations divalents alcalino-terreux, en particulier le magnésium et le calcium, ou encore le zinc, de même que par les cations trivalents, dont en particulier l'aluminium.

13. Procédé selon l'une des revendications 1 à 12, **caractérisé en ce que** le polymère peigne issu de la réaction de polymérisation peut éventuellement avant ou après la réaction de neutralisation totale ou partielle, être traité et séparé en plusieurs phases, selon des procédés statiques ou dynamiques, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

14. Compositions thermoplastiques **caractérisées en ce qu'**elles sont obtenues par le procédé selon l'une des revendications 1 à 13.

15. Compositions thermoplastiques contenant :
(a) au moins une résine thermoplastique,
(b) au moins une charge minérale ou carbonée,
(c) éventuellement au moins un stabilisant thermique et / vu un stabilisant UV et / ou un lubrifiant et / ou un modificateur de rhéologie et / ou un modificateur d'impact de nature organique,
(d) au moins un polymère peigne, contenant au moins une fonction oxyde de polyalkylène greffée sur au moins un monomère insaturé éthylénique.

16. Compositions thermoplastiques selon la revendication 15, **caractérisées en ce que** la résine thermoplastique est choisie parmi les résines halogénées, et préférentiellement le PVC, le polychlorure de vinyle surchloré (PVCC), le polyfluorure de vinylidène (PVDF), ou choisie parmi les résines styréniques, et préférentiellement les copolymères styrène-butadiène à haut taux de styrène (HIPS), les copolymères blocs de type Kraton^{TM}, les résines du type styrène-acrylonitrile, les résines acrylate-butadiène-styrène, les copolymères styrène méthylméthacrylate, ou choisie parmi les résines acryliques, et préférentiellement le polyméthacrylate de méthyle, ou choisie parmi les polyoléfines, et préférentiellement les polyéthylènes ou les polypropylènes, ou choisie parmi les résines polycarbonates, ou choisie parmi les résines polyesters insaturées, et préférentiellement les polyéthylène téréphthalate et les polybutylène téréphthalate, ou choisie parmi les résines polyuréthanes, ou choisie parmi les résines polyamides, ou les mélanges de ces résines, et préférentiellement **en ce que** la résine thermoplastique est choisie parmi les résines halogénées, et préférentiellement le PVC, le polychlorure de vinyle surchloré (PVCC), le polyfluorure de vinylidène (PVDF), ou les résines acryliques, et préférentiellement le polyméthacrylate de méthyle, ou choisie parmi les résines polycarbonates, ou choisie parmi les résines polyesters insaturées, et préférentiellement les polyéthylène téréphthalate et les polybutylène téréphthalate, et très préférentiellement **en ce que** cette résine thermoplastique est du PVC.

17. Compositions thermoplastiques selon la revendication 16, **caractérisées en ce que** la charge minérale ou carbonée est choisie parmi le carbonate de calcium naturel ou synthétique, les dolomies, le kaolin, le talc, le gypse, l'oxyde de titane, le.blanc satin ou encore le trihydroxyde d'aluminium, le mica, le noir de carbone et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, préférentiellement **en ce que** la charge minérale ou carbonée est une charge minérale choisie parmi le carbonate de calcium naturel ou synthétique, le talc et les mélanges de ces charges, très préférentiellement **en ce que** la charge minérale ou carbonée est une charge minérale qui est un carbonate de calcium naturel ou synthétique ou leurs mélanges, extrêmement préférentiellement **en ce que** la charge minérale ou carbonée est une charge minérale qui est un carbonate de calcium naturel choisi parmi le marbre, la calcite, la craie ou leurs mélanges.

18. Compositions thermoplastiques selon l'une des revendications 15 à 17, **caractérisées en ce que** le modificateur de choc de nature organique est choisi parmi les additifs chocs du type coeur-écorce, ou les polyoléfines chlorées, ou les caoutchoucs styrène-butadiène (SBR), styrène-butadiène-styrène (SBS), les polyacétates de vinyle, et leurs mélanges, et préférentiellement **en ce que** le modificateur de choc organique est choisi parmi les additifs choc du type coeur-écorce ou les polyoléfines chlorées et leurs mélanges, et très préférentiellement **en ce que** le modificateur de choc organique est choisi parmi les additifs choc du type coeur-écorce de nature acrylique, styrénique, butadiénique, et de manière extrêmement préférentielle **en ce que** ledit additif choc de type coeur-écorce possède un coeur élastomérique à base d'acrylate de butyle ou possède un coeur élastomérique à base de polybutadiène et une écorce à base de polyméthacrylate ou de polystyrène.

19. Compositions thermoplastiques selon l'une des revendications 15 à 18, **caractérisées en ce qu'**elles contiennent :
(a) de 0,1 à 99 % en poids sec d'au moins une résine thermoplastique, par rapport au poids total de la formulation thermoplastique,
(b) de 0,1 à 90 % en poids sec d'au moins une charge minérale ou carbonée, par rapport au poids total de la formulation thermoplastique,
(c) de 0 à 20 %, préférentiellement de 5 à 20 % en poids sec d'un stabilisant thermique et / ou d'un stabilisant UV et / ou d'un lubrifiant et / ou d'un modificateur de rhéologie et / ou d'un modificateur d'impact de nature organique, par rapport au poids total de la formulation thermoplastique,
(d) de 0,01 à 5 %, préférentiellement 0,1 à 3 % en poids sec d'un polymère peigne constitué d'au moins un monomère à insaturation éthylénique sur lequel est greffé au moins une fonction oxyde de polyalkylène, par rapport au poids sec de charge minérale ou carbonée.

20. Compositions thermoplastiques selon l'une des revendications 15 à 19, **caractérisées en ce que** les polymères peigne contiennent au moins un monomère de formule (I) : 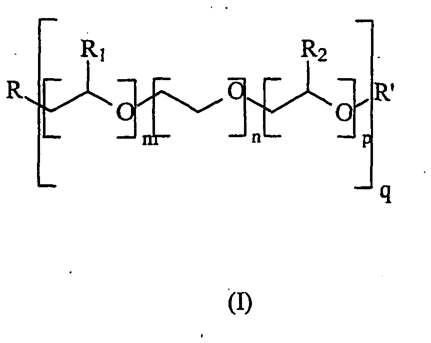 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges.

21. Compositions thermoplastiques selon l'une des revendications 15 à 20, **caractérisées en ce que** les polymères peigne se composent :
(a) d'au moins un monomère anionique et à fonction carboxylique ou dicarboxylique ou phosphorique ou phosphonique ou sulfonique ou leur mélange,
(b) d'au moins un monomère non ionique, le monomère non ionique étant constitué d'au moins un monomère de formule (I) : . 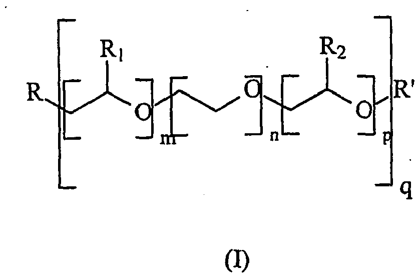 dans laquelle : '
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
ou du mélange de plusieurs monomères de formule (I),
(c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou du mélange de plusieurs de ces monomères,
(d) éventuellement d'au moins un monomère possédant au moins deux insaturations éthyléniques,

22. Compositions thermoplastiques selon l'une des revendications 15 à 21, **caractérisées en ce que** ledit polymère peigne est constitué :
a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, . isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate. de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,
b) d'au moins un monomère à insaturation éthylénique non ionique de formule (I): 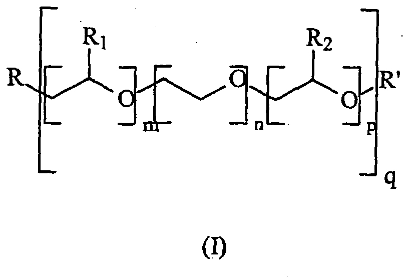 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré, ou encore d'au moins un monomère organosililé choisi de manière préférentielle parmi les molécules de formules (IIa) ou (IIb) :
avec formule (IIa) 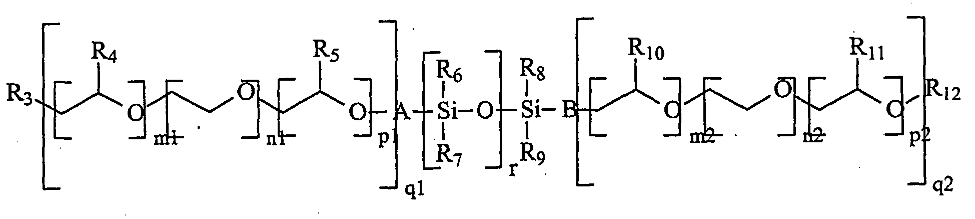 dans laquelle:
- m₁, p₁, m₂ et p₂ représentent un nombre de motifs d'oxyde d'alkylène inférieur ou égal à 150,
- n₁ et n₂ représentent un nombre de motifs d'oxyde d'éthylène inférieur ou égal à 150,
- q₁ et q₂ représentent un nombre entier au moins égal à 1 et tel que 0 ≤ (m₁+n₁+p₁)q₁ ≤ 150 et 0 ≤ (m₂+n₂+p₂)q₂ ≤ 150,
- r représente un nombre tel que 1 ≤ r ≤ 200,
- R₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R₄, R₅, R₁₀ et R₁₁, représentent l'hydrogène ou le radical méthyle ou éthyle,
- R₆, R₇, R₈ et R₉, représentent des groupements linéaires ou ramifiés alkyle, ou aryle, ou alkylaryle, ou arylalkyle ayant 1 à 20 atomes de carbone, ou leur mélange,
- R₁₂ représente un radical hydrocarboné ayant 1 à 40 atomes de carbone,
- A et B sont des groupements éventuellement présents, qui représentent alors un radical hydrocarboné ayant 1 à 4 atomes de carbone,
avec formule (IIb)
R-A-Si(OB)₃
dans laquelle :
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,
ou du mélange de plusieurs de ces monomères,
d) éventuellement d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) : 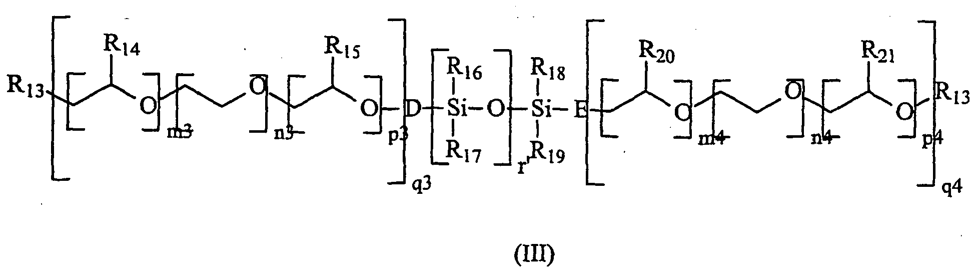 dans laquelle :
- m₃, p₃, m₄ et p₄ représentent un nombre de motifs d'oxyde d'alkylène inférieur ou égal à 150,
- n₃ et n₄ représentent un nombre de motifs d'oxyde d'éthylène inférieur ou égal à 150,
- q₃ et q₄ représentent un nombre entier au moins égal à 1 et tel que 0 ≤ (m₃+n₃+p₃)q₃ ≤ 150 et 0 ≤ (m₄+n₄+p₄)q₄ ≤ 150,
- r' représente un nombre tel que 1 ≤ r' ≤ 200,
- R₁₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R₁₄, R₁₅, R₂₀ et R₂₁, représentent l'hydrogène ou le radical méthyle ou éthyle,
- R₁₆, R₁₇, R₁₈ et R₁₉, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,
ou du mélange de plusieurs de ces monomères,

23. Compositions thermoplastiques selon l'une des revendications 15 à 22, **caractérisées en ce que** ledit polymère peigne est constitué, exprimé en poids :
a) de 2 % à 95 % et encore plus particulièrement de 5 % à 90 % d'au moins un monomère anionique à insaturation éthylénique et à fonction monocarboxylique choisi parmi les monomères à insaturation éthylénique et à fonction monocarboxylique tels que l'acide acrylique ou méthacrylique, ou encore les hémiesters de diacides tels que les monoesters en C₁ à C₄ des acides maléique ou itaconique, ou leurs mélanges, ou choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges,
b) de 2 % à 95 % et encore plus particulièrement de 5 % à 90 % d'au moins un monomère à insaturation éthylénique non ionique de formule (I) : 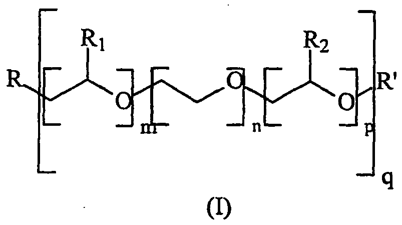 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
ou du mélange de plusieurs monomères de formule (I),
c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'un monomère organofluoré, ou encore d'un monomère organosililé choisi de manière préférentielle parmi les molécules de formules (IIa) ou (IIb) :
avec formule (IIa) 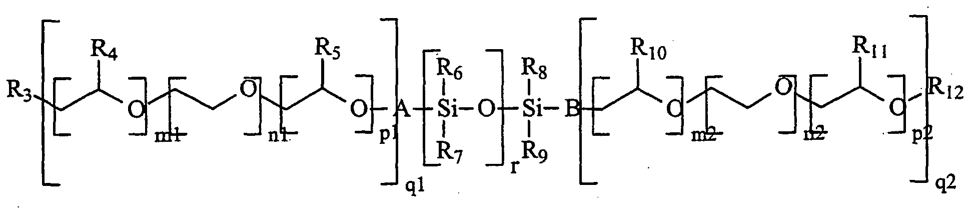 dans laquelle : ..
- m₁, p₁, m₂ et p₂ représentent un nombre de motifs d'oxyde d'alkylène inférieur ou égal à 150,
- n₁ et n₂ représentent un nombre de motifs d'oxyde d'éthylène inférieur ou égal à 150,
- q₁ et q₂ représentent un nombre entier au moins égal à 1 et tel que 0 ≤ (m₁+n₁+p₁)q₁ ≤ 150 et 0 ≤ (m₂+n₂+p₂)q₂ ≤ 150,
- r représente un nombre tel que 1 ≤ r ≤ 200,
- R₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R₄, R₅, R₁₀ et R₁₁, représentent l'hydrogène ou le radical méthyle ou éthyle,
- R₆, R₇, R₈ et R₉, représentent des groupements linéaires ou ramifiés alkyle, ou aryle, ou alkylaryle, ou arylalkyle ayant 1 à 20 atomes de carbone, ou leur mélange,
- R₁₂ représente un radical hydrocarboné ayant 1 à 40 atomes de carbone,
- A et B sont des groupements éventuellement présents, qui représentent alors un radical hydrocarboné ayant 1 à 4 atomes de carbone,
avec formule (IIb)
R-A-Si(OB)₃
dans laquelle :
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,
ou du mélange de plusieurs de ces monomères,
d) de 0 % à 3 % d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres, ou choisi parmi les molécules de formule (III) : 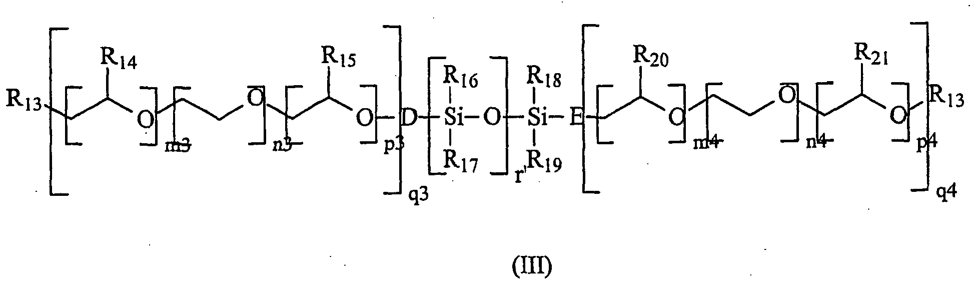 dans laquelle :
- m₃, p₃, m₄ et p₄ représentent un nombre de motifs d'oxyde d'alkylène inférieur ou égal à 150,
- n₃ et n₄ représentent un nombre de motifs d'oxyde d'éthylène inférieur ou égal à 150,
- q₃ et q₄ représentent un nombre. entier au moins égal à 1 et tel que 0 ≤ (m₃+n₃+p₃)q₃ < 150 et 0 ≤ (m₄+n₄+p₄)q₄ ≤ 150,
- r' représente un nombre tel que 1 ≤ r'≤ 200,
- R₁₃ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R₁₄, R₁₅, R₂₀ et R₂₁, représentent l'hydrogène ou le radical méthyle ou éthyle,
- R₁₆, R₁₇, R₁₈ et R₁₉, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,
ou du mélange de plusieurs de ces monomères,
le total des proportions des constituants a), b), c), et d) étant égal à 100 %.

24. Compositions thermoplastiques selon l'une des revendications 15 à 23, **caractérisées en ce que** le polymère peigne est obtenu par des procédés de copolymérisation radicalaire en solution, en émulsion directe ou inverse, en suspension ou précipitation, ou encore par des procédés de polymérisation radicalaire contrôlée tels que la méthode dénommée Réversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

25. Compositions thermoplastiques selon l'une des revendications 15 à 23, **caractérisées en ce que** le polymère peigne obtenu sous forme acide et éventuellement distillé, peut être également partiellement ou totalement neutralisé par un ou plusieurs agents de neutralisation disposant d'une fonction neutralisante monovalente ou d'une fonction neutralisante-polyvalente, et choisis pour la fonction monovalente dans le groupe constitué par les cations alcalins, en particulier le sodium, le potassium, le lithium, l'ammonium ou les amines primaires, secondaires ou tertiaires aliphatiques et/ou cycliques telles que la stéarylamine, les éthanolamines (mono-, di-, triéthanolamine), la mono et diéthylamine, la cyclohexylamine, la méthylcyclohexylamine, l'amino méthyl propanol, la morpholine, et choisis pour la fonction polyvalente dans le groupe constitué par les cations divalents alcalino-terreux, en particulier le magnésium et le calcium, ou encore le zinc, de même que par les cations trivalents, dont en particulier l'aluminium.

## Claims

1. A process for manufacture of a thermoplastic material, containing:
(a) at least one thermoplastic resin,
(b) at least one mineral or carbonated filler,
(c) possibly at least one other additive chosen from among a thermal stabiliser and/or a UV stabiliser and/or a lubricant and/or a rheology modifier and/or an organic impact modifier,
and **characterised in that** at least one comb polymer, containing at least one polyalkylene oxide function grafted on to a least one ethylenic unsaturated monomer, is introduced into the above-mentioned composition.

2. A process according to claim 1, **characterised in that** the said comb polymer is introduced:
*1*. in the form of dry powder, resulting from the stages of:
- grinding and/or dispersion in a wet medium of the mineral or carbonated filler in the presence of the said polymer, and possibly in the presence of at least one other grinding agent using a wet method and/or at least one other dispersant,
- drying of the dispersion and/or of the aqueous suspension of mineral or carbonated matter obtained, with possible introduction of the said polymer, treatment followed by possible classification of the powder obtained 2. and/or in the form of dry powder, resulting from the stages of:
- dry grinding of the mineral or carbonated filler in the presence of the said polymer, and possibly in the presence of at least one other dry grinding agent,
- treatment followed by possible classification of the powder obtained,
*1. 3*. and/or in the form of dry powder, resulting from the stages of:
- introduction of the said polymer into a dispersion and/or into an aqueous suspension containing the mineral or carbonated filler,
- drying of the dispersion and/or of the aqueous suspension of mineral or carbonated matter obtained, with possible introduction of the said polymer, followed by treatment and possible classification of the powder obtained,
*1.4*. and/or in the form of dry powder mixed with the other constituents a), b) and c),
*1.5* . and/or in the form of dry powder, resulting from the stages of:
- introduction of the said polymer into a suspension and/or an emulsion of at least one additive chosen from among a thermal stabiliser and/or a UV stabiliser and/or a lubricant and/or a rheology modifier and/or an organic impact modifier,
- drying of the suspension and/or of the emulsion obtained in the possible presence of the said polymer, followed possibly by classification of the powder obtained.

3. A process according to claims I or 2, **characterised in that** the thermoplastic resin is chosen from among the halogenated resins, and preferentially PVC, post-chlorinated vinyl polychloride (PVCC), vinylidene polyfluoride (PVDF), or chosen from among the styrenic resins, and preferentially the styrene-butadicnc copolymers with a high styrene rate (HIPS), block copolymers of the Kraton™ type, resins of the styrene-acrylonitrile type, acrylate-butadiene-styrene resins, methylmethacrylate styrene copolymers, or chosen from among the acrylic resins, and preferentially methyl polymethacrylate, or chosen from among the polyolefines, and preferentially the polyethylenes or polypropylenes, or chosen from among the polycarbonate resins, or chosen from among the unsaturated polyester resins, and preferentially terephthalate polyethylene and the terephthalate polybutylenes, or chosen from among the polyurethane resins or chosen from among the polyamide resins, or a mixture of these resins, and preferentially **in that** the thermoplastic resin is chosen from among the halogenated resins, and preferentially PVC, post-chlorinated vinyl polychloride (PVCC), vinylidene polyfluoride (PVDF), or the acrylic resins, and preferentially methyl polymethacrylate, or chosen from among the polycarbonate resins, or chosen from among the unsaturated polyester resins, and preferentially terephthalate polyethylene and the terephthalate polybutylenes, and very preferentially **in that** this thermoplastic resin is PVC.

4. A process according to claims 1 to 3, **characterised in that** the mineral or carbonated filler is chosen from among natural or synthetic calcium carbonate, the dolomites, kaolin, talc, gypsum, titanium oxide, satin white or again aluminium trihydroxide, mica, carbon black and the mixture of these fillers with one another, such as talc-calcium carbonate mixtures, calcium carbonate-kaolin mixtures, or again mixtures of calcium carbonate with aluminium trihydroxide, or again mixtures with synthetic natural fibres or again mineral co-structures such as the co-structures talc-calcium carbonate or talc-titanium dioxide, preferentially **in that** the mineral or carbonated filler is a mineral filler chosen from among natural or synthetic calcium carbonate, talc and mixtures of these fillers, and very preferentially **in that** the mineral or carbonated filler is a mineral filler which is a natural or synthetic calcium carbonate or their mixtures, and extremely preferentially **in that** the mineral or carbonated filler is a mineral filler which is a natural calcium carbonate chosen from among marble, calcite, chalk or their mixtures.

5. A process according to claims 1 to 4, **characterised in that** the organic impact modifier is chosen from among the impact additives of the core-shell type, or the chlorinated polyolefines, or the styrene-butadiene rubbers (SBR), styrene-butadiene-styrenes (SBS), the vinyl polyacetates, and their mixtures, and preferentially **in that** the organic impact modifier is chosen from among the impact additives of the core-shell type or the chlorinated polyolefines and their mixtures, and very preferentially **in that** the organic impact modifier is chosen from among the impact additives of the core-shell type of the acrylic, styrenic, butadienic type, and in an extremely preferential manner **in that** the said impact additive of the core-shell type has a butyl acrylate-based elastomer core, or has a polybutadiene-based elastomer core and a polymethacrylate-based or polystyrene-based shell.

6. A process according to one of the claims 1 to 5, **characterised in that** it uses:
(a) between 0.1 and 99% by dry weight of at least one thermoplastic resin, compared to the total weight of the thermoplastic formulation,
(b) between 0.1 and 90% by dry weight of at least one mineral or carbonated filler, compared to the total weight of the thermoplastic formulation,
(c) between 0 and 20%, and preferentially between 5 and 20%, by dry weight of a thermal stabiliser and/or a UV stabiliser and/or a lubricant and/or a rheology modifier and/or an organic impact modifier, compared to the total weight of the thermoplastic formulation,
(d) between 0.01 and 5%, and preferentially between 0.1 and 3%, by dry weight of a comb polymer consisting of at least one ethylenic unsaturation monomer on to which is grafted at least one polyalkylene oxide function, compared to the dry weight of mineral or carbonated filler.

7. A process according to one of the claims 1 to 6, **characterised in that** the comb polymers contain at least one monomer of formula (I): 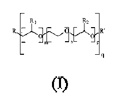 where:
- m and p represent a number of alkylene oxide units of less than or equal to 150,
- n represents a number of ethylene oxide units of less than or equal to 150,
- q represents an integer at least equal to 1 and such that 5 ≤ (m+n+p)q ≤ 150,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α,α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 40 carbon atoms, or an ionic or ionisable grouping such as a phosphate, a phosphonate, a sulphate, a sulphonate, a carboxylic, or indeed a primary, secondary or tertiary amine, or a quaternary ammonium, or indeed their mixtures.

8. A process according to one of the claims 1 to 7, **characterised in that** the comb polymers consist:
(a) of at least one anionic monomer with a carboxylic or dicarboxylic or phosphoric or phosphonic or sulphonic function, or their mixtures,
(b) of at least one non-ionic monomer, where the non-ionic monomer consists of at least one monomer of formula (I): 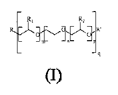 where:
- m and p represent a number of alkylene oxide units of less than or equal to 150,
- n represents a number of ethylene oxide units of less than or equal to 150,
- q represents an integer at least equal to 1 and such that 5 ≤ (m+n+p)q ≤ 150, and preferentially such that 15 (m+n+p)q ≤ 120
- R, represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α, α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 40 carbon atoms, or an ionic or ionisable grouping such as a phosphate, a phosphonate, a sulphate, a sulphonate, a carboxylic, or indeed a primary, secondary or tertiary amine, or a quaternary ammonium, or indeed their mixtures, and preferentially represents a hydrocarbonated radical having 1 to 12 carbon atoms, and very preferentially a hydrocarbonated radical having 1 to 4 carbon atoms,
or a mixture of several monomers of formula (I),
(c) possibly at least one monomer of the acrylamide or methacrylamide type, or their derivates such as N-[3-(dimethylamino) propyl] acrylamide or N-[3-(dimethylamino) propyl] methacrylamide, and their mixtures, or again of at least one non-water soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivates, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride or sulphate, dimethyl diallyl ammonium chloride or sulphate, [3-(methacrylamido) propyl] trimethyl ammonium chloride or sulphate, or again at least one organofluorate or organosililate monomer, or a mixture of several of these monomers,
(d) possibly at least one monomer having at least two ethylenic unsaturations.

9. A process according to one of the claims 1 to 8, **characterised in that** the comb polymer consists:
(a) of at least one anionic monomer with ethylenic unsaturation and with a monocarboxylic function chosen from among the ethylenic unsaturation monomers and with a monocarboxylic function such as acrylic or methacrylic acid, or again the diacid hemiesters such as the C₁ to C₄ monoesters of maleic or itaconic acids, or their mixtures, or chosen from among the monomers with ethylenic unsaturation and with a dicarboxylic function such as crotonic, isocrotonic, cinnamic, itaconic, maleic acid, or again the anhydrides of carboxylic acids, such as maleic anhydride, or chosen from among the monomers with ethylenic unsaturation and with a sulphonic function such as acrylamido-methyl-propane-sulphonic acid, sodium methallylsulphonate, vinyl sulphonic acid and styrene sulphonic acid, or again chosen from among the monomers with ethylenic unsaturation and with a phosphoric function such as vinyl phosphoric acid, ethylene glycol methacrylate phosphate, propylene glycol methacrylate phosphate, ethylene glycol acrylate phosphate, propylene glycol acrylate phosphate and their ethoxylates, or again chosen from among the monomers with ethylenic unsaturation and with a phosphonic function such as vinyl phosphonic acid, or their mixtures, or their mixtures,
(b) of a least one monomer with a non-ionic ethylenic unsaturation of formula (I): 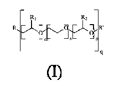 where:
- m and p represent a number of alkylene oxide units of less than or equal to 150,
- n represents a number of ethylene oxide units of less than or equal to 150,
- q represents a whole number at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurrethane, α, α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 40 carbon atoms, or an ionic or ionisable grouping such as a phosphate, a phosphonate, a sulphate, a sulphonate, a carboxylic, or indeed a primary, secondary or tertiary amine, or a quaternary ammonium, or indeed their mixtures, and preferentially represents a hydrocarbonated radical having I to 12 carbon atoms, and very preferentially a hydrocarbonated radical having 1 to 4 carbon atoms,
or a mixture of several monomers of formula (I),
(c) possibly at least one monomer of the acrylamide or methacrylamide type, or their derivates such as N-[3-(dimethylamino) propyl] acrylamide or N-[3-(dimethylamino) propyl] methacrylamide, and their mixtures, or again of at least one non-water soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivates, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride or sulphate, dimethyl diallyl ammonium chloride or sulphate, [3-(methacrylamido) propyl] trimethyl ammonium chloride or sulphate, or again at least one organofluorate monomer, or indeed at least one organosililate monomer, preferentially chosen from among the molecules of formulae (IIa) or (IIb): 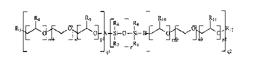 with formula (IIa)
where:
- m₁, p₁, m₂ and p₂ represent a number of alkylene oxide units of less than or equal to 150,
- n₁ and n₂ represent a number of ethylene oxide units of less than or equal to 150,
- q₁ and q₂ represent a whole number at least equal to 1 and such that 0 ≤ (m₁+n₁+p₁)q₁ ≤ 150 and 0 ≤ (m₂+n₂+p₂)q₂ ≤ 150,
- r represents a number such that 1 ≤ r ≤ 200,
- R₃ represents a radical containing an unsaturated polymerisable function, preferentially belonging to the group of vinylies, or to the group of acrylic, methacrylic, maleic, itaconic, crotonic, vinylphthalic esters, or to the group of unsaturated urethanes such as, for example, acrylurethane, methacrylurethane, α,α' dimethyl-isopmpenyl-benzylurethane, allylurethane, or to the group of allylic or vinylic ethers, whether or not substituted, or again to the group of ethylenically unsaturated amides or imides,
- R₄, R₅, R₁₀ and R₁₁ represent hydrogen or the methyl or ethyl radical,
- R₆, R₇, R₈ and R₉ represent linear or branched alkyl or aryl, or alkylaryl or arylalkyl groupings, having 1 to 20 carbon atoms, or their mixtures,
- R₁₂ represents a hydrocarbonated radical having 1 to 40 carbon atoms,
- A and B are groupings which may be present, which then represent a hydrocarbonated radical having 1 to 4 carbon atoms,
with formula (IIb)
R-A-Si (OB)₃
where:
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α,α' dimethyl-isopropenyl-benzylurethane, allylurethane, or to the group of allylic or vinylic ethers, whether or not substituted, or again to the group of ethylenically unsaturated amides or imides,
- A is a grouping which may be present, which then represents a hydrocarbonated radical having 1 to 4 carbon atoms,
- B represents a hydrocarbonated radical having 1 to 4 carbon atoms,
or the mixture of several of these monomers,
(d) and possibly at least one crosslinking monomer chosen, in a non-restrictive manner, from the group constituted by ethylene glycol dimethacrylate, trimethylolpropanetriacrylate, allyl acrylate, the allyl maleates, methylene-bis-acrylamide, methylene-bis-methacrylamide, tetrallyloxyethane, the triallylcyanurates, the allyl ethers obtained from polyols such as pentaerythritol, sorbitol, sucrose or others, or chosen from among the molecules of formula (III): 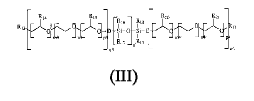 where:
- m₃, p₃, m₄ and p₄ represent a number of alkylene oxide units of less than or equal to 150,
- n₃ and n₄ represent a number of ethylene oxide units of less than or equal to 150,
- q₃ and q₄ represent a whole number at least equal to 1 and such that 0≤ (m₃+n₃+p₃)q₃ ≤ 150 and 0≤ (m₄+n₄+p₄)q₄ ≤150,
- r' represents a number such that I ≤ r' ≤200,
- R₁₃ represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methaerylurethane, α, α' dimethyl-isopropenyl-benzylurethane, allylurethane, or to the group of allylic or vinylic ethers, whether or not substituted, or again to the group of ethylenically unsaturated amides or imides,
- R₁₄, R₁₅, R₂₀ and R₂₁ represent hydrogen or the methyl or ethyl radical,
- R₁₆, R₁₇, R₁₈ and R₁₉ represent linear or branched alkyl or aryl, or alkylaryl or arylalkyl groupings, having 1 to 20 carbon atoms, or their mixtures,
- D and E are groupings which may be present, which then represent a hydrocarbonated radical having 1 to 4 carbon atoms,
or the mixture of several of these monomers.

10. A process according to one of the claims 1 to 9, **characterised in that** the said comb polymer consists, expressed by weight:
(a) between 2% and 95%, and more particularly between 5% and 90%, of at least one anionic monomer with ethylenic unsaturation and with a monocarboxylic function chosen from among the ethylenic unsaturation monomers and with a monocarboxylic function such as acrylic or methacrylic acid, or again the diacid hemiesters such as the C₁ to C₄ monoesters of maleic or itaconic acids, or their mixtures, or chosen from among the monomers with ethylenic unsaturation and with a dicarboxylic function such as crotonic, isocrotonic, cinnamic, itaconic, maleic acid, or again the anhydrides of carboxylic acids, such as maleic anhydride, or chosen from among the monomers with ethylenic unsaturation and with a sulphonic function such as acrylamido-methyl-propane-sulphonic acid, sodium methallylsulphonate, vinyl sulphonic acid and styrene sulphonic acid, or again chosen from among the monomers with ethylenic unsaturation and with a phosphoric function such as vinyl phosphoric acid, ethylene glycol methacrylate phosphate, propylene glycol methacrylate phosphate, ethylene glycol acrylate phosphate, propylene glycol acrylate phosphate and their ethoxylates, or again chosen from among the monomers with ethylenic unsaturation and with a phosphonic function such as vinyl phosphonic acid, or their mixtures, or their mixtures,
(b) between 2 and 95%, and yet more particularly between 5% and 90%, of a least one monomer with non-ionic ethylenic unsaturation of formula (I): 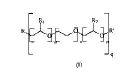 where:
- m and p represent a number of alkylene oxide units of less than or equal to 150,
- n represents a number of ethylene oxide units of less than or equal to 150,
- q represents a whole number at least equal to 1 and such that 5≤ (m+n+p)q≤ 150, and preferentially such that 15≤ (m+n+p)q≤ 120,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α, α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 40 carbon atoms, or an ionic or ionisable grouping such as a phosphate, a phosphonate, a sulphate, a sulphonate, a carboxylic, or indeed a primary, secondary or tertiary amine, or a quaternary ammonium, or indeed their mixtures, and preferentially represents a hydrocarbonated radical having 1 to 12 carbon atoms, and very preferentially a hydrocarbonated radical having I to 4 carbon atoms.
or a mixture of several monomers of formula (I),
(c) between 0% and 50% of at least one monomer of the acrylamide or methacrylamide type, or their derivates such as N-[3-(dimethylamino) propyl] acrylamide or N-[3-(dimethylamino) propyl] methacrylamide, and their mixtures, or again of at least one non-water soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivates, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride, dimethyl diallyl ammonium chloride or sulphate, [3-(methacrylamido) propyl] trimethyl ammonium chloride or sulphate, or again one organofluorate monomer, or indeed one organosililate monomer, preferentially chosen from among the molecules of formulae (IIa) or (IIb): 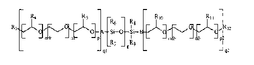 with formula (IIa)
where:
- m₁, p₁, m₂ and p₂ represent a number of alkylene oxide units of less than or equal to 150,
- n₁ and n₂ represent a number of ethylene oxide units of less than or equal to 150,
- q₁ and q₂ represent a whole number at least equal to 1 and such that 0 ≤(m₁+n₁+p₁)q₁≤ 150 and 0 ≤(m₂+n₂+p₂)q₂ ≤150,
- r represents a number such that 1 ≤ r ≤ 200,
- R₃ represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α, α' dimethyl-isopropenyl-benzylurethane, allylurethane, or to the group of allylic or vinylic ethers, whether or not substituted, or again to the group of ethylenically unsaturated amides or imides,
- R₄, R₅, R₁₀ and R₁₁ represent hydrogen or the methyl or ethyl radical,
- R₆, R₇, R₈ and R₉ represent linear or branched alkyl or aryl, or alkylaryl or arylalkyl groupings, having 1 to 20 carbon atoms, or their mixtures,
- R₁₂ represents a hydrocarbonated radical having 1 to 40 carbon atoms.
- A and B are groupings which may be present, which then represent a hydrocarbonated radical having 1 to 4 carbon atoms,
with formula (IIb)
R-A-Si(OB)₃
where:
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α, α' dimethyl-isopmpenyl-benzylurethane, allylurethane, or to the group of allylic or vinylic ethers, whether or not substituted, or again to the group of ethylenically unsaturated amides or imides,
- A is a grouping which may be present, which then represents a hydrocarbonated radical having 1 to 4 carbon atoms,
- B represents a hydrocarbonated radical having 1 to 4 carbon atoms,
or the mixture of several of these monomers,
(d) between 0% and 3% of at least one crosslinking monomer chosen, in a non-restrictive manner, from the group constituted by ethylene glycol dimethacrylate, trimethylolpropanetriacrylate, allyl acrylate, the allyl maleates, methylene-bis-acrylamide, methylene-bis-methacrylamide, tetrallyloxyethane, the triallylcyanurates, the allyl ethers obtained from polyols such as pentaerythritol, sorbitol, sucrose or others, or chosen from among the molecules of formula (III): 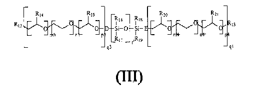 where:
- m₃, p₃, m₄ and p₄ represent a number of alkylene oxide units of less than or equal to 150,
- n₃ and n₄ represent a number of ethylene oxide units of less than or equal to 150,
- q₃ and q₄ represent a whole number at least equal to 1 and such that 0 ≤ (m₃+n₃+p₃)q₃ ≤ 150 and 0 ≤ (m₄+n₄+p₄)q₄ ≤ 150,
- r' represents a number such that 1 ≤ r' ≤ 200,
- R₁₃ represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α, α' dimethyl-isopropenyl-benzylurethane, allylurethane, or to the group of allylic or vinylic ethers, whether or not substituted, or again to the group of ethylenically unsaturated amides or imides,
- R₁₄, R₁₅, R₂₀ and R₂₁ represent hydrogen or the methyl or ethyl radical,
- R₁₆, R₁₇, R₁₈ and R₁₉ represent linear or branched alkyl or aryl, or alkylaryl or arylalkyl groupings, having 1 to 20 carbon atoms, or their mixtures,
- D and E are groupings which may be present, which then represent a hydrocarbonated radical having 1 to 4 carbon atoms,
or the mixture of several of these monomers,
where the total proportions of the constituents a), b), c) and d) is equal to 100%.

11. A process according to one of claims 1 to 10, **characterised in that** the comb polymer is obtained by processes of radical copolymerisation in solution, in a direct or reverse emulsion, in suspension or in precipitation, or again by controlled radical polymerisation processes such as the method known as Reversible Addition Fragmentation Transfer (RAFT), the method known as Atom Transfer Radical Polymerization (ATRP), the method known as Nitroxide Mediated Polymerization (NMP) or again the method known as Cobaloxime Mediated Free Radical Polymerization.

12. A process according to one of claims I to 11, **characterised in that** the comb polymer obtained in the acid form, and possibly distilled, may also be partially or totally neutralised by one or more neutralisation agents having a monovalent neutralising function or a polyvalent neutralising function such as, for example, for the monovalent function of those chosen from the group constituted by the alkaline cations, in particular sodium, potassium, lithium, ammonium or the primary, secondary or tertiary aliphatic and/or cyclic amines, such as, for example, stearylamine, the ethanolamines (mono-, di-, triethanolamine), mono- and diethylamine, cyclohexylamine, methylcyclohexylamine, amino methyl propanol, morpholine, or again, for the polyvalent function, those chosen from the group constituted by the alkaline earth divalent cations, in particular magnesium and calcium, or again zinc, and also by the trivalent cations, in particular aluminium.

13. A process according to one of claims 1 to 12, **characterised in that** the comb polymer derived from the polymerisation reaction may also be, before or after the total or partial neutralisation reaction, treated and separated into several phases, according to static or dynamic processes, by one or more polar solvents belonging notably to the group constituted by water, methanol, ethanol, propanol, isopropanol, the butanols, acetone, tetrahydrofuran or their mixtures.

14. Thermoplastic compositions **characterised in that** they are obtained by the process according to one of claims 1 to 13.

15. Thermoplastic compositions containing:
(a) at least one thermoplastic resin,
(b) at least one mineral or carbonated filler,
(c) possibly at least one thermal stabiliser and/or one UV stabiliser and/or one lubricant and/or one rheology modifier and/or one organic impact modifier,
(d) at least one comb polymer, containing at least one polyalkylene oxide function grafted on to at least one ethylenic unsaturated monomer.

16. Thermoplastic compositions according to claim 15, **characterised in that** the thermoplastic resin is chosen from among the halogenated resins, and preferentially PVC, post-chlorinated vinyl polychloride (PVCC), vinylidene polyfluoride (PVDF), or chosen from among the styrenic resins, and preferentially the styrene-butadiene copolymers with a high styrene rate (HIPS), block copolymers of the Kraton™ type, resins of the styrene-acrylonitrile type, acrylate-butadiene-styrene resins, methylmethacrylate styrene copolymers, or chosen from among the acrylic resins, and preferentially methyl polymethacrylate, or chosen from among the polyolefines, and preferentially the polyethylenes or polypropylenes, or chosen from among the polycarbonate resins, or chosen from among the unsaturated polyester resins, and preferentially terephthalate polyethylene and the terephthalate polybutylenes, or chosen from among the polyurethane resins or chosen from among the polyamide resins, or a mixture of these resins, and preferentially **in that** the thermoplastic resin is chosen from among the halogenated resins, and preferentially PVC, post-chlorinated vinyl polychloride (PVCC), vinylidene polyfluoride (PVDF), or the acrylic resins, and preferentially methyl polymethacrylate, or chosen from among the polycarbonate resins, or chosen from among the unsaturated polyester resins, and preferentially terephthalate polyethylene and the terephthalate polybutylenes, and very preferentially **in that** this thermoplastic resin is PVC.

17. Thermoplastic compositions according to claim 16, **characterised in that** the mineral or carbonated filler is chosen from among natural or synthetic calcium carbonate, the dolomites, kaolin, talc, gypsum, titanium oxide, satin white or again aluminium trihydroxide, mica, carbon black and the mixture of these fillers with one another, such as talc-calcium carbonate mixtures, calcium carbonate-kaolin mixtures, or again mixtures of calcium carbonate with aluminium trihydroxide, or again mixtures with synthetic natural fibres or again mineral co-structures such as the co-structures talc-calcium carbonate or talc-titanium dioxide, preferentially **in that** the mineral or carbonated filler is a mineral filler chosen from among natural or synthetic calcium carbonate, talc and mixtures of these fillers, and very preferentially **in that** the mineral or colonnaded filler is a mineral filler which is a natural or synthetic calcium carbonate or their mixtures, and extremely preferentially **in that** the mineral or carbonated filler is a mineral filler which is a natural calcium carbonate chosen from among marble, calcite, chalk or their mixtures.

18. Thermoplastic compositions according to one of claims 15 to 17, **characterised in that** the organic impact modifier is chosen from among the impact additives of the core-shell type, or the chlorinated polyolefines, or the styrene-butadiene rubbers (SBR), styrene-butadiene-styrenes (SBS), the vinyl polyacetates, and their mixtures, and preferentially in that the organic impact modifier is chosen from among the impact additives of the core-shell type or the chlorinated polyolefines and their mixtures, and very preferentially **in that** the organic impact modifier is chosen from among the impact additives of the core-shell type of the acrylic, styrenic, butadienic type, and in an extremely preferential manner **in that** the said impact additive of the core-shell type has a butyl acrylate-based elastomer core, or has a polybutadiene-based elastomer core and a polymethacrylate-based or polystyrene-based shell.

19. Thermoplastic compositions according to one of claims 15 to 18, **characterised in that** they contain:
(a) between 0.1 and 99% by dry weight of at least one thermoplastic resin, compared to the total weight of the thermoplastic formulation,
(b) between 0.1 and 90% by dry weight of at least one mineral or carbonated filler, compared to the total weight of the thermoplastic formulation,
(c) between 0 and 20%, and preferentially between 5 and 20%, by dry weight of a thermal stabiliser and/or a UV stabiliser and/or a lubricant and/or a rheology modifier and/or an organic impact modifier, compared to the total weight of the thermoplastic formulation,
(d) between 0.01 and 5%, and preferentially between 0.1 and 3%, by dry weight of a comb polymer consisting of at least one ethylenic unsaturation monomer on to which is grafted at least one polyalkylene oxide function, compared to the dry weight of mineral or carbonated filler.

20. Thermoplastic compositions according to one of the claims 15 to 19, **characterised in that** the comb polymers contain at least one monomer of formula (I): 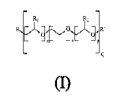 where;
- m and p represent a number of alkylene oxide units of less than or equal to 150,
- n represents a number of ethylene oxide units of less than or equal to 150,
- q represents an integer at least equal to 1 and such that 5 ≤ (m+n+p)q ≤ 150,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α,α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 40 carbon atoms, or an ionic or ionisable grouping such as a phosphate, a phosphonate, a sulphate, a sulphonate, a carboxylic, or indeed a primary, secondary or tertiary amine, or a quaternary ammonium, or indeed their mixtures.

21. Thermoplastic compositions according to one of the claims 15 to 20, **characterised in that** the comb polymers consist:
(a) of at least one anionic monomer with a carboxylic or dicarboxylic or phosphoric or phosphonic or sulphonic function, or their mixtures,
(b) of at least one non-ionic monomer, where the non-ionic monomer consists of at least one monomer of formula (I): 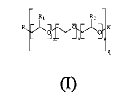 where;
- m and p represent a number of alkylene oxide units of less than or equal to 150,
- n represents a number of ethylene oxide units of less than or equal to 150,
- q represents an integer at least equal to 1 and such that 5 ≤ (m+n+p)q ≤ 150, and preferentially such that 15 ≤ (m+n+p)q ≤ 120
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α,α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having I to 40 carbon atoms, or an ionic or ionisable grouping such as a phosphate, a phosphonate, a sulphate, a sulphonate, a carboxylic, or indeed a primary, secondary or tertiary amine, or a quaternary ammonium, or indeed their mixtures, and preferentially represents a hydrocarbonated radical having 1 to 12 carbon atoms, and very preferentially a hydrocarbonated radical having 1 to 4 carbon atoms,
or a mixture of several monomers of formula (I),
(c) possibly at least one monomer of the acrylamide or methacrylamide type, or their derivates such as N-[3-(dimethylamino) propyl] acrylamide or N-[3-(dimethylamino) propyl] methacrylamide, and their mixtures, or again of at least one non-water soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivates, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride or sulphate, dimethyl diallyl ammonium chloride or sulphate, [3-(methacrylamido) propyl] trimethyl ammonium chloride or sulphate, or again at least one organofluorate or organosililate monomer, or a mixture of several of these monomers,
(d) possibly at least one monomer having at least two ethylenic unsaturations,

22. Thermoplastic compositions according to one of the claims 15 to 21, **characterised in that** the said comb polymer consists:
(a) of at least one anionic monomer with ethylenic unsaturation and with a monocarboxylic function chosen from among the ethylenic unsaturation monomers and with a monocarboxylic function such as acrylic or methacrylic acid, or again the diacid hemiesters such as the C₁ to C₄ monoesters of maleic or itaconic acids, or their mixtures, or chosen from among the monomers with ethylenic unsaturation and with a dicarboxylic function such as crotonic, isocrotonic, cinnamic, itaconic, maleic acid, or again the anhydrides of carboxylic acids, such as maleic anhydride, or chosen from among the monomers with ethylenic unsaturation and with a sulphonic function such as acrylamido-methyl-propane-sulphonic acid, sodium methallylsulphonate, vinyl sulphonic acid and styrene sulphonic acid, or again chosen from among the monomers with ethylenic unsaturation and with a phosphoric function such as vinyl phosphoric acid, ethylene glycol methacrylate phosphate, propylene glycol methacrylate phosphate, ethylene glycol acrylate phosphate, propylene glycol acrylate phosphate and their ethoxylates, or again chosen from among the monomers with ethylenic unsaturation and with a phosphonic function such as vinyl phosphonic acid, or their mixtures, or their mixtures,
(b) of a least one monomer with a non-ionic ethylenic unsaturation of formula (I): 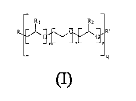 where:
- m and p represent a number of alkylene oxide units of less than or equal to 150,
- n represents a number of ethylene oxide units of less than or equal to 150,
- q represents a whole number at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α,α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 40 carbon atoms, or an ionic or ionisable grouping such as a phosphate, a phosphonate, a sulphate, a sulphonate, a carboxylic, or indeed a primary, secondary or tertiary amine, or a quaternary ammonium, or indeed their mixtures, and preferentially represents a hydrocarbonated radical having 1 to 12 carbon atoms, and very preferentially a hydrocarbonated radical having 1 to 4 carbon atoms.
or a mixture of several monomers of formula (I),
(c) possibly at least one monomer of the acrylamide or methacrylamide type, or their derivates such as N-[3-(dimethylamino) propyl] acrylamide or N-[3-(dimethylamino) propyl] methacrylamide, and their mixtures, or again of at least one non-water soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivates, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride or sulphate, dimethyl diallyl ammonium chloride or sulphate, [3-(methacrylamido) propyl] trimethyl ammonium chloride or sulphate, or again at least one organofluorate monomer, or indeed at least one organosililate monomer, preferentially chosen from among the molecules of formulae (IIa) or (IIb): 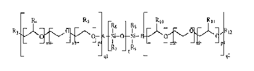 with formula (IIa)
where:
- m₁, p₁, m₂ and p₂ represent a number of alkylene oxide units of less than or equal to 150,
- n₁ and n₂ represent a number of ethylene oxide units of less than or equal to 150,
- q₁ and q₂ represent a whole number at least equal to 1 and such that 0 ≤ (m₁+n₁+p₁)q₁ ≤ 150 and 0 ≤ (m₂+n₂+p₂)q₂ ≤ 150,
- r represents a number such that 1 ≤ r ≤ 200,
- R₃ represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α,α' dimethyl-isopropenyl-benzylurethane, allylurethane, or to the group of allylic or vinylic ethers, whether or not substituted, or again to the group of ethylenically unsaturated amides or imides,
- R₄, R₅, R₁₀ and R₁₁ represent hydrogen or the methyl or ethyl radical,
- R₆, R₇, R₈ and R₉ represent linear or branched alkyl or aryl, or alkylaryl or arylalkyl groupings, having 1 to 20 carbon atoms, or their mixtures,
- R₁₂ represents a hydrocarbonated radical having 1 to 40 carbon atoms,
- A and B are groupings which may be present, which then represent a hydrocarbonated radical having 1 to 4 carbon atoms,
with formula (IIb)
R-A-Si(OB)₃
where:
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α,α' dimethyl-isopmpenyl-benzylurethane, allylurethane, or to the group of allylic or vinylic ethers, whether or not substituted, or again to the group of ethylenically unsaturated amides or imides,
- A is a grouping which may be present, which then represents a hydrocarbonated radical having 1 to 4 carbon atoms,
- B represents a hydrocarbonated radical having 1 to 4 carbon atoms,
or the mixture of several of these monomers,
(d) and possibly at least one crosslinking monomer chosen, in a non-restrictive manner, from the group constituted by ethylene glycol dimethacrylate, trimethylolpropanetriacrylate, allyl acrylate, the allyl maleates, methylene-bis-acrylamide, methylene-bis-methacrylamide, tetrallyloxyethane, the triallylcyanurates, the allyl ethers obtained from polyols such as pentaerythritol, sorbitol, sucrose or others, or chosen from among the molecules of formula (III): 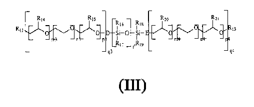 where:
- m₃, p₃, m₄ and p₄ represent a number of alkylene oxide units of less than or equal to 150,
- n₃ and n₄ represent a number of ethylene oxide units of less than or equal to 150,
- q₃ and q₄ represent a whole number at least equal to 1 and such that 0 ≤ (m₃+n₃+p₃)q₃ ≤ 150 and 0 ≤ (m₄+n₄+p₄)q₄ ≤ 150,
- r' represents a number such that 1 ≤ r' ≤ 200,
- R₁₃ represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- R₁₄, R₁₅, R₂₀ and R₂₁ represent hydrogen or the methyl or ethyl radical,
- R₁₆, R₁₇, R₁₈ and R₁₉ represent linear or branched alkyl or aryl, or alkylaryl or arylalkyl groupings, having 1 to 20 carbon atoms, or their mixtures,
- D and E are groupings which may be present, which then represent a hydrocarbonated radical having 1 to 4 carbon atoms,
or the mixture of several of these monomers.

23. Thermoplastic compositions according to one of the claims 15 to 22, **characterised in that** the said comb polymer consists, expressed by weight:
(a) between 2% and 95%, and more particularly between 5% and 90%, of at least one anionic monomer with ethylenic unsaturation and with a monocarboxylic function chosen from among the ethylenic unsaturation monomers and with a monocarboxylic function such as acrylic or methacrylic acid, or again the diacid hemiesters such as the C₁ to C₄ monoesters of maleic or itaconic acids, or their mixtures, or chosen from among the monomers with ethylenic unsaturation and with a dicarboxylic function such as crotonic, isocrotonic, cinnamic, itaconic, maleic acid, or again the anhydrides of carboxylic acids, such as maleic anhydride, or chosen from among the monomers with ethylenic unsaturation and with a sulphonic function such as acrylamido-methyl-propane-sulphonic acid, sodium methallylsulphonate, vinyl sulphonic acid and styrene sulphonic acid, or again chosen from among the monomers with ethylenic unsaturation and with a phosphoric function such as vinyl phosphoric acid, ethylene glycol methacrylate phosphate, propylene glycol methacrylate phosphate, ethylene glycol acrylate phosphate, propylene glycol acrylate phosphate and their ethoxylates, or again chosen from among the monomers with ethylenic unsaturation and with a phosphonic function such as vinyl phosphonic acid, or their mixtures, or their mixtures,
(b) between 2 and 95%, and yet more particularly between 5% and 90%, of a least one monomer with non-ionic ethylenic unsaturation of formula (I): 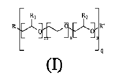 where:
- m and p represent a number of alkylene oxide units of less than or equal to 150,
- n represents a number of ethylene oxide units of less than or equal to 150,
- q represents a whole number at least equal to 1 and such that 5≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α,α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 40 carbon atoms, or an ionic or ionisable grouping such as a phosphate, a phosphonate, a sulphate, a sulphonate, a carboxylic, or indeed a primary, secondary or tertiary amine, or a quaternary ammonium, or indeed their mixtures, and preferentially represents a hydrocarbonated radical having 1 to 12 carbon atoms, and very preferentially a hydrocarbonated radical having 1 to 4 carbon atoms.
or a mixture of several monomers of formula (I),
(c) between 0% and 50% of at least one monomer of the acrylamide or methacrylamide type, or their derivates such as N-[3-(dimethylamino) propyl] acrylamide or N-[3-(dimethylamino) propyl] methacrylamide, and their mixtures, or again of at least one non-water soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivates, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride, dimethyl diallyl ammonium chloride or sulphate, [3-(methacrylamido) propyl] trimethyl ammonium chloride or sulphatc, or again one organofluorate monomer, or indeed one organosililate monomer, preferentially chosen from among the molecules of formulae (IIa) or (IIb): 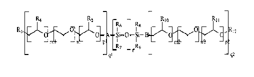 with formula (IIa)
where:
- m₁, p₁, m₂ and p₂ represent a number of alkylene oxide units of less than or equal to 150,
- n₁ and n₂ represent a number of ethylene oxide units of less than or equal to 150,
- q₁ and q₂ represent a whole number at least equal to 1 and such that 0 ≤ (m₁+n₁+p₁)q₁ ≤ 150 and 0 ≤ (m₂+n₂+p₂)q₂ ≤ 150,
- r represents a number such that 1 ≤ r ≤ 200,
- R₃ represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α, α' dimethyl-isopropenyl-benzylurethane, allylurethane, or to the group of allylic or vinylic ethers, whether or not substituted, or again to the group of ethylenically unsaturated amides or imides,
- R₄, R₅, R₁₀ and R₁₁ represent hydrogen or the methyl or ethyl radical,
- R₆, R₇, R₈ and R₉ represent linear or branched alkyl or aryl, or alkylaryl or arylalkyl groupings, having I to 20 carbon atoms, or their mixtures,
- R₁₂ represents a hydrocarbonated radical having 1 to 40 carbon atoms,
- A and B arc groupings which may be present, which then represent a hydrocarbonated radical having 1 to 4 carbon atoms,
with formula (IIb)
R-A- Si (OB)₃
where:
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α, α' dimethyl-isopropenyl-benzylurethane, allylurethane, or to the group of allylic or vinylic ethers, whether or not substituted, or again to the group of ethylenically unsaturated amides or imides,
- A is a grouping which may be present, which then represents a hydrocarbonated radical having I to 4 carbon atoms,
- B represents a hydrocarbonated radical having 1 to 4 carbon atoms,
or the mixture of several of these monomers,
(d) between 0% and 3% of at least one crosslinking monomer chosen, in a non-restrictive manner, from the group constituted by ethylene glycol dimethacrylate, trimethylolpropanetriacrylate, allyl acrylate, the allyl maleates, methylene-bis-acrylamide, methylene-bis-methacrylamide, tetrallyloxyethane, the triallylcyanurates, the allyl ethers obtained from polyols such as pentaerythritol, sorbitol, sucrose or others, or chosen from among the molecules of formula (III): 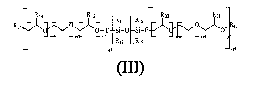 where:
- m₃, p₃, m₄ and p₄ represent a number of alkylene oxide units of less than or equal to 150,
- n₃ and n₄ represent a number of ethylene oxide units of less than or equal to 150,
- q₃ and q₄ represent a whole number at least equal to 1 and such that 0 ≤ (m₃+n₃+p₃)q₃ ≤ 150 and 0 ≤ (m₄+n₄+p₄)q₄ ≤ 150,
- r' represents a number such that 1 ≤ r' ≤ 200,
- R₁₃ represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as, for example, acrylurethane, methacrylurethane, α,α' dimethyl-isopmpenyl-benzylurethane, allylurethane, or to the group of allylic or vinylic ethers, whether or not substituted, or again to the group of ethylenically unsaturated amides or imides,
- R₁₄, R₁₃, R₂₀ and R₂₁ represent hydrogen or the methyl or ethyl radical,
- R₁₆, R₁₁, R₁₆ and R₁₉ represent linear or branched alkyl or aryl, or alkylaryl or arylalkyl groupings, having 1 to 20 carbon atoms, or their mixtures,
- D and E are groupings which may be present, which then represent a hydrocarbonated radical having 1 to 4 carbon atoms,
or the mixture of several of these monomers,
where the total proportions of the constituents a), b), c) and d) is equal to 100%.

24. Thermoplastic compositions according to one of claims 15 to 23, **characterised in that** the comb plumber is obtained by processes of radical copolymerisation in solution, in a direct or reverse emulsion, in suspension or in precipitation, or again by controlled radical polymerisation processes such as the method known as Reversible Addition Fragmentation Transfer (RAFT), the method known as Atom Transfer Radical Polymerization (ATRP), the method known as Nitroxide Mediated Polymerization (NMP) or again the method known as Cobaloxime Mediated Free Radical Polymerization.

25. Thermoplastic compositions according to one of claims 15 to 23, **characterised in that** the comb polymer obtained in the acid form, and possibly distilled, may also be partially or totally neutralised by one or more neutralisation agents having a monovalent neutralising function or a polyvalent neutralising function such as, for example, for the monovalent function of those chosen from the group constituted by the alkaline cations, in particular sodium, potassium, lithium, ammonium or the primary, secondary or tertiary aliphatic and/or cyclic amines, such as, for example, stearylamine, the ethanolamines (mono-, di-, triethanolamine), mono- and diethylamine, cyclohexylamine, methylcyclohexylamine, amino methyl propanol, morpholine, or again, for the polyvalent function, those chosen from the group constituted by the alkaline earth divalent cations, in particular magnesium and calcium, or again zinc, and also by the trivalent cations, in particular aluminium.

## Patentansprüche

1. Verfahren zur Herstellung eines thermoplastischen Materials, enthaltend:
(a) wenigstens ein thermoplastisches Harz,
(b) wenigstens ein mineralischer oder Carbonatfüllstoff,
(c) gegebenenfalls wenigstens ein weiteres Additiv, ausgewählt aus einem thermischen Stabilisator und/oder einem UV-Stabilisator und/oder einem Schmierstoff und/oder einem Rheologiemodifizierungsmittel und/oder einem organischen Schlagzähigkeitsmodifizierungsmittel,
und **dadurch gekennzeichnet, dass** wenigstens ein Kammpolymer, enthaltend wenigstens eine Polyalkylenoxidfunktion, die auf wenigstens ein ethylenisch ungesättigtes Monomer gepfropft ist, in die oben genannte Zusammensetzung eingebracht wird.

2. Verfahren nach Anspruch 1, **dadurch gekennzeichnet, dass** das Kammpolymer eingebracht wird:
1. in der Form eines Trockenpulvers, resultierend aus den Arbeitsgängen:
- Vermahlen und/oder Dispersion des mineralischen oder Carbonatfüllstoffes in einem nassen Medium in der Gegenwart des Polymers, und gegebenenfalls in der Gegenwart wenigstens eines weiteren Mahlmittels unter verwendung eines Nassverfahrens und/oder wenigstens eines weiteren Dispergierungsmittels,
- Trocknen der Dispersion und/oder der wässrigen Suspension des erhaltenen mineralischen oder Carbonatmaterials, mit gegebenenfalls Einbringung des Polymers, Behandlung gefolgt von einer möglichen Klassierung des erhaltenen Pulvers,
2. und/oder in der Form eines Trockenpulvers, resultierend aus den Arbeitsgängen:
- Trockenvermahlen des mineralischen oder Carbonatfüllstoffes in der Gegenwart des Polymers, und gegebenenfalls in der Gegenwart wenigstens eines weiteren Trockenmahlmittels,
- Behandlung gefolgt von einer möglichen Klassierung des erhaltenen Pulvers,
3. und/oder in der Form eines Trockenpulvers, resultierend aus den Arbeitsgängen:
- Einbringung des Polymers in eine Dispersion und/oder eine wässrige Suspension enthaltend den mineralischen oder Carbonatfüllstoff,
- Trocknen der Dispersion und/oder der wässrigen Suspension des erhaltenen mineralischen oder Carbonatmaterials, mit gegebenenfalls Einbringung des Polymers, gefolgt von Behandlung und einer möglichen Klassierung des erhaltenen Pulvers,
4. und/oder in der Form eines Trockenpulvers vermischt mit den anderen Bestandteilen a), b) und c),
5. und/oder in der Form eines Trockenpulvers, resultierend aus den Arbeitsgängen:
- Einbringen des Polymers in eine Suspension und/oder eine Emulsion wenigstens eines Additivs, ausgewählt aus einem thermischen Stabilisator und/oder einem UV-Stabilisator und/oder einem Schmierstoff und/odcr einem Rheologiemodifizierungsmittel und/oder einem organischen Schlagzähigkeitsmodifizierungsmittel,
- Trocknen der Suspension und/oder der Emulsion, die in der möglichen Gegenwart des Polymers erhalten wurde, gefolgt von einer möglichen Klassierung des erhaltenen Pulvers.

3. Verfahren nach Anspruch 1 oder 2, **dadurch gekennzeichnet, dass** das thermoplastische Harz ausgewählt ist aus den halogenierten Harzen, und bevorzugt PVC, postchloriertem Polyvinylchlorid (PVCC), Polyvinylidenfluorid (PVDF), oder ausgewählt ist aus Styrolharzen, und bevorzugt den Styrol-Butadien-Copolymeren mit einem hohen Styrolanteil (HIPS), Blockcopolymeren des Kraton^{™}-Typs, Harzen des Styrol-Acrylnitril-Typs, Acrylat-Butadien-Styrol-Harzen, Methylmethacrylat-Styrol-Copolymeren, oder ausgewählt ist aus den Acrylsäureharzen, und bevorzugt Methylpolymethacrylat, oder ausgewählt ist aus den Polyolefinen, und bevorzugt den Polyethylenen oder Polypropylenen, oder ausgewählt ist aus den Polycarbonatharzen, oder ausgewählt ist aus den ungesättigten Polyesterharzen, und bevorzugt Polyethylenterephthalaten und Polybutylenterephthalaten, oder ausgewählt ist aus den Polyurethanharzen oder ausgewählt ist aus den Polyamidharzen, oder einem Gemisch dieser Harze, und bevorzugt dadurch, dass das thermoplastische Harz ausgewählt ist aus den halogenierten Harzen, und bevorzugt PVC, postchloriertem Polyvinylchlorid (PVCC), Polyvinylidenfluorid (PVDF), oder den Acrylsäureharzen, und bevorzugt Methylpolymethacrylat, oder ausgewählt ist aus den Polycarbonatharzen, oder ausgewählt ist aus den ungesättigten Polyesterharzen, und bevorzugt Polyethylenterephthalaten und Polybutylenterephthalaten, und besonders bevorzugt dadurch, dass das thermoplastische Harz PVC ist.

4. Verfahren nach einem der Ansprüche 1 bis 3, **dadurch gekennzeichnet, dass** der mineralische oder Carbonatfüllstoff ausgewählt ist aus natürlichem oder synthetischem Calciumcarbonat, den Dolomiten, Kaolin, Talk, Gips, Titandioxid, Satinweiss oder Aluminiumhydroxid, Glimmer, Russ sowie den Mischungen dieser Füllstoffe miteinander, wie Talk-Calciumcarbonat-Mischungen, Calciumcarbonat-Kaolin-Mischungen, oder Mischungen aus Calciumcarbonat mit Aluminiumhydroxid, oder Mischungen mit synthetischen oder natürlichen Fasern oder mineralischen Co-Strukturen, wie die Co-Strukturen von Talk-Calciumcarbornat oder Talk-Titandioxid, bevorzugt, dass der mineralische oder Carbonatfüllstoff ein Mineralfüllstoff ist, ausgewählt aus natürlichem oder synthetischem Calciumcarbonat, Talk sowie den Mischungen dieser Füllstoffe, und besonders bevorzugt, dass der mineralische oder Carbonatfüllstoff ein Mineralfüllstoff ist, der ein natürliches oder synthetisches Calciumcarbonat oder deren Mischungen ist, und ganz besonders bevorzugt, dass der mineralische oder Carbonatfüllstoff ein Mineralfüllstoff ist, der natürliches Calciumcarbonat ist, der aus Marmor, Calcit, Kalk oder deren Mischungen ausgewählt ist.

5. Verfahren nach einem der Ansprüche 1 bis 4, **dadurch gekennzeichnet, dass** das organische Schlagzähigkeitsmodifizierungsmittel ausgewählt ist aus den Schlagzähigkeitsadditiven des Kern-Schale- Typs, oder den chlorierten Polyolefinen, oder den Styrol-Butadien-Kautschuken (SBR), Styrol-Butadien-Styrolen (SBS), den Polyvinylacetaten sowie deren Mischungen, und bevorzugt, dass das organische Schlagzähigkeitsmodifizierungsmittel ausgewählt ist aus den Schlagzähigkeitsadditiven des Kern-Schale-Typs, oder den chlorierten Polyolefinen sowie deren Mischungen, und besonders bevorzugt, dass das organische Schlagzähigkeitsmodifizierungsmittel ausgewählt ist aus den Schlagzähigkeitsadditiven des Kern-Schale-Typs des Acrylsäure-, Styrol-, Butadien-Typs, und in einer besonders bevorzugten Art, dass das Schlagzähigkeitsadditiv des Kern-Schale-Typs einen Butylacrylat basierten Elastomerkern aufweist, oder einen Polybutadien basierten Elastomerkem sowie eine Polymethacrylat basierte oder eine Polystyrol basierte Schale

6. Verfahren nach einem der Ansprüche 1 bis 5, **dadurch gekennzeichnet, dass** es verwendet:
(a) zwischen 0,1 und 99 %, bezogen auf das Trockengewicht, wenigstens eines thermoplastischen Harzes, im Verhältnis zu dem Gesamtgewicht der thermoplastischen Formulierung,
(b) zwischen 0,1 und 90 %, bezogen auf das Trockengewicht, wenigstens eines mineralischen oder Carbonatfüllstoffes, im Verhältnis zu dem Gesamtgewicht der thermoplastischen Formulierung,
(c) zwischen 0 und 20 %, und bevorzugt zwischen 5 und 20 %, bezogen auf das Trockengewicht, eines thermischen Stabilisators und/oder eines UV-Stabilisators und/oder eines Schmierstoffes und/oder eines Rheologiemodifizierungsmittels und/oder eines organischen Schlagzähigkeitsmodifizierungsmittels, im Verhältnis zu dem Gesamtgewicht der thermoplastischen Formulierung,
(d) zwischen 0,01 und 5 %, und bevorzugt zwischen 0,1 und 3 %, bezogen auf das Trockengewicht, eines Kammpolymers, bestehend aus wenigstens einem ethylenisch ungesättigten Monomer, auf das wenigstens eine Polyalkylenoxidfunktion aufgepfropft ist, im Verhältnis zu dem Trockengewicht des mineralischen oder Carbonatfüllstoffes.

7. Verfahren nach einem der Ansprüche 1 bis 6, **dadurch gekennzeichnet, dass** das Kammpolymer wenigstens ein Monomer der Formel (I) enthält: 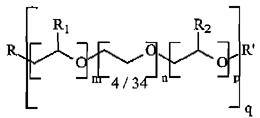 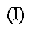 worin
- m und p für eine Anzahl von Alkylenoxideinheiten stehen, die kleiner oder gleich 150 ist
- n für eine Anzahl von Ethylenoxideinheiten steht, die kleiner oder gleich 150 ist
- q für eine ganze Zahl steht, die mindestens gleich 1 ist und derart, dass 5 ≤ (m+n+p)q ≤ 150,
- R₁ für Wasserstoff oder den Methyl- oder Ethylrest steht
- R₂ für Wasserstoff oder den Methyl- oder Ethylrest steht
- R für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester sowie der Gruppe der ungesättigten Urethane, wie z.B. Acrylurethan, Methacrylurethan, α,α'-Di-methyl-isopropenylbenzylurethan, Allylurethan, oder zur Gruppe der Allyloder Vinylester gehört, egal ob, substituiert oder nicht, oder zur Gruppe der ethylenisch ungesättigten Amide oder Imide,
- R' für Wasserstoff oder einen Kohlenwasserstoffrest mit 1 bis 40 Kohlenstoffatomen steht, oder eine ionische oder ionisierbare Gruppierung, wie einem Phosphat, einem Phosphonat, einem Sulfat, einem Sulfonat, einer Carbonsäure, oder einem primären, sekundären oder tertiären Amin, oder einem quaternären Ammonium, oder deren Mischungen.

8. Verfahren nach einem der Ansprüche 1 bis 7, **dadurch gekennzeichnet, dass** das Kammpolymer besteht:
(a) aus wenigstens einem anionischen Monomer mit einer Carbonsäure- oder Dicarbonsäure- oder Phosphorsäure- oder Phosphonsäure- oder Sulfonsäurefunktion, oder deren Mischungen,
(b) aus wenigstens einem nicht-ionischen Monomer, wobei das nicht-ionische Monomer aus wenigstens einem Monomer der Formel (I) besteht: 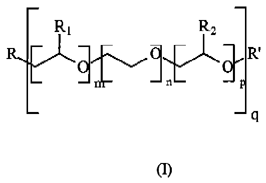 worin
- m und p für eine Anzahl von Alkylenoxideinheiten stehen, die kleiner oder gleich 150 ist
- n für eine Anzahl von Ethylenoxideinheiten steht, die kleiner oder gleich 150 ist
- q für eine ganze Zahl steht, die mindestens gleich 1 ist und derart, dass 5 ≤ (m+n+p)q ≤ 150, und bevorzugt derart, dass 15 ≤ (m+n+p)q ≤ 120,
- R₁ für Wasserstoff oder den Methyl- oder Ethylrest steht
- R₂ für Wasserstoff oder den Methyl- oder Ethylrest steht
- R für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester sowie der Gruppe der ungesättigten Urethane, wie z.B. Acrylurethan, Methacrylurethan, α,α'-Dimethylisopropenylbenzylurethan, Allylurethan, oder zur Gruppe der Allyl- oder Vinylester gehört, egal ob, substituiert oder nicht, oder zur Gruppe der ethylenisch ungesättigten Amide oder Imide,
- R' für Wasserstoff oder einen Kohlenwasserstoffrest mit 1 bis 40 Kohlenstoffatomen steht, oder eine ionische oder ionisierbare Gruppierung, wie einem Phosphat, einem Phosphonat, einem Sulfat, einem Sulfonat, einer Carbonsäure, oder einem primären, sekundären oder tertiären Amin, oder einem quaternären Ammonium, oder deren Mischungen, und bevorzugt für einen Kohlenwasserstoffrest mit 1 bis 12 Kohlenstoffatomen steht, und besonders bevorzugt für einen Kohlenwasserstoffrest mit 1 bis 4 Kohlenstoffatomen,
oder eine Mischung mehrerer Monomere der Formel (I),
(c) gegebenenfalls wenigstens einem Monomer des Acrylamid- oder Methacrylamid-Typs, oder ihren Derivaten, wie N-[3-(dimethylamino)propyl]acrylamid oder N-[3-(dimethylamino)propyl]methacrylamid, und deren Mischungen, oder aus wenigstens einem nicht-wasserlöslichen Monomer, wie den Alkylacrylaten oder Methacrylaten, den ungesättigten Estern, wie N-[2-(dimethylamino)ethyl]methacrylat oder N-[2-(dimethylamino)ethyl]acrylat, den Vinylen, wie Vinylacetat, Vinylpyrrolidon, Styrol, α-Methylstyrol und ihren Derivaten, oder wenigstens einem kationischen Monomer oder quaternärem Ammonium, wie [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat, Dimethyldiallylammoniumchlorid oder -sulfat, [3-(Methacrylamido)propyl]trimethylammoniumchlorid oder -sulfat, oder wenigstens einem Organofluorat- oder Organosililat-Manomer, oder einer Mischung mehrerer dieser Monomere,
(d) gegebenenfalls wenigstens einem Monomer mit wenigstens zwei ethylenischen Unsättigungen.

9. Verfahren nach einem der Ansprüche 1 bis 8, **dadurch gekennzeichnet, dass** das Kammpolymer besteht:
(a) aus wenigstens einem anionischen Monomer mit ethylenischer Unsättigung und einer Monocarboxylfunktion, ausgewählt aus den ethylenisch ungesättigten Monomeren mit einer Monocarboxylfunktion, wie Acryl- oder Methacrylsäure oder den Hemiestrnm von Diaziden, wie den C₁- bis C₄-Monoestern von Malein- oder Itaconsäure, oder deren Mischungen, oder ausgewählt aus den Monomeren mit ethylenischer Unsättigung und mit einer Dicarboxylfunktion, wie Croton-, Isocroton-, Zimt-, Itacon-, Maleinsäure, oder den Anhydriden von Carbonsäuren, wie Maleinsäureanhydrid, oder ausgewählt aus den Monomeren mit ethylenischer Unsättigung und mit einer Sulfonfunktion, wie Acrylamidomethylpropansulfonsäure, Natriummethallylsulfonat, Vinylsulfonsäure und Styrolsulfonsäure, oder ausgewählt aus den Monomeren mit ethylenischer Unsättigung und mit einer Phosphorsäurefunktion, wie Vinylphosphorsäure, Ethylenglycolmethacrylalphosphat, Propylenglycolmethacrylatphosphat, Ethyleneglycolacrylatphosphat, Propylenglycolacrylatphosphat und ihren Ethoxylaten, oder ausgewählt aus den Monomeren mit ethylenischer Unsättigung und mit einer Phosphonsäurefunktion, wie Vinylphosphonsäure, oder deren Mischungen,
(b) aus wenigstens einem Monomer mit einer nicht-ionischen, ethylenischen Unsättigung der Formel (I): 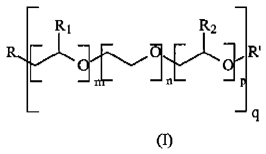 worin
- m und p für eine Anzahl von Alkylenoxideinheiten stehen, die kleiner oder gleich 150 ist
- n für eine Anzahl von Ethylenoxideinheiten steht, die kleiner oder gleich 150 ist
- q für eine ganze Zahl steht, die mindestens gleich 1 ist und derart, dass 5 ≤ (m-t-n-t-p)q ≤ 150, und bevorzugt derart, dass 15 ≤ (m+n+p)q ≤ 120,
- R₁ für Wasserstoff oder den Methyl- oder Ethylrest steht
- R₂ für Wasserstoff oder den Methyl- oder Ethylrest steht
- R für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester sowie der Gruppe der ungesättigten Urethane, wie z.B. Acrylurethan, Methacrylurethan, α,α'-Di-methyl-isopropenylbenzylurethan, Allylurethan, oder zur Gruppe der Allyloder Vinylester gehört, egal ob, substituiert oder nicht, oder zur Gruppe der ethylenisch ungesättigten Amide oder Imide,
- R' für Wasserstoff oder einen Kohlenwasserstoffrest mit 1 bis 40 Kohlenstoffatomen steht, oder eine ionische oder ionisierbare Gruppierung, wie einem Phosphat, einem Phosphonat, einem Sulfat, einem Sulfonat, einer Carbonsäure, oder einem primären, sekundären oder tertiären Amin, oder einem quaternären Ammonium, oder deren Mischungen, und bevorzugt für einen Kohlenwasserstoffrest mit 1 bis 12 Kohlenstoffatomen steht, und besonders bevorzugt für einen Kohlenwasserstoffrest mit 1 bis 4 Kohlenstoffatomen,
oder eine Mischung mehrerer Monomere der Formel (I),
(c) gegebenenfalls wenigstens einem Monomer des Acrylamid- oder Methacrylamid-Typs, oder ihren Derivaten, wie N-[3-(dimethylamino)propyl]acrylamid oder N-[3-(dimethylamino)propyl]methacrylamid, und deren Mischungen, oder aus wenigstens einem nicht-wasserlöslichen Monomer, wie den Alkylacrylaten oder Methacrylaten, den ungesättigten Estern, wie N-[2-(dimethylamino)ethyl]methacrylat oder N-[2-(dimethylamino)ethyl]acrylat, den Vinylen, wie Vinylacetat, Vinylpyrrolidon, Styrol, α-Methylstyrol und ihren Derivaten, oder wenigstens einem kationischen Monomer oder quaternärem Ammonium, wie [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat, Dimethyldiallylammoniumchlorid oder -sulfat, [3-(Methacrylamido)propyl]trimethylammoniumchlorid oder -sulfat, oder wenigstens einem Organofluorat-Monomer, oder wenigstens einem Organosililat-Monomer, bevorzugt ausgewählt aus den Molekülen der Formeln (IIa) oder (IIb):
mit Formel (IIa) 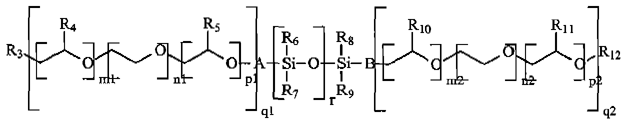 worin
- m₁, p₁, m₂ und p₂ für eine Anzahl von Alkylenoxideinheiten kleiner als oder gleich 150 stehen,
- n₁ und n₂ für eine Anzahl von Ethylenoxideinheiten kleiner als oder gleich 150 stehen,
- q₁ und q₂ für eine ganze Zahl, die mindestens gleich 1 ist und derart, dass 0 ≤ (m₁+n₁+p₁)q₁ ≤ 150 und 0 ≤ (m₂+n₂+p₂)q₂ ≤ 150 stehen,
- r für eine Zahl steht, derart, dass 1 ≤ r ≤ 200
- R₃ für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester sowie der Gruppe der ungesättigten Urethane, wie z.B. Acrylurethan, Methacrylurethan, α,α'-Di-methyl-isopropenylbenzylurethan, Allylurethan, oder zur Gruppe der Allyloder Vinylester gehört, egal ob, substituiert oder nicht, oder zur Gruppe der ethylenisch ungesättigten Amide oder Imide,
- R₄, R₅, R₁₀ und R₁₁ für Wasserstoff oder den Methyl- oder Ethylrest stehen
- R₆, R₇, R₈ und R₉ für gerade oder verzweigte Alkyl-, Aryl-, Alkylaryl- oder Arylalkylgruppen mit 1 bis 20 Kohlenstoffatomen, oder deren Mischungen stehen
- R₁₂ für einen Kohlenwasserstoffrest mit 1 bis 40 Kohlenstoffatomen steht
- A und B Gruppen sind, die vorhanden sein können, in dem Fall stehen sie für einen Kohlenwasserstoffrest mit 1 bis 4 Kohlenstoffatomen,
mit Formel (IIb)
R-A-Si(OB)₃
worin
- R für einen Rest steht, der eine polymerisierbare ungesättigte Funktion enthält, der bevorzugt zur Gruppe der Vinyle sowie zu der Gruppe der Acryl-, Methacryl-, Malcin-, Itacon-, Croton-, Vinylphthalester sowie der Gruppe der ungesättigten Urethane, wie z.B. Acrylurethan, Methacrylurethan, α,α'-Di-methyl-isopropenylbenzylurethan, Allylurethan, oder zur Gruppe der Allyloder Vinylester gehört, egal ob, substituiert oder nicht, oder zur Gruppe der ethylenisch ungesättigten Amide oder Imide,
- A eine Gruppe ist, die vorhanden sein kann, in dem Fall steht sie für einen Kohlenwasserstoffrest mit I bis 4 Kohlenstoffatomen,
- B für einen Kohlenwasserstoffrest mit 1 bis 40 Kohlenstoffatomen steht,
oder eine Mischung mehrerer dieser Monomere,
(d) und gegebenenfalls wenigstens einem Quervernetzungsmonomer, in einer nichtbeschränkenden Art und Weise ausgewählt aus der Gruppe gebildet aus Ethylenglycoldimethylacrylat, Trimethylolpropantriacrylat, Allylacrylat, den Allylmaleaten, Methylen-bis-acrylamid, Methylen-bis-methacrylamid, Tetrallyloxyethan, den Triallylcyanuraten, den Allylethern, die aus Polyolen, wie Pentaerythritol, Sorbitol, Saccharose oder weiteren erhalten wurden, oder ausgewählt aus den Molekülen der Formel (III): 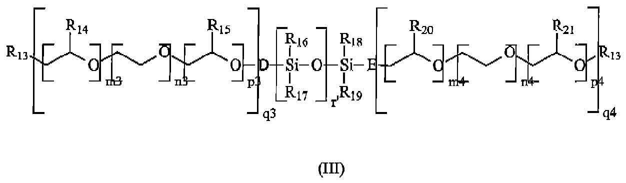 worin
- m₃, p₃, m₄ und p₄ für eine Anzahl von Alkylenoxideinheiten kleiner als oder gleich 150 stehen
- n₃ und n₄ für eine Anzahl von Ethylenoxideinheiten kleiner als oder gleich 150 stehen
- q₃ und q₄ für eine ganze Zahl, die mindestens gleich 1 ist und derart, dass 0 ≤ (m₃+n₃+p₃)q₃ ≤ 150 und 0 ≤ (m₄+n₄+p₄)q₄ ≤ 150 stehen,
- r' für eine Zahl steht, derart, dass 1 ≤ r' ≤ 200
- R₁₃ für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester sowie der Gruppe der ungesättigten Urethane, wie z.B. Acrylurethan, Methacrylurethan, α,α'-Di-methyl-isopropenylbenzylurethan, Allylurethan, oder zur Gruppe der Allyloder Vinylester gehört, egal ob, substituiert oder nicht, oder zur Gruppe der ethylenisch ungesättigten Amide oder Imide,
- R₁₄, R₁₅, R₂₀ und R₂, für Wasserstoff oder den Methyl- oder Ethylrest stehen
- R₁₆, R₁₇, R₁₈ und R₁₉ für gerade oder verzweigte Alkyl-, oder Aryl-, oder Alkylaryl- oder Arylalkylgruppen mit 1 bis 20 Kohlenstoffatomen, oder deren Mischungen stehen
- D und E Gruppen sind, die vorhanden sein können, in dem Fall stehen sie für einen Kohlenwasserstoffrest mit 1 bis 4 Kohlenstoffatomen,
oder eine Mischung mehrerer dieser Monomere.

10. Verfahren nach einem der Ansprüche 1 bis 9, **dadurch gekennzeichnet, dass** das Kammpolymer besteht, ausgedrückt in Gewicht:
(a) zwischen 2% und 95%, und spezieller zwischen 5% und 90%, aus wenigstens einem anionischen Monomer mit ethylenischer Unsättigung und einer Monocarboxylfunktion, ausgewählt aus den ethylenisch ungesättigten Monomeren mit einer Monocarboxylfunktion, wie Acryl- oder Methacrylsäure oder den Hemiestern von Diaziden, wie den C₁- bis C₄-Monoestern von Malein- oder Itaconsäure, oder deren Mischungen, oder ausgewählt aus den Monomeren mit ethylenischer Unsättigung und mit einer Dicarboxylfunktion, wie Croton-, Isocroton-, Zimt-, Itacon-, Maleinsäure, oder den Anhydriden von Carbonsäuren, wie Maleiuzsäureanhydrid, oder ausgewählt aus den Monomeren mit ethylenischer Unsättigung und mit einer Sulfonfunktion, wie Acrylamidomethylpropansultonsäure, Natriummethallylsulfonat, Vinylsulfonsäure und Styrolsulfonsäure, oder ausgewählt aus den Monomeren mit ethylenischer Unsättigung und mit einer Phosphorsäurefunktion, wie Vinylphosphorsäure, Ethylenglycolmethacrylatphosphat, Propylenglycolmethacrylatphosphat, Ethyleneglycolacrylatphosphat, Propylenglycolacrylatphosphat und ihren Ethoxylaten, oder ausgewählt aus den Monomeren mit ethylenischer Unsättigung und mit einer Phosphonsäurefunktion, wie Vinylphosphonsäure, oder deren Mischungen,
(b) zwischen 2 und 95%, und noch bevorzugter zwischen 5% und 90%, aus wenigstens einem Monomer mit einer nicht-ionischen, ethylenischen Unsättigung der Formel (I): 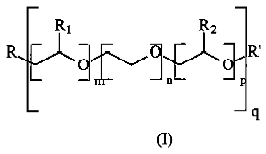 worin
- m und p für eine Anzahl von Alkylenoxideinheiten stehen, die kleiner oder gleich 150 ist,
- n für eine A,nzahl von Ethylenoxideinheiten steht, die kleiner oder gleich 150 ist,
- q für eine ganze Zahl steht, die mindestens gleich 1 ist und derart, dass 5 ≤ (m+n+p)q ≤ 150, und bevorzugt derart, dass 15 ≤ (m+n+p)q ≤ 120,
- R₁ für Wasserstoff oder den Methyl- oder Ethylrest steht
- R₂ für Wasserstoff oder den Methyl- oder Ethylrest steht
- R für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthatester sowie der Gruppe der ungesättigten Urethane, wie z.B. Acrylurethan, Methacrylurethan, α,α'-Dimethylisopropenylbenzylurethan und Allylurethan, oder zur Gruppe der Allyl- oder Vinylester gehört, egal ob, substituiert oder nicht, oder zur Gruppe der ethylenisch ungesättigten Amide oder Imide,
- R' für Wasserstoff oder einen Kohlenwasserstoffrest mit 1 bis 40 Kohlenstoffatornen steht, oder eine ionische oder ionisierbare Gruppierung, wie einem Phosphat, einem Phosphonat, einem Sulfat, einem Sulfonat, einer Carbonsäure, oder einem primären, sekundären oder tertiären Amin, oder einem quaternären Ammonium, oder deren Mischungen, und bevorzugt für einen Kohlenwasserstoffrest mit 1 bis 12 Kohlenstoffatomen steht, und besonders bevorzugt für einen Kohlenwasserstoffrest mit 1 bis 4 Kohlenstoffatomen,
oder eine Mischung mehrerer Monomere der Formel (I),
(c) zwischen 0 und 50% aus wenigstens einem Monomer des Acrylamid- oder Methacrylamid-Typs, oder ihren Derivaten, wie N-[3-(dimethylamino)prcpyl]acrylamid oder N-[3-(dimethylamino)propyl]methacrylamid, und deren Mischungen, oder aus wenigstens einem nicht-wasserlöslichen Monomer, wie den Alkylacrylaten oder Mcthacrylaten, den ungesättigten Estern, wie N-[2-(dimethylamino)ethyl]methacrylat oder N-[2-(dimethylamino)ethyl]acrylat, den Vinylen, wie Vinylacetat, Vinylpyrrolidon, Styrol, α-Methylstyrol und ihren Derivaten, oder wenigstens einem kationischen Monomer oder quaternärem Ammonium, wie [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat, Dimethyldiallylammoniumchlorid oder -sulfat, [3-(Methacrylamido)propyl]trimethylammoniumchlorid oder -sulfat, oder wenigstens einem Organofluorat-Monomer, oder wenigstens einem Organosililat-Monomer, bevorzugt ausgewählt aus den Molekülen der Formeln (IIa) oder (IIb):
mit Formel (IIa) 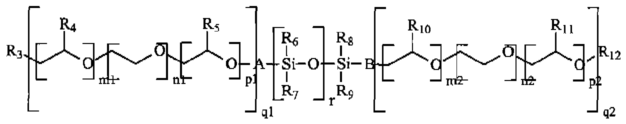 worin
- m₁, p₁, m₂ und p₂ für eine Anzahl von Alkylenoxideinheiten kleiner als oder gleich 150 stehen,
- n₁ und n₂ für eine Anzahl von Ethylenoxideinheiten kleiner als oder gleich 150 stehen,
- q₁ und q₂ für eine ganze Zahl, die mindestens gleich 1 ist und derart, dass ≤ (m₁+n₁+p₁)q₁ ≤ 150 und 0≤ (m₂+n₂+p₂)q₂ ≤150 stehen,
- r für eine Zahl steht, derart, dass 1 ≤ r ≤ 200
- R₃ für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester, sowie zur Gruppe der ungesättigten Urethane, wie Acrylurethan, Methaerylurethan, α,α'-Dimethylisopropenylbenzylurethan und Allylurethan, oder zur Gruppe der Allyl- oder Vinylester gehört, egal ob, substituiert oder nicht, oder zur Gruppe der ethylenischen, ungesättigten Amide oder Imide,
- R₄, R₅, R₁₀ und R₁₁ für Wasserstoff oder den Methyl- oder Ethylrest stehen
- R₆, R₇, R₈ und R₉ für gerade oder verzweigte Alkyl-, Aryl-, Alkylaryl- oder Arylalkylgruppen mit 1 bis 20 Kohlenstoffatomen, oder deren Mischungen stehen
- R₁₂ für einen Kohlenwasserstoffrest mit 1 bis 40 Kohlenstoffatomen steht
- A und B Gruppen sind, die vorhanden sein können, in dem Fall stehen sie für einen Kohlenwasserstoffrest mit 1 bis 4 Kohlenstoffatomen,
mit Formel (IIb)
R-A-Si (OB)₃
worin
- R für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester, sowie der Gruppe der ungesättigten Urethane, wie Acrylurethan, Methacrylurethan, α,α'-Dimethylisopropenylbenzylurethan und Allylurethan, oder zur Gruppe der Allyl- oder Vinylester gehört, egal ob, substituiert oder nicht, oder zur Gruppe der ethylenisch ungesättigten Amide oder Imide,
- A eine Gruppe ist, die vorhanden sein kann, in dem Fall steht sie für einen Kohlenwasserstoffrest mit 1 bis 4 Kohllenstoffatomen,
- B für einen Kohlenwasserstoffrest mit 1 bis 40 Kohlenstoffatomen steht,
oder eine Mischung mehrerer dieser Monomere,
(d) zwischen 0% und 3% aus wenigstens einem Quervernetzungsmonomer, in einer nichtbeschränkenden Art und Weise ausgewählt aus der Gruppe gebildet aus Ethylenglycoldimethylacrylat, Trimethylolpropantriacrylat, Allylacrylat, den Allylmaleaten, Methylen-bis-acrylamid, Methylen-bis-methacrylamid, Tetrallyloxyethan, den Triallylcyanuraten, den Allylethem, die aus Polyolen, wie Pentaerythritol, Sorbitol, Saccharose oder weiteren erhalten wurden, oder ausgewählt aus den Molekülen der Formel (III): 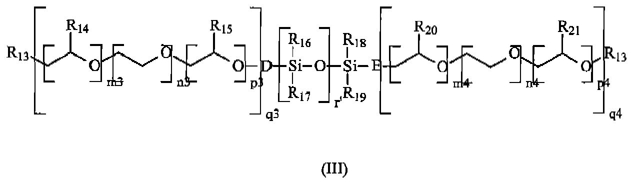 worin
- m₃, p₂, m₄ und p₄ für eine Anzahl von Alkylenoxideinheiten kleiner als oder gleich 150 stehen
- n₃ und n₄ für eine Anzahl von Ethylenoxideinheiten kleiner als oder gleich 150 stehen
- q₃ und q₄ für eine ganze Zahl, die mindestens gleich 1 ist und derart, dass 0 ≤ (m₃+n₃+p₃)q₃≤ 150 und 0 ≤ (m₄+n₄+p₄)q₄≤ 150 stehen,
- r'für eine Zahl steht, derart, dass 1 ≤ r' ≤ 200
- R₁₃ für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester sowie der Gruppe der ungesättigten Urethane, wie Acrylurethan, Methacrylarethan, α,α'-Dimethylisopropenylbenzylurethan und Allylurethan, oder zur Gruppe der Allyl- oder Vinylester gehört, egal ob, substituiert oder nicht, oder zur Gruppe der ethylenisch ungesättigten Amide oder Imide,
- R₁₄, R₁₅, R₂₀ und R₂₁ für Wasserstoff oder den Methyl- oder Ethylrest stehen
- R₁₆, R₁₇, R₁₈ und R₁₉ für gerade oder verzweigte Alkyl-, oder Aryl-, oder Alkylaryl- oder Arylalkylgruppen mit 1 bis 20 Kohlenstoffatomen, oder deren Gemische stehen
- D und E Gruppen sind, die vorhanden sein können, in dem Fall stehen sie für einen Kohlenwasserstoffrest mit 1 bis 4 Kohlenstoffatomen,
oder eine Mischung mehrerer dieser Monomere,
wobei die Summe der Bestandteile a), b), c) und d) 100 % ergibt.

11. Verfahren nach einem der Ansprüche 1 bis 10, **dadurch gekennzeichnet, dass** das Kammpolymer erhalten wird durch radikalische Copolyrnerisationsverfahren in Lösung, in direkter oder Umkehremulsion, in Suspension oder Ausfällung oder mittels kontrollierten Radikalpolymerisationsverfahren, wie dem Verfahren, das als reversibler Additionsfragmentationstransfer (RAFT) bekannt ist, dem Verfahren, das als Atomtransferradikalpolymerisation (ATRP) bekannt ist, dem Verfahren, das als Nitroxide vermittelte Polymerisation (NMP) bekannt ist, oder dem Verfahren, das als Cobaloxim vermittelte freie Radikalpolymerisation bekannt ist.

12. Verfahren nach einem der Ansprüche 1 bis 11, **dadurch gekennzeichnet, dass** das in der sauren Form erhaltene, und gegebenenfalls destillierte Kammpolymer auch vollständig oder teilweise neutralisiert sein kann durch ein oder mehrere Neutralisierungsmittel mit einer ein- oder mehrwertigen neutralisierenden Funktion, wie z. B. für die einwertige Funktion aus denen ausgewählt aus der Gruppe der alkalischen Kationen, wie insbesondere Natrium, Kalium, Lithium, Ammonium, oder den primären, sekundären oder tertiären aliphatischen und/oder cyclischen Aminen wie z.B. Stearylamin, den Ethanolaminen (Mono-, Di-, Triethanolamin), Mono- und Diethylamin, Cyclohexylamin, Methyleyclohexylamin, Aminomethylpropanol, Morpholin oder aber für die mehrwertige Funktion durch Verbindungen aus der Gruppe der divalenten Erdalkalikationen, insbesondere Magnesium und Calcium oder aber Zink, genauso wie dreiwertige Kationen, darunter insbesondere Aluminium.

13. Verfahren nach einem der Ansprüche 1 bis 12, **dadurch gekennzeichnet, dass** das Kammpolymer, das aus der Polymerisierungsreaktion erhalten wurde, gegebenenfalls vor oder nach der gesamten oder teilweisen Neuttalisierungsreaktion behandelt und in mehrere Phasen getrennt werden kann, gemäss einem statischen oder dynamischen Verfahren, durch ein oder mehrere polare Lösungsmittel, die insbesondere zu der aus Wasser, Methanol, Ethanol, Propanol, Isopropanol, den Butanolen, Aceton, Tetrahydrofuran oder deren Mischungen bestehenden Gruppe gehören.

14. Thermoplastische Zusammensetzungen, **dadurch gekennzeichnet, dass** sie durch das Verfahren nach einem der Ansprüche 1 bis 13 erhalten wurden.

15. Thermoplastische Zusammensetzungen, enthaltend:
(a) wenigstens ein thermoplastisches Harz,
(b) wenigstens einen mineralischen oder Carbonatfüllstoff,
(c) gegebenenfalls wenigstens einen thermischen Stabilisator und/oder einen UV-Stabilisator und/oder einen Schmierstoff und/oder ein Rheologiemodifizierungsmittel und/oder ein organisches Schlagzähigkeitsmodifizierungsmittel,
(d) wenigstens ein Kammpolymer, enthaltend wenigstens eine Polyalkylenoxidfunktion, die auf wenigstens ein ethylenisch ungesättigtes Monomer gepfropft ist.

16. Thermoplastische Zusammensetzungen nach Anspruch 15, **dadurch gekennzeichnet, dass** das thermoplastische Harz ausgewählt ist aus den halogenierten Harzen, und bevorzugt PVC, postchloricrtern Polyvinylchlorid (PVCC), Polyvinylidenfluorid (PVDF), oder ausgewählt ist aus Styrolharzen, und bevorzugt den Styrol-Butadien-Copolymeren mit einem hohen Styrolanteil (HIPS), Blockcopolymeren des Kraton™-Typs, Harzen des Styrol-Acrylnitril-Typs, Acrylat-Butadien-Styrol-Harzen, Methylmethacrylat-Styrol-Copolymeren, oder ausgewählt ist aus den Acrylsäureharzen, und bevorzugt Methylpolymethacrylat, oder ausgewählt ist aus den Polyolefinen, und bevorzugt den Polyethylenen oder Polypropylenen, oder ausgewählt ist aus den Polycarbonatharzen, oder ausgewählt ist aus den ungesättigten Polyesterharzen, und bevorzugt Polyethylenterephthalat und Polybutylenterephthalat, oder ausgewählt ist aus den Polyurethanharzen oder ausgewählt ist aus den Polyamidharzen, oder einem Gemisch dieser Harze, und bevorzugt dadurch, dass das thermoplastische Harz ausgewählt ist aus den halogenierten Harzen, und bevorzugt PVC, postchloriertem Polyvinylchlorid (PVCC), Polyvinylidenfluorid (PVDF), oder den Acrylsäureharzen, und bevorzugt Methylpolymetbacrylat, oder ausgewählt ist aus den Polycarbonatharzen, oder ausgewählt ist aus den ungesättigten Polyesterharzen, und bevorzugt Polyethylenterephthalat und Polybutylenterephthalat, und besonders bevorzugt dadurch, dass das thermoplastische Harz PVC ist.

17. Thermoplastische Zusammensetzungen nach Anspruch 16, **dadurch gekennzeichnet, dass** der mineralische oder Carbonatfüllstoff ausgewählt ist aus natürlichem oder synthetischem Calciumcarbonat, den Dolomiten, Kaolin, Talk, Gips, Titandioxid, Satinweiss oder Aluminiumhydroxid, Glimmer, Russ sowie den Mischungen dieser Füllstoffe miteinander, wie Talk-Calciumcarbonat-Mischungen, Calciumcarbonat-Kaolin-Mischungen, oder Mischungen aus Calciumcarbonat mit Aluminiumhydroxid, oder Mischungen mit synthetischen oder natürlichen Fasern oder mineralischen Co-Strukturen, wie die Co-Strukturen von Talk-Calcituncarbonat oder Talk-Titandioxid, bevorzugt dass der mineralische oder Carbonatfüllstoff ein Mineralfüllstoff ist, der ein natürliches oder synthetisches Calciumcarbonat oder deren Mischungen ist, und besonders bevorzugt dass der mineralische oder Carbonatfüllstoff ein Mineralfüllstoff ist, der ein natürliches Calciumcarbonat ist, ausgewählt aus Marmor, Calcit, Kalk oder deren Mischungen.

18. Thermoplastische Zusammensetzungen nach einem der Ansprüche 15 bis 17, **dadurch gekennzeichnet, dass** das organische Schlagzähigkeitsmodifizierungsmittel ausgewählt ist aus den Schlagzähigkeitsadditiven des Kern-Schale-Typs, oder den chlorierten Polyolefinen, oder den Styrol-Butadien-Kautschuken (SBR), Styrol-Butadien-Styrolen (SBS), den Polyvinylacetaten sowie deren Mischungen, und bevorzugt, dass das organische Schlagzähigkeitsmodifizierungsmittel ausgewählt ist aus den Schlagzähigkeitsadditiven des Kem-Schate-Typs, oder den chlorierten Polyolefinen sowie deren Mischungen, und besonders bevorzugt, dass das organische Schlagzähigkeitsmodifizierungsmittel ausgewählt ist aus den Schlagzähigkeitsadditiven des Kern-Schale-Typs des Acrylsäure-, Styrol-, Butadien-Typs, und in einer besonders bevorzugten Art, dass das Schlagzähigkeitsadditiv des Kern-Schale-Typs einen Butylacrylat basierten Elastomerkern aufweist, oder einen Polybutadien basierten Elastomerkern sowie eine Polymethacrylat basierte oder eine Polystyrol basierte Schale.

19. Thermoplastische Zusammensetzungen nach einem der Ansprüche 15 bis 18, **dadurch gekennzeichnet, dass** sie enthalten:
(a) zwischen 0,1 und 99%, bezogen auf das Trockengewicht, wenigstens eines thermoplastischen Harzes, im Vergleich zu dem Gesamtgewicht der thermoplastischen Formulierung,
(b) zwischen 0,1 und 90%, bezogen auf das Trockengewicht, wenigstens eines mineralischen oder Carbonatfüllstoffes, im Vergleich zu dem Gesamtgewicht der thermoplastischen Formulierung,
(c) zwischen 0 und 20%, und bevorzugt zwischen 5 und 20%, bezogen auf das Trockengewicht, eines thermischen Stabilisators und/oder eines UV-Stabilisators und/oder eines Schmierstoffes und/oder eines Rheologicmodifizicrungsmittels und/oder eines organischen Schlagzähigkeitsmodifizierungsmittels, im Vergleich zu dem Gesamtgewicht der thermoplastischen Formulierung,
(d) zwischen 0,01 und 5%, und bevorzugt zwischen 0,1 und 3%, bezogen auf das Trockengewicht, eines Kammpolymers, bestehend aus wenigstens einem ethylenisch ungesättigten Monomer, auf das wenigstens eine Polyalkylenoxidfunktion aufgepfropft ist, im Vergleich zu dem Trockengewicht des mineralischen oder Carbonatfüllstoffes.

20. Thermoplastische Zusammensetzungen nach einem der Ansprüche 15 bis 19, **dadurch gekennzeichnet, dass** das Kammpolymer wenigstens ein Monomer der Formel (I) enthält: 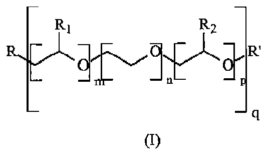 worin
- m und p für eine Anzahl von Alkylenoxideinheiten stehen, die kleiner oder gleich 150 ist
- für eine Anzahl von Ethylenoxideinheiten steht, die kleiner oder gleich 150 ist
- q für eine ganze Zahl steht, die mindestens gleich 1 ist und derart, dass 5 ≤ (m+n+p)q ≤ 150,
- R₁ für Wasserstoff oder den Methyl- oder Ethylrest steht
- R₂ für Wasserstoff oder den Methyl- oder Ethylrest steht
- R für einen Rest steht, der eine polymerisierbare ungesättigte Funktion enthält, der bevorzugt zur Gruppe der Vinyle sowie der Gruppe der Acryl-, Methacryl-, Malein-, Itacon-, Croton-, Vinylphthalester sowie der Gruppe der ungesättigten Urethane, wie z,B. Acrylurethan, Methacrylurethan, α,α'-Dimethylisopropenylbenzylurethan und Allylurethan, oder zur Gruppe der Allyl- oder Vinylester gehört, egal ob, substituiert oder nicht, oder zur Gruppe der ethylenisch ungesättigten Amide oder Imide,
- R' für Wasserstoff oder einen Kohlenwasserstoffrest mit 1 bis 40 Kohlenstoffatomen steht, oder eine ionische oder ionisierbare Gruppierung, wie einem Phosphat, einem Phosphonat, einem Sulfat, einem Sulfonat, einer Carbonsäure, oder einem primären, sekundären oder tertiären Amin, oder einem quaternären Ammonium, oder deren Mischungen.

21. Thermoplastische Zusammensetzungen nach einem der Anspräche 15 bis 20, **dadurch gekennzeichnet, dass** das Kammpolymer besteht:
(a) aus wenigstens einem anionischen Monomer mit einer Carbonsäure- oder Dicarbonsäure- oder Phosphorsäuze- oder Phosphonsäure- oder Sulfonsäurefunktion, oder deren Mischungen,
(b) aus wenigstens einem nicht-ionischen Monomer, bei dem das nicht-ionische Monomer aus wenigstens einem Monomer der Formel (I) besteht: 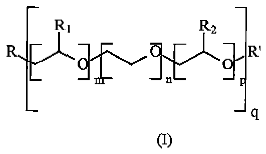 worin
- m und p für eine Anzahl von Alkylenoxideinheiten stehen, die kleiner oder gleich 150 ist
- n für eine Anzahl von Ethylenoxideinheiten steht, die kleiner oder gleich 150 ist
- q für eine ganze Zahl steht, die mindestens gleich 1 ist und derart, dass 5 ≤ (m+n+p)q ≤ 150, und bevorzugt derart, dass 15 ≤ (m+n+p)q ≤ 120,
- R₁ für Wasserstoff oder den Methyl- oder Ethylrest steht R₂ für Wasserstoff oder den Methyl- oder Ethylrest steht
- R für einen Rest steht, der eine polymerisierbare ungesättigte Funktion enthält, der bevorzugt zur Gruppe der Vinyle sowie der Gruppe der Acryl-, Methacryl-, Malein-, Itacon-, Croton-, Vinylphthalester sowie der Gruppe der ungesättigten Urethane, wie z.B. Acrylurethan, Methacrylurethan, α,α-Dimethylisopropenylbenzylurethan und Allylurethan, oder zur Gruppe der Allyl- oder Vinylester gehört, egal ob, substituiert oder nicht, oder zur Gruppe der ethylenisch ungesättigten Amide oder Imide,
- R' für Wasserstoff oder einen Kohlenwasserstoffrest mit 1 bis 40 Kohlenstoffatomen steht, oder eine ionische oder ionisierbare Gruppierung, wie einem Phosphat, einem Phosphonat, einem Sulfat, einem Sulfonat, einer Carbonsäure, oder einem primären, sekundären oder tertiären Amin, oder einem quaternären Ammonium, oder deren Mischungen, und bevorzugt für einen Kohlenwasserstoffrest mit 1 bis 12 Kohlenstoffatomen steht, und besonders bevorzugt für einen Kohlenwasserstoffrest mit 1 bis 4 Kohlenstoffatomen,
oder eine Mischung mehrerer Monomere der Formel (I),
(c) gegebenenfalls wenigstens einem Monomer des Acrylamid- oder Methacrylamid-Typs, oder ihren Derivaten, wie N-[3-(dimethylamino)propyl]acrylamid oder N-[3-(dimethylamino)propyl]methacrylamid, und deren Mischungen, oder aus wenigstens einem nicht-wasserlöslichen Monomer, wie den Alkylacrylaten oder Methacrylaten, den ungesättigten Estern, wie N-[2-(dimethylamino)ethyl]methacrylat oder N-[2-(dimethylamino)ethyl]acrylat, den Vinylen, wie Vinylacetat, Vinylpytrolidon, Styrol, α-Methylstyrol und ihren Derivaten, oder wenigstens einem kationischen Monomer oder quaternärern Ammonium, wie [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat, Dimethyldiallylammoniumchlorid oder -sulfat, [3-(Methacrylamido)propyl]trimethylammoniumchlorid oder -sulfat, oder wenigstens einem Organofluorat- oder Organosililat-Monomer, oder einer Mischung mehrerer dieser Monomere,
(d) gegebenenfalls wenigstens einem Monomere mit wenigstens zwei ethylenischen Unsättigungen.

22. Thermoplastische Zusammensetzungen nach einem der Ansprüche 15 bis 21, **dadurch gekennzeichnet, dass** das Kammpolymer besteht:
(a) aus wenigstens einem anionischen Monomer mit ethylenischer Unsättigung und einer Monocarboxylfunktion, ausgewählt aus den ethylenisch ungesättigten Monomeren mit einer Monocarboxylfunktion, wie Acryl- oder Methacrylsäure oder den Hemiestern von Diaziden, wie den C₁- bis C₄-Monoestern von Malein- oder Itaconsäure, oder deren Mischungen, oder ausgewählt aus den Monomeren mit ethylenischer Unsättigung und mit einer Dicarboxylfunktion, wie Croton-, Isocroton-, Zimt-, Itacon-, Maleinsäure, oder den Anhydriden von Carbonsäuren, wie Maleinsäureanhydrid, oder ausgewählt aus den Monomeren mit ethylenischer Unsättigung und mit einer Sulfonfunktion, wie Acrylamidomethylpropansulfonsäure, Natriummethallylsulfonat, Vinylsulfonsäure und Styrolsulfonsäure, oder ausgewählt aus den Monomeren mit ethylenischer Unsättigung und mit einer Phosphorsäurefunktion, wie Vinylphosphorsäure, Ethyleriglycolmethaerylatphosphat, Propylenglycolmethacrylatphosphat, Ethyleneglycolacrylatphosphat, Propylenglycolacrylatphosphat und ihren Ethoxylaten, oder ausgewählt aus den Monomeren mit ethylenischer Unsättigung und mit einer Phosphonsäurefunktion, wie Vinylphosphonsäure, oder deren Mischungen,
(b) aus wenigstens einem Monomer mit einer nicht-ionischen, ethylenischen Unsättigung der Formel (I): 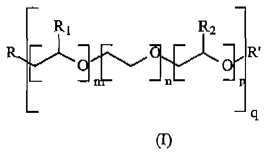 worin
- m und p für eine Anzahl von Alkylenoxideinheiten stehen, die kleiner oder gleich 150 ist
- n für eine Anzahl von Ethylenoxideinheiten steht, die kleiner oder gleich 150 ist
- q für eine ganze Zahl steht, die mindestens gleich 1 ist und derart, dass 5 ≤ (m+n+p)q ≤ 150, und bevorzugt derart, dass 15 ≤ (m+n+p)q ≤ 120,
- R₁ für Wasserstoff oder den Methyl- oder Ethylrest steht
- R₂ für Wasserstoff oder den Methyl- oder Ethylrest steht
- R für einen Rest steht, der eine polymerisierbare ungesättigte Funktion enthält, der bevorzugt zur Gruppe der Vinyle sowie zu der Gruppe der Acryl-, Metacryl-, Malein-, Itacon-, Croton-, Vinylphthalester sowie der Gruppe der ungesättigten Urethan, wie z.B, Acrylurethan, Methacrylurethan, α,α'-Di methyl isopropenylbenzylurethan, Allylurethan, oder zur Gruppe der Allyloder Vinylester gehört, egal ob, substituiert oder nicht, oder zur Gruppe der ethylenisch ungesättigten Amide oder Imide,
- R' für Wasserstoff oder einen Kohlenwasserstoffrest mit 1 bis 40 Kohlenstoffatomen steht, oder eine ionische oder ionisierbare Gruppierung, wie einem Phosphat, einem Phosphonat, einem Sulfat, einem Sulfonat, einer Carbonsäure, oder einem primären, sekundären oder tertiären Amin, oder einem quaternären Ammonium, oder deren Mischungen, und bevorzugt für einen Kohlenwasserstoffrest mit 1 bis 12 Kohlenstoffatomen steht, und besonders bevorzugt für einen Kohlenwasserstoffrest mit 1 bis 4 Kohlenstoffatomen,
oder eine Mischung mehrerer Monomere der Formel (I),
(c) gegebenenfalls wenigstens einem Monomer des Acrylamid- oder Methacrylamid-Typs, oder ihren Derivaten, wie N-[3-(dimethylamino)propyl]acrylamid oder N-[3-(dimethylamino)propyl]methacrylamid, und deren Mischungen, oder aus wenigstens einem nicht-wasserlöslichen Monomer, wie den Alkylacrylaten oder Methacrylaten, den ungesättigten Estern, wie N-[2-(dimethylamino)ethyl]methacrylat oder N-[2-(dimethylamino)ethyl]acrylat, den Vinylen, wie Vinylacetat, Vinylpyrrolidon, Styrol, α-Methylstyrol und ihren Derivaten, oder wenigstens einem kationischen Monomer oder quaternärem Ammonium, wie [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat, Dimethyldiallylammoniumchlorid oder -sulfat, [3-(Methacrylamido)propyl]trimethylammoniumchlorid oder -sulfat, oder wenigstens einem Organofluorat-Monomer, oder wenigstens einem Organosililat-Monomer, bevorzugt ausgewählt aus den Molekülen der Formeln (IIa) oder (IIb):
mit Formel (IIa) 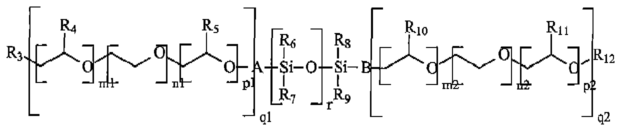 worin
- m₁, p₁, m₂ und p₂ für eine Anzahl von Alkylenoxideinheiten kleiner als oder gleich 150 stehen,
- n₁ und n₂ für eine Anzahl von Ethylenoxideinheiten kleiner als oder gleich 150 stehen,
- q₁ und q₂ für eine ganze Zahl, die mindestens gleich 1 ist und derart, dass 0 ≤ (m₁+n₁+p₁)q₁ ≤ 150 und 0 ≤ (m₂+n₂+p₂)q₂ ≤ 150 stehen,
- r für eine Zahl steht, derart, dass 1 ≤ r ≤ 200
- R₃ für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester sowie der Gruppe der ungesättigten Urethane, wie z.B. Acrylurethan, Methacrylurethan, α,α'-Di-methyhlsopropenylbenzylurethan, Allylurethan, oder zur Gruppe der Allyloder Vinylester gehört, egal ob, substituiert oder nicht, oder zur Gruppe der ethylenisch ungesättigten Amide oder Imide,
- R₄, R₅, R₁₀ und R₁₁ für Wasserstoff oder den Methyl- oder Ethylrest stehen
- R₆, R₇, R₈ und R₉ für gerade oder verzweigte Alkyl-, Aryl-, Alkylaryl- oder Arylalkylgruppen mit 1 bis 20 Kohlenstoffatomen, oder deren Mischungen stehen
- R₁₂ für einen Kohlenwasserstoffrest mit 1 bis 40 Kohlenstoffatomen steht
- A und B Gruppen sind, die vorhanden sein können, in dem Fall stehen sie für einen Kohlenwasserstoffrest mit 1 bis 4 Kohlenstoffatomen,
mit Formel (IIb)
R - A - Si (OB)₃
worin
- R für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester sowie der Gruppe der ungesättigten Urethane, wie z.B. Acrylurethan, Methacrylurethan, α,α'-Di-methyl-isopropenylbenrylurethan, Allylurethan, oder zur Gruppe der Allyloder Vinylester gehört, egal ob, substituiert oder nicht, oder zur Gruppe der ethylenisch ungesättigten Amide oder Imide,
- A eine Gruppe ist, die vorhanden sein kann, in dem Fall steht sie für einen Kohlenwasserstoffrest mit 1 bis 4 Kohlenstoffatomen,
- B für einen Kohlenwasserstoffrest mit 1 bis 40 Kohlenstoffatomen steht,
oder eine Mischung mehrerer dieser Monomere,
(d) und gegebenenfalls wenigstens einem Quervernetzungsmonomer, in einer nichtbeschränkenden Art und Weise ausgewählt aus der Gruppe gebildet aus Ethylenglycoldimethylacrylat, Trimethylolpropantriacrylat, Allylacrylat, den Allylmaleaten, Methylen-bis-acrylamid, Methylen-bis-methacrylamid, Tetrallyloxyethan, den Triallylcyanuraten, den Allylethern, die aus Polyolen, wie Pentaerythritol, Sorbitol, Saccharose oder weiteren erhalten wurden, oder ausgewählt aus den Molekülen der Formel (III): 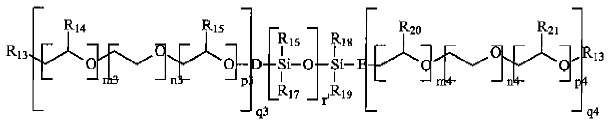 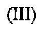 worin
- m₃, p₃, m₄ und p₄ für eine Anzahl von Alkylenoxideinheiten kleiner als oder gleich 150 stehen
- n₃ und n₄ für eine Anzahl von Ethylenoxideinheiten kleiner als oder gleich 150 stehen
- q₃ und q₄ für eine ganze Zahl, die mindestens gleich 1 ist und derart, dass 0 ≤ (m₃+nₛ+p₃)q₃ ≤ 150 und 0 ≤ (m₄+n₄+p₄)q₄ ≤ 150 stehen,
- r' für eine Zahl steht, derart, dass 1 ≤ r' ≤ 200 R₁₃ für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester sowie der Gruppe der ungesättigten Urethane, wie z.B. Acrylurethan, Methacrylurethan, α,α'-Di-methyl-isopropenylbenzylurethan, Allylurethan, oder zur Gruppe der Allyloder Vinylester gehört, egal ob, substituiert oder nicht, oder zur Gruppe der ethylenisch ungesättigten Amide oder Imide,
- R₁₄, R₁₅, R₂₀ und R₂₁ für Wasserstoffoder den Methyl- oder Ethylrest stehen
- R₁₆, R₁₇, R₁₈ und R₁₉ für gerade oder verzweigte Alkyl-, oder Aryl-, oder Alkylaryl- oder Arylalkylgruppen mit 1 bis 20 Kohlenstoffatomen, oder deren Mischungen stehen
- D und E Gruppen sind, die vorhanden sein können, in dem Fall stehen sie für einen Kohlenwasserstoffrest mit 1 bis 4 Kohlenstoffatomen,
oder eine Mischung mehrerer dieser Monomere.

23. Thermoplastische Zusammensetzungen nach einem der Ansprüche 15 bis 22, **dadurch gekennzeichnet, dass** das Kammpolymer besteht, ausgedrückt in Gewicht:
(a) zwischen 2% und 95%, und spezieller zwischen 5% und 90%, aus wenigstens einem anionischen Monomer mit ethylenischer Unsättigung und einer MonocarboxylFunktion, ausgewählt aus den ethylenisch ungesättigten Monomeren mit einer Monocarboxylfunktion, wie Acryl- oder Methacrylsäure oder den Hemiestern von Diaziden, wie den C₁- bis C₄-Monoestern von Malein- oder Itaconsäure, oder deren Mischungen, oder ausgewählt aus den Monomeren mit ethylenischer Unsättigung und mit einer Dicarboxylfunktion, wie Croton-, Isocroton-, Zimt-, Itacon-, Maleinsäure, oder den Anhydriden von Carbonsäuren, wie Maleinsäureanhydrid, oder ausgewählt aus den Monomeren mit ethylenischer Unsättigung und mit einer Sulfonfunktion, wie Acrylamidomethylpropansulfonsäure, Natriummethallylsulfonat, Vinylsulfonsäure und Styrolsulfonsäure, oder ausgewählt aus den Monomeren mit ethylenischer Unsättigung und mit einer Phosphorsäurefunktion, wie Vinylphosphorsäure, Ethylenglycolmethacrylatphosphat, Propylenglycolmethacrylatphosphat, Ethyleneglycolacrylatphosphat, Propylenglycolacrylatphosphat und ihren Ethoxylaten, oder ausgewählt aus den Monomeren mit ethylenischer Unsättigung und mit einer Phosphonsäurefunktion, wie Vinylphosphonsäure, oder deren Mischungen,
(b) zwischen 2 und 95%, und noch bevorzugter zwischen 5% und 90%, aus wenigstens einem Monomer mit einer nicht-ionischen, ethylenischen Unsättigung der Formel (I): 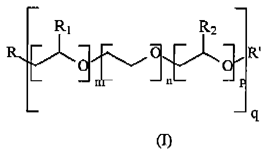 worin
- m und p für eine Anzahl von Alkylenoxideinheiten stehen, die kleiner oder gleich 150 ist,
- n für eine Anzahl von Ethylenoxideinheiten steht, die kleiner oder gleich 150 ist,
- q für eine ganze Zahl steht, die mindestens gleich 1 ist und derart, dass 5 ≤ (m+n+p)q ≤ 150, und bevorzugt derart, dass 15 ≤ (m+n+p)q ≤ 120,
- R₁ für Wasserstoff oder den Methyl- oder Ethylrest steht
- R₂ für Wasserstoff oder den Methyl- oder Ethylrest steht
- R für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester sowie der Gruppe der ungesättigten Urethane, wie z.B. Acrylurethan, Methacrylurethan, α,α'-Dimethylisopropenylbenzylurethan und Allylurethan, oder zur Gruppe der Allyl- oder Vinylester gehört, egal ob, substituiert oder nicht, oder zur Gruppe der ethylenisch ungesättigten Amide oder Imide,
- R' für Wasserstoff oder einen Kohlenwasserstoffrest mit 1 bis 40 Kohlenstoffatomen steht, oder eine ionische oder ionisierbare Gruppierung, wie einem Phosphat, einem Phosphonat, einem Sulfat, einem Sulfonat, einer Carbonsäure, oder einem primären, sekundären oder tertiären Amin, oder einem quaternären Ammonium, oder deren Mischungen, und bevorzugt für einen Kohlenwasserstoffrest mit 1 bis 12 Kohlenstoffatomen steht, und besonders bevorzugt für einen Kohlenwasserstoffrest mit 1 bis 4 Kohlenstoffatomen,
oder eine Mischung mehrerer Monomere der Formel (I),
(c) zwischen 0 und 50% aus wenigstens einem Monomer des Acrylamid- oder Methacrylamid-Typs, oder ihren Derivaten, wie N-[3-(dimethylamino)propyl]acrylamid oder N-[3-(dimethylamino)propyl]methacrylamid, und deren Mischungen, oder aus wenigstens einem nicht-wasserlöslichen Monomer, wie den Alkylacrylaten oder Methacrylaten, den ungesättigten Estern, wie N-[2-(dimethylamino)ethyl]methacrylat oder N-[2-(dimethylamino)ethyl]acrylat, den Vinylen, wie Vinylacetat, Vinylpyrrolidon, Styrol, α-Methylstyrol und ihren Derivaten, oder wenigstens einem kationischen Monomer oder quatemärem Ammonium, wie [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat, Dimethyldiallylammoniumchlorid oder -sulfat, [3-(Methacrylamido)propyl]trimethylammoniumchlorid oder -sulfat, oder wenigstens einem Organofluorat-Monomer, oder wenigstens einem Organosililat-Monomer, bevorzugt ausgewählt aus den Molekülen der Formeln (IIa) oder (IIb):
mit Formel (IIa) 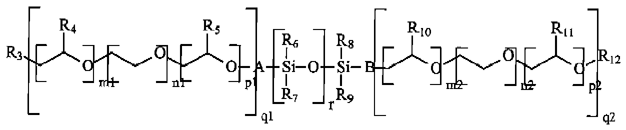 worin
- m₁, p₁, m₂ und p₂ für eine Anzahl von Alkylenoxideinheiten kleiner als oder gleich 150 stehen,
- n₁ und n₂ für eine Anzahl von Ethylenoxideinheiten kleiner als oder gleich 150 stehen,
- q₁ und q₂ für eine ganze Zahl, die mindestens gleich 1 ist und derart, dass 0 ≤ (m₁+n₁+p₁)q₁ ≤ 150 und 0 ≤ (m₂+n₂+p₂)q₂ ≤ 150 stehen,
- r für eine Zahl steht, derart, dass 1 ≤ r ≤ 200
- R₃ für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester, sowie zur Gruppe der ungesättigten Urethane, wie Acrylurethan, Methacrylurethan, α,α'-Dimethylisopropenylbenzylurethan und Allylurethan, oder zur Gruppe der Allyl- oder Vinylester gehört, egal ob, substituiert oder nicht, oder zur Gruppe der ethylenischen, ungesättigten Amide oder Imide,
- R₄, R₅, R₁₀ und R₁₁ für Wasserstoff oder den Methyl- oder Ethylrest stehen
- R₆, R₇, R₈ und R₉ für gerade oder verzweigte Alkyl-, Aryl-, Alkylaryl- oder Arylalkylgruppen mit 1 bis 20 Kohlenstoffatomen, oder deren Mischungen stehen
- R₁₂ für einen Kohlenwasserstoffrest mit 1 bis 40 Kohlenstoffatomen steht
- A und B Gruppen sind, die vorhanden sein können, in dem Fall stehen sie für einen Kohlenwasserstoffrest mit 1 bis 4 Kohlenstoffatomen,
mit Formel (IIb)
R-A-Si(OB)₃
worin
- R für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester, sowie der Gruppe der ungesättigten Urethane, wie Acrylurethan, Methacrylurethan, α,α'-Dimethylisopropenylbenzylurethan und Allylurethan, oder zur Gruppe der Allyl- oder Vinylester gehört, egal ob, substituiert oder nicht, oder zur Gruppe der ethylenisch ungesättigten Amide oder Imide,
- A eine Gruppe ist, die vorhanden sein kann, in dem Fall steht sie für einen Kohlenwasserstoffrest mit 1 bis 4 Kohlenstoffatomen,
- B für einen Kohlenwasserstoffrest mit 1 bis 40 Kohlenstoffatomen steht,
oder eine Mischung mehrerer dieser Monomere,
(d) zwischen 0% und 3% aus wenigstens einem Quervernetzungsmonomer, in einer nichtbeschränkenden Art und Weise ausgewählt aus der Gruppe gebildet aus Ethylenglycoldimethylacrylat, Trimethylolpropantriacrylat, Allylacrylat, den Allylmaleaten, Methylen-bis-acrylamid, Methylen-bis-methacrylamid, Tetrallyloxyethan, den Triallylcyanuraten, den Allylethcm, die aus Polyolen, wie Pentaetythritol, Sorbitol, Saccharose oder weiteren erhalten wurden, oder ausgewählt aus den Molekülen der Formel (III): 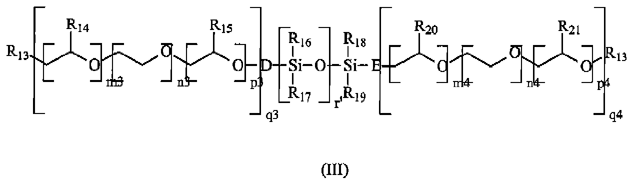 worin
- m₃, p₃, m₄ und p₄ für eine Anzahl von Alkylenoxideinheiten kleiner als oder gleich 150 stehen
- n₃ und n₄ für eine Anzahl von Ethylenoxideinheiten kleiner als oder gleich 150 stehen
- q₃ und q₄ für eine ganze Zahl, die mindestens gleich 1 ist und derart, dass 0 ≤ (m₃+n₃+p₃)q₃ ≤ 150 und 0 ≤ (m₄+n₄+p₄)q ≤ 150 stehen,
- r' für eine Zahl steht, derart, dass 1 ≤ r' ≤ 200
- R₁₃ für einen Rest steht, der eine polymerisierbare ungesättigte Funktion enthält, der bevorzugt zur Gruppe der Vinyle sowie zu der Gruppe der Acryl-, Methacryl-, Malein-, Itacon-, Croton-, Vinylphthalester sowie der Gruppe der ungesättigten Urethane, wie Acrylurethan, Methacrylurethan, α,α'-Dimethylisopropenylhenzylurethan und Allylurethan, oder zur Gruppe der Allyl- oder Vinylester gehört, egal ob, substituiert oder nicht, oder zur Gruppe der ethylenisch ungesättigten Amide oder Imide,
- R₁₄, R₁₅, R₂₀ und R₂₁, für Wasserstoff oder den Methyl- oder Ethylrest stehen
- R₁₆, R₁₇, R₁₈ und R₁₉ für gerade oder verzweigte Alkyl-, oder Aryl-, oder Alkylaryl- oder Arylalkylgruppen mit 1 bis 20 Kohlenstoffatomen, oder deren Gemische stehen D und E Gruppen sind, die vorhanden sein können, in dem Fall stehen sie für einen Kohlenwasserstoffrest mit 1 bis 4 Kohlenstoffatomen,
oder eine Mischung mehrerer dieser Monomere,
wobei die Summe der Bestandteile a), b), c) und d) 100 % ergibt.

24. Thermoplastische Zusammensetzungen nach einem der Ansprüche 15 bis 23, **dadurch gekennzeichnet, dass** das Kammpolymer erhalten wird durch radikalische Copolymerisationsverfahren in Lösung, in direkter oder Umkehremulsion, in Suspension oder Ausfällung oder mittels kontrollierten Radikalpolymerisationsverfahren, wie dem Verfahren, das als reversibler Additionsfragmentationstransfer (RAFT) bekannt ist, dem Verfahren, das als Atomtransferradikalpolymerisation (ATRP) bekannt ist, dem Verfahren, das als Nitroxid vermittelte Polymerisation (NMP) bekannt ist, oder dem Verfahren, das als Cobaloxim vermittelte freie Radikalpolymerisation bekannt ist.

25. Thermoplastische Zusammensetzungen nach einem der Ansprüche 15 bis 23, **dadurch gekennzeichnet, dass** das in der sauren Form erhaltene, und gegebenenfalls destillierte Kammpolymer auch vollständig oder teilweise neutralisiert sein kann durch ein oder mehrere Neutralisierungsmittel mit einer ein- oder mehrwertigen neutralisierenden Funktion, wie z. B. für die einwertige Funktion aus denen ausgewählt aus der Gruppe der alkalischen Kationen, wie insbesondere Natrium, Kalium, Lithium, Ammonium, oder den primären, sekundären oder tertiären aliphatischen und/oder cyclischen Aminen wie z.B. Stcarylamin, den Ethanolaminen (Mono-, Di-, Triethanolamin), Mono- und Diethylamin, Cyclohcxylamin, Methylcyclohexylamin, Aminomethylpropanol, Morpholin oder aber für die mehrwertige Funktion durch Verbindungen aus der Gruppe der divalenten Erdalkalikationen, insbesondere Magnesium und Calcium oder aber Zink, genauso wie dreiwertige Kationen, darunter insbesondere Aluminium.
